# EUROPÄISCHE PATENTSCHRIFT

(11) **EP 2 989 030 B1**
(45) Veröffentlichungstag und Bekanntmachung des Hinweises auf die Patenterteilung: **26.02.2020**
(21) Anmeldenummer: 14715640.0
(22) Anmeldetag: 08.04.2014
(51) Int. Cl.: B65G 35/06, B65G 13/00, B65G 13/075

(54) **FÖRDERVORRICHTUNG ZUM FÖRDERN VON WERKSTÜCKEN, WERKSTÜCKBEHANDLUNGSANLAGE UND VERFAHREN ZUM FÖRDERN VON WERKSTÜCKEN**
CONVEYING DEVICE FOR CONVEYING WORKPIECES, WORKPIECE TREATMENT PLANT AND METHOD FOR CONVEYING WORKPIECES
DISPOSITIF DE TRANSPORT DE PIÈCES PERMETTANT DE TRANSPORTER DES PIÈCES, INSTALLATION DE TRAITEMENT DE PIÈCES, ET PROCÉDÉ DE TRANSPORT DE PIÈCES

(30) Priorität: 26.04.2013 DE 102013207657; 28.10.2013 DE 202013104805 U
(43) Veröffentlichungstag der Anmeldung: 02.03.2016
(73) Patentinhaber: Dürr Systems AG, 74321 Bietigheim-Bissingen (DE)
(72) Erfinder: FEDERMANN, Andreas, 70563 Stuttgart (DE); RIEDEL, Klaus-Dieter, 71640 Ludwigsburg (DE); SPATHELF, Pascal, 75428 Illingen (DE); VOGEL, Andreas, 74226 Nordheim (DE); CASPARI, Samuel, 51709 Marienheide (DE)
(74) Vertreter: Hoeger, Stellrecht & Partner Patentanwälte mbB
(86) Internationale Anmeldenummer: PCT/EP2014/057073
(87) Internationale Veröffentlichungsnummer: WO 2014/173678

(56) Entgegenhaltungen:
- EP-A2- 0 409 190
- DE-A1-102011 100 825
- JP-A- H11 263 425
- US-A- 5 465 827

## Beschreibung

Die vorliegende Erfindung betrifft eine Fördervorrichtung nach dem Oberbegriff des Anspruchs 1 zum Fördern von Werkstücken längs einer Förderrichtung.
Zum Fördern von Werkstücken, beispielsweise zum Fördern von Fahrzeugkarosserien, sind beispielsweise Rollenförderbahnen bekannt.

Die EP 0 409 190 A2, die US 5,465,827 und die DE 10 2011 100 825 A1 offenbaren verschiedene Ausführungsformen von Fördervorrichtungen. Die JP H11 263425 A offenbart eine Fördervorrichtung nach dem Oberbegriff des Anspruchs 1.
Der vorliegenden Erfindung liegt die Aufgabe zugrunde, eine Fördervorrichtung zum Fördern von Werkstücken bereitzustellen, mittels welcher die Werkstücke in kurzer Zelt von einer Startposition zu einer Endposition bringbar sind. Diese Aufgabe wird erfindungsgemäß durch eine Fördervorrichtung gemäß Anspruch 1 gelöst.
Dadurch, dass die erfindungsgemäße Fördervorrichtung eine Beschleunigungsvorrichtung und eine Bremsvorrichtung umfasst, können Werkstückaufnahmevorrichtungen samt daran angeordneter Werkstücke zügig von der Startposition zur Endposition gefördert werden.
Die Werkstückaufnahmevorrichtung samt des einen oder der mehreren daran angeordneten Werkstücke ist mittels der Bremsvorrichtung an der Endposition zum Stillstand bringbar.
Es kann vorgesehen sein, dass die Beschleunigungsvorrichtung und die Bremsvorrichtung durch eine einheitliche Beschleunigungs- und Bremsvorrichtung der Fördervorrichtung gebildet sind.
Alternativ hierzu kann vorgesehen sein, dass die Beschleunigungsvorrichtung und die Bremsvorrichtung voneinander verschiedene Vorrichtungen, insbesondere voneinander beabstandet angeordnete Vorrichtungen, sind.

Die Beschleunigungsvorrichtung umfasst ein Beschleunigungselement, welches zur Beschleunigung der Werkstückaufnahmevorrichtung samt des einen oder der mehreren daran angeordneten Werkstücke an der Werkstückaufnahmevorrichtung und/oder an einem an der Werkstückaufnahmevorrichtung angeordneten Werkstück angreift.
Vorteilhaft kann es sein, wenn die Beschleunigungsvorrichtung mehrere Beschleunigungselemente umfasst, welche zur Beschleunigung der Werkstückaufnahmevorrichtung samt des einen oder der mehreren daran angeordneten Werkstücke an der Werkstückaufnahmevorrichtung und/oder an einem an der Werkstückaufnahmevorrichtung angeordneten Werkstück angreifen.

Das Beschleunigungselement der Beschleunigungsvorrichtung ist zur Beschleunigung der Werkstückaufnahmevorrichtung samt des einen oder der mehreren daran angeordneten Werkstücke aus einer Ausgangsstellung in eine Endstellung bringbar.

Das Beschleunigungselement der Beschleunigungsvorrichtung ist nach der Beschleunigung der Werkstückaufnahmevorrichtung samt des einen oder der mehreren daran angeordneten Werkstücke aus einer Endstellung in eine Ausgangsstellung bringbar.
Insbesondere kann vorgesehen sein, dass das Beschleunigungselement der Beschleunigungsvorrichtung mehrfach hintereinander in die Endstellung und dann in die Ausgangsstellung bringbar ist.
Es kann vorgesehen sein, dass ein Beschleunigungselement der Beschleunigungsvorrichtung zur Beschleunigung mehrerer Werkstückaufnahmevorrichtungen samt der daran angeordneten Werkstücke alternierend in eine Ausgangsstellung und in eine Endstellung bringbar ist.

Die Beschleunigungsvorrichtung umfasst eine Antriebsvorrichtung, mittels welcher ein Beschleunigungselement längs eines Bewegungsweges des Beschleunigungselements alternierend vorwärts und rückwärts bewegbar ist.

Ergänzend hierzu kann vorgesehen sein, dass die Beschleunigungsvorrichtung eine Antriebsvorrichtung umfasst, mittels welcher das Beschleunigungselement auf einer geschlossenen Bahn, insbesondere stets in derselben Umlaufrichtung, bewegbar ist.
Günstig kann es sein, wenn die Beschleunigungsvorrichtung eine Antriebsvorrichtung umfasst, welche eine Druckzylindervorrichtung, einen Riemen- oder Kettenantrieb, einen Linearachsenantrieb und/oder einen Reibradantrieb umfasst.
Mittels der Antriebsvorrichtung ist insbesondere ein Beschleunigungselement der Beschleunigungsvorrichtung oder unmittelbar die Werkstückaufnahmevor richtung samt des einen oder der mehreren daran angeordneten Werkstücke antreibbar.

Es kann vorgesehen sein, dass die Fördervorrichtung eine Übernahmevorrichtung umfasst, mittels welcher die Werkstückaufnahmevorrichtung samt des einen oder der mehreren daran angeordneten Werkstücke an der Startposition von einer weiteren Fördervorrichtung übernehmbar ist.

Alternativ oder ergänzend hierzu kann vorgesehen sein, dass die Fördervorrichtung eine Übergabevorrichtung umfasst, mittels welcher die Werkstückaufnahmevorrichtung samt des einen oder der mehreren daran angeordneten Werkstücke an der Endposition an eine weitere Fördervorrichtung übergebbar ist.

Bei einer Ausgestaltung der Erfindung kann vorgesehen sein, dass die Fördervorrichtung mindestens ein Transportelement umfasst, welches von der Startposition in die Endposition bewegbar ist.

Insbesondere kann vorgesehen sein, dass die Werkstückaufnahmevorrichtung samt des einen oder der mehreren daran angeordneten Werkstücke an der Startposition an dem Transportelement festlegbar, insbesondere mittels des Transportelements aufnehmbar, und an der Endposition von dem Transportelement entfernbar ist.

Das mindestens eine Transportelement ist vorzugsweise alternierend von der Startposition zur Endposition und von der Endposition zur Startposition bewegbar.

Dabei kann vorgesehen sein, dass das mindestens eine Transportelement längs eines Transportwegs von der Startposition zur Endposition und längs desselben Wegs zurück von der Endposition zur Startposition bewegbar ist. Alternativ hierzu kann vorgesehen sein, dass das mindestens eine Transportelement auf einem Hinweg von der Startposition zu der Endposition und auf einem von dem Hinweg verschiedenen Rückweg von der Endposition zur Startposition bewegbar ist.

Die Fördervorrichtung umfasst eine Führungsvorrichtung, mittels welcher die Werkstückaufnahmevorrichtung längs der Förderrichtung führbar ist und mittels welcher die Gewichtskraft der Werkstückaufnahmevorrichtung samt der Gewichtskraft des einen oder der mehreren daran angeordneten Werkstücke aufnehmbar ist.

Die Beschleunigungsvorrichtung und/oder die Bremsvorrichtung ist eine von der Führungsvorrichtung verschiedene Vorrichtung.

Die Führungsvorrichtung kann beispielsweise eine Rollenbahnvorrichtung sein, welche eine Vielzahl von Rollenelementen, insbesondere Rollenelementpaaren, umfasst, die längs der Förderrichtung aufeinanderfolgend angeordnet sind und auf welche die Werkstückaufnahmevorrichtung samt des einen oder der mehreren daran angeordneten Werkstücke auflegbar ist.

Mittels der Beschleunigungsvorrichtung und der Bremsvorrichtung werden bei der Verwendung einer separaten Führungsvorrichtung vorzugsweise lediglich in horizontaler Richtung wirkende Kräfte auf die Werkstückaufnahmevorrichtung und/oder von der Werkstückaufnahmevorrichtung übertragen.

Die Fördervorrichtung umfasst vorzugsweise mehrere Beschleunigungsvorrichtungen und mehrere Bremsvorrichtungen.

Dabei kann vorgesehen sein, dass die Beschleunigungsvorrichtungen und die Bremsvorrichtungen in einer bezüglich der Förderrichtung alternierenden Reihe aus Beschleunigungsvorrichtungen und Bremsvorrichtungen hintereinander angeordnet sind.

Die Beschleunigungsvorrichtungen und Bremsvorrichtungen sind dabei vorzugsweise derart angeordnet, dass die Werkstückaufnahmevorrichtung samt des einen oder der mehreren daran angeordneten Werkstücke beispielsweise an einer bezüglich der Förderrichtung vorne liegenden Vorderseite mittels einer Bremsvorrichtung abbremsbar ist. An einer der Vorderseite gegenüberliegenden, bezüglich der Förderrichtung hinteren Rückseite der Werkstückaufnahmevorrichtung kann dann vorzugsweise eine Beschleunigungsvorrichtung angreifen, um die Werkstückaufnahmevorrichtung samt des einen oder der mehreren daran angeordneten Werkstücke bei Bedarf erneut in der Förderrichtung beschleunigen zu können.

Es kann vorgesehen sein, dass die Werkstückaufnahmevorrichtung samt des einen oder der mehreren daran angeordneten Werkstücke mittels einer Beschleunigungsvorrichtung und/oder einer Bremsvorrichtung in einer vorgegebenen Position arretierbar ist.

Die Werkstückaufnahmevorrichtung samt des einen oder der mehreren daran angeordneten Werkstücke kann in einer vorgegebenen Position zwischen einer Beschleunigungsvorrichtung und einer Bremsvorrichtung eingeklemmt und somit exakt positioniert werden.

Die Fördervorrichtung umfasst eine Positioniervorrichtung zum Positionieren der Werkstückaufnahmevorrichtung samt des einen oder der mehreren daran angeordneten Werkstücke.

Die Positioniervorrichtung umfasst eine Schiebevorrichtung und eine Blockiervorrichtung.

Die Schiebevorrichtung umfasst beispielsweise eine Druckzylindervorrichtung, insbesondere eine hydraulische und/oder pneumatische Druckzylindervorrichtung.
Günstig kann es sein, wenn die Schiebevorrichtung ein Hebelelement umfasst, welches in einen Förderweg der Werkstückaufnahmevorrichtung hineinragen kann, um mit der Werkstückaufnahmevorrichtung in Eingriff gebracht zu werden.
Die Werkstückaufnahmevorrichtung samt des einen oder der mehreren daran angeordneten Werkstücke kann mittels der Schiebevorrichtung in einer der Förderrichtung entgegengesetzten Richtung bewegt werden.
Es kann vorgesehen sein, dass eine Kolbenstange der Druckzylindervorrichtung der Schiebevorrichtung aus einem Druckzylinder der Druckzylindervorrichtung herausschiebbar oder herausdrückbar ist, um das Hebelelement der Schiebevorrichtung mit der Werkstückaufnahmevorrichtung in Eingriff zu bringen, insbesondere um die Werkstückaufnahmevorrichtung entgegen der Förderrichtung zu bewegen.
Die Blockiervorrichtung umfasst ein Blockierelement.

Das Blockierelement ragt wahlweise in einen Förderweg der Werkstückaufnahmevorrichtung hinein.
Das Blockierelement ist federnd gelagert, so dass es in einer Bewegungsrichtung nachgiebig ist.

Die Blockiervorrichtung ist monodirektional blockierend ausgebildet.
Die Blockiervorrichtung ist derart monodirektional blockierend ausgebildet, dass die Werkstückaufnahmevorrichtung samt des einen oder der mehreren daran angeordneten Werkstücke in der Förderrichtung an der Blockiervorrichtung vorbeibewegbar Ist, eine Bewegung der Werkstückaufnahmevorrichtung samt des einen oder der mehreren daran angeordneten Werkstücke In einer der Förderrichtung entgegengesetzten Richtung jedoch blockierbar ist.

Das Blockierelement ist als eine Sperrklinke ausgebildet, welche federbelastet in den Förderweg der Werkstückaufnahmevorrichtung hineinklappbar ist.
Es kann vorgesehen sein, dass die Schiebevorrichtung und/oder die Blockiervorrichtung zumindest abschnittsweise innerhalb und/oder unter einer Abdeckungsvorrichtung zur Abdeckung von Auflageelementen der Werkstückaufnahmevorrichtung, insbesondere von Kufen einer als Skid ausgebildeten Werkstückaufnahmevorrichtung, angeordnet ist.
Eine Abdeckungsvorrichtung Ist Insbesondere eine Kufenabdeckung.
Die Schiebevorrichtung und/oder die Blocktervorrichtung kann beispielsweise eine Beschleunigungsvorrichtung und/oder eine Bremsvorrichtung sein.
Die erfindungsgemäße Fördervorrichtung eignet sich Insbesondere zur Verwendung in einer Werkstückbehandlungsanlage zum Behandeln und/oder Bearbeiten von Werkstücken, insbesondere von Fahrzeugkarosserien.

Die vorliegende Erfindung betrifft daher auch eine Werkstückbehandlungsanlage nach Anspruch 9, welche eine oder mehrere erfindungsgemäße Fördervorrichtungen nach einem der Ansprüche 1 bis 8 umfasst.

Eine derartige Werkstückbehandlungsanlage ist insbesondere eine Oberflächenbehandlungsanlage, eine Bearbeitungsanlage, eine Beschichtungsanlage, eine Lackieranlage, eine Trocknungsanlage und/oder eine Reinigungsanlage. Werkstücke sind insbesondere Fahrzeuge, Fahrzeugteile, Fahrzeugkarosserien und/oder Fahrzeuganbauteile.
Es kann vorgesehen sein, dass die Startposition und/oder die Endposition mindestens einer Fördervorrichtung in einem Behandlungsbereich der Werkstückbehandlungsanlage angeordnet ist.
Insbesondere kann vorgesehen sein, dass Werkstückaufnahmevorrichtungen samt der daran angeordneten Werkstücke mittels einer oder mehrerer Fördervorrichtungen gezielt in zwei oder mehr Behandlungsbereichen anordenbar, insbesondere positionierbar, sind.
Es kann vorgesehen sein, dass eine Fördervorrichtung ausschließlich dem Transport einer Werkstückaufnahmevorrichtung samt des einen oder der mehreren daran angeordneten Werkstücke von einer ersten Position, nämlich der Startposition, zu einer zweiten Position, nämlich der Endposition, dient.
Es kann jedoch auch vorgesehen sein, dass die Fördervorrichtung dem Transport der Werkstückaufnahmevorrichtung samt des einen oder der mehreren daran angeordneten Werkstücke von der Startposition zu mindestens einer Zwischenposition und schließlich zur Endposition dient.

Die Werkstückbehandlungsanlage umfasst vorzugsweise eine bezüglich der Förderrichtung vor der mindestens einen Fördervorrichtung angeordnete Vorfördervorrichtung und/oder eine bezüglich der Förderrichtung nach der mindestens einen Fördervorrichtung angeordnete Nachfördervorrichtung.

Vorzugsweise ist mittels der Vorfördervorrichtung die Werkstückaufnahmevorrichtung samt des einen oder der mehreren daran angeordneten Werkstücke an der Startposition der mindestens einen Fördervorrichtung bereitstellbar.

Ferner ist mittels der Nachfördervorrichtung die Werkstückaufnahmevorrichtung samt des einen oder der mehreren daran angeordneten Werkstücke vorzugsweise an der Endposition von der mindestens einen Fördervorrichtung abführbar.

Eine durchschnittliche Fördergeschwindigkeit der mindestens einen Fördervorrichtung ist vorzugsweise höher als eine durchschnittliche Fördergeschwindigkeit der Vorfördervorrichtung und/oder der Nachfördervorrichtung.

Insbesondere kann vorgesehen sein, dass die durchschnittliche Fördergeschwindigkeit der mindestens einen Fördervorrichtung mindestens ungefähr doppelt so groß ist wie die durchschnittliche Fördergeschwindigkeit der Vorfördervorrichtung und/oder der Nachfördervorrichtung.

Die Fördergeschwindigkeit ist insbesondere der Quotient aus Förderstrecke durch Förderzeit. Vorzugsweise ist die Fördergeschwindigkeit der Fördervorrichtung der Quotient aus dem Abstand zwischen der Startposition und der Endposition oder einer Zwischenposition durch die für den Transport der Werkstückaufnahmevorrichtung von der Startposition zur Endposition bzw. zur Zwischenposition benötigte Förderzeit.

Zur Ermittlung der Fördergeschwindigkeit werden vorzugsweise nur Bewegungsphasen der Werkstückaufnahmevorrichtung samt des einen oder der mehreren daran angeordneten Werkstücke berücksichtigt.
Es kann vorgesehen sein, dass die Werkstückbehandlungsanlage mehrere Fördervorrichtungen umfasst, welche sich bezüglich der Förderrichtung zumindest abschnittsweise überlappen. Auf diese Welse kann vorzugsweise eine einfache Übergabe und Übernahme der Werkstückaufnahmevorrichtungen samt der daran angeordneten Werkstücke von der einen Fördervorrichtung auf die nächste Fördervorrichtung erfolgen.
Die vorliegende Erfindung betrifft ferner ein Verfahren zum Fördern von Werkstücken längs einer Förderrichtung mittels einer Fördervorrichtung nach einem der Ansprüche 1 bis 8.
Der Erfindung liegt diesbezüglich die Aufgabe zugrunde, ein Verfahren bereitzustellen, mittels welchem Werkstücke zügig von einer Position zu einer weiteren Position förderbar sind.
Diese Aufgabe wird erfindungsgemäß durch ein Verfahren gemäß Anspruch 14 gelöst.

Bei einer Ausgestaltung der Erfindung kann vorgesehen sein, dass das Verfahren das Übernehmen der Werkstückaufnahmevorrichtung samt des einen oder der mehreren daran angeordneten Werkstücke von einer weiteren Fördervorrichtung an der Startposition und/oder das Übergeben der Werkstückaufnahmevorrichtung samt des einen oder der mehreren daran angeordneten Werkstücke an eine weitere Fördervorrichtung an der Endposition umfasst. Die Werkstückaufnahmevorrichtung samt des einen oder der mehreren daran angeordneten Werkstücke wird mittels einer Positioniervorrichtung, welche eine Schiebevorrichtung und eine Blockiervorrichtung umfasst, positioniert. Die Werkstückaufnahmevorrichtung samt des einen oder der mehreren daran angeordneten Werkstücke wird in der Förderrichtung an der Blockiervorrichtung vorbeibewegt.
Ferner wird die Werkstückaufnahmevorrichtung samt des einen oder der mehreren daran angeordneten Werkstücke mittels der Schiebevorrichtung in einer der Förderrichtung entgegengesetzten Richtung bewegt.
Die Werkstückaufnahmevorrichtung samt des einen oder der mehreren daran angeordneten Werkstücke wird schließlich zwischen die Blockiervorrichtung und die Schiebevorrichtung eingeklemmt.

Die erfindungsgemäße Fördervorrichtung, die erfindungsgemäße Werkstückbehandlungsanlage und/oder das erfindungsgemäße Verfahren zum Fördern von Werkstücken weisen vorzugsweise ferner einzelne oder mehrere der nachfolgend beschriebenen Merkmale und/oder Vorteile auf:
Insbesondere bei der automatischen Innenlackierung von Fahrzeugkarosserien (Automobilkarossen) mittels Applikationsrobotern kann ein "Stop&Go"-Betrieb der Fördertechnik (Fördervorrichtung) erforderlich sein. Die Werkstückaufnahmevorrichtung, beispielsweise ein Skid, muss hierzu zwischen den Behandlungsbereichen (Lackierstationen) aus dem Stillstand heraus beschleunigt und erneut bis zum Stillstand abgebremst werden. Beispielsweise mittels einer Absteckeinheit wird in einem Behandlungsbereich (Lackierstation) vorzugsweise eine exakte Positionierung der Werkstückaufnahmevorrichtung durchgeführt.

Bisherige Fördervorrichtungen, beispielsweise Rollenbahnfördervorrichtungen mit angetriebenen Rollen, benötigen relativ viel Zeit, um die Werkstückaufnahmevorrichtung samt des einen oder der mehreren daran angeordneten Werkstücke von einem Behandlungsbereich zu dem nächsten Behandlungsbereich zu fördern. Dies kann eine hohe Stillstandszeit der Lackierroboter und somit eine geringe Ausnutzungsrate der Lackierroboter zur Folge haben.

Um möglichst kurze Transportzeiten (Förderzeiten) zu ermöglichen, werden vorzugsweise einzelne oder mehrere der nachfolgenden Elemente vorgesehen:
- eine Pushervorrichtung;
- eine Stoppervorrichtung;
- eine Linearachsenvorrichtung;
- eine Shuttlevorrichtung;
- eine Reibradantriebsvorrichtung;
- ein sogenanntes Twin Trolley System.

Mittels der erfindungsgemäßen Werkstückbehandlungsanlage können vorzugsweise in kürzerer Zeit mehr Werkstücke behandelt werden als bei herkömmlichen Werkstückbehandlungsanlagen.

Eine Pushervorrichtung ist beispielsweise eine Vorrichtung, bei welcher ein elektrisch, pneumatisch und/oder hydraulisch angetriebenes Beschleunigungselement vorgesehen ist, welches an der Werkstückaufnahmevorrichtung angreifen kann, um dieselbe zu beschleunigen.

Beispielsweise kann ein durch einen Getriebemotor angetriebener Riemen vorgesehen sein, an welchem ein, insbesondere seitlich durch Führungsschienen geführtes, als Mitnehmerstange ausgebildetes Beschleunigungselement vorgesehen ist.

Mittels einer oder mehrerer Führungsschienen können vorzugsweise zusätzliche (Gewichts-)Kräfte des Beschleunigungselements aufgenommen werden.

Insbesondere kann vorgesehen sein, dass mehrere Riemen mittels des Getriebemotors antreibbar sind. Mittels der Mitnehmerstange sind die beiden Riemen vorzugsweise miteinander verbunden.

Durch Beschleunigung der Riemen kann vorzugsweise mittels des Beschleunigungselements eine an dem Beschleunigungselement anliegende Werkstückaufnahmevorrichtung beschleunigt werden.

Das Beschleunigungselement (beispielsweise die Mitnehmerstange) wird dabei aus einer Ausgangsstellung in eine Endstellung gebracht.

Nach dem Beschleunigungsvorgang kann die Mitnehmerstange zur Anfangsstellung zurückgefahren werden.

Eine alternative Ausführungsform einer Pushervorrichtung kann beispielsweise eine oder mehrere Druckzylindervorrichtungen, insbesondere Pneumatikzylinder, umfassen. Auch hierbei ist vorzugsweise mindestens ein Beschleunigungselement vorgesehen, welches antreibbar ist, um die Werkstückaufnahmevorrichtung samt des einen oder der mehreren daran angeordneten Werkstücke beschleunigen zu können.

Eine Bremsvorrichtung kann beispielsweise als eine Stoppervorrichtung ausgebildet sein. Mittels der Stoppervorrichtung können insbesondere Verzögerungsstrecken realisiert werden.

Vorzugsweise ist mittels einer Stoppervorrichtung eine formschlüssige Kraftübertragung möglich. Hierdurch können insbesondere große Verzögerungskräfte realisiert werden.

Eine Stoppervorrichtung umfasst vorzugsweise ein als Stoßdämpfer ausgebildetes Stopperelement, welches die Bewegungsenergie der Werkstückaufnahmevorrichtung samt des einen oder der mehreren daran angeordneten Werkstücke aufnehmen und/oder umwandeln kann.

Es kann vorgesehen sein, dass die Stoppervorrichtung beispielsweise eine oder mehrere Stößelrollen umfasst, die an einem Hebelmechanismus angeordnet ist/sind.

Mittels eines Hebelmechanismus wird vorzugsweise die Energie auf einen Stoßdämpfer übertragen, welcher diese dann aufnimmt und/oder umwandelt. Die Stößelrolle kann vorzugsweise nach erfolgter Verzögerung der Werkstückaufnahmevorrichtung samt des einen oder der mehreren daran angeordneten Werkstücke überfahren werden.

Als Linearachsenvorrichtung kann beispielsweise ein mitfahrender und/oder ein stillstehender Antrieb vorgesehen sein.

Es kann vorgesehen sein, dass von einer Linearachse der Linearachsenvorrichtung die Tragfunktion, die Führungsfunktion und/oder die Antriebsfunktion realisiert wird.

Durch Verwendung einer Linearachsenvorrichtung kann vorzugsweise über eine vorgegebene Förderstrecke hinweg eine Rollenbahnvorrichtung entbehrlich sein. Es kann jedoch auch vorgesehen sein, dass die Linearachsenvorrichtung ergänzend zu einer Rollenbahnvorrichtung Verwendung findet.

Die Kraftübertragung erfolgt bei der Linearachsenvorrichtung vorzugsweise formschlüssig.

Eine Fördervorrichtung mit Transportelementen, insbesondere eine Shuttlevorrichtung, umfasst beispielsweise zwei oder mehr Plattformen (Transportelemente), die zur Aufnahme einer Aufnahmevorrichtung, insbesondere eines Skids, dienen und zwischen zwei oder mehr Behandlungsbereichen hin und her fahrbar sind.

In den Behandlungsbereichen sind die Plattformen vorzugsweise von den Werkstückaufnahmevorrichtungen entfernbar und somit während der Durchführung von Behandlungsvorgängen vorzugsweise in die Startposition zurückfahrbar.

Bei einer Shuttlevorrichtung sind vorzugsweise große Beschleunigungen und große Verzögerungen technisch realisierbar. Vorzugsweise kann eine Shuttlevorrichtung auch für Teilstücke eines Bewegungsablaufes vorgesehen sein.

Eine Reibradantriebsvorrichtung ergänzt vorzugsweise eine Rollenbahnvorrichtung. Die Teilfunktionen "Führen" und "Tragen" können vorzugsweise von der Rollenbahnvorrichtung übernommen werden. Die Antriebsfunktion wird vorzugsweise von der Reibradantriebsvorrichtung bewerkstelligt.

Es kann vorgesehen sein, dass die Reibradantriebsvorrichtung ein Reibrad umfasst, welches beispielsweise als eine Andrückrolle ausgebildet ist.

Das Reibrad kann beispielsweise an eine Skidkufe einer als Skid ausgebildeten Werkstückaufnahmevorrichtung angepresst werden, wodurch eine reibschlüssige Kraftübertragung möglich ist.

Alternativ oder ergänzend hierzu kann vorgesehen sein, dass das Reibrad an einem, beispielsweise mittig angebrachten, Schwert der Werkstückaufnahmevorrichtung angreift.

Die Fördervorrichtung kann beispielsweise ein Twin Trolley System umfassen.

Bei einem solchen System sind vorzugsweise zwei sogenannte Trolleys vorgesehen, welche an einer Lastschiene geführt und mittels der Lastschiene miteinander verbunden sind.

Die Trolleys umfassen vorzugsweise einen gezahnten Mitnehmer und Führungsrollen, die in zwei Führungsschienen geführt sind.

Fahrwegseitig ist vorzugsweise ein beidseitig gezahnter Riemen vorgesehen. Dieser Riemen wird vorzugsweise von einem Getriebemotor angetrieben.

Vorzugsweise sind die Trolleys mit dem Riemen in Eingriff bringbar, insbesondere kann eine formschlüssige Kraftübertragung mittels der gezahnten Mitnehmer und dem gezahnten Riemen erfolgen.

Günstig kann es sein, wenn die Fördervorrichtung eine Positioniervorrichtung umfasst.

Eine präzise Positionierung einer Werkstückaufnahmevorrichtung ist insbesondere für einen Lackiervorgang wichtig, da die Lackierroboter feste Referenzpunkte haben. Die festen Referenzpunkte werden anhand einer Referenzkarosse für jeden Karossentyp festgelegt. Eine korrekte Positionierung ist insbesondere deshalb wichtig, weil jede Abweichung in der Positionierung im Betrieb der Anlage, das heißt während des Lackiervorgangs, zu Abweichungen beim Lackierergebnis und beim Lackverbrauch führen kann.

Die Positioniervorrichtung ist vorzugsweise teilweise oder vollständig in eine Abdeckungsvorrichtung, insbesondere in eine Skidkufenabdeckung, integriert. Eine Verschmutzung der Positioniervorrichtung, insbesondere durch Lack-Overspray, und der Reinigungsbedarf der Positioniervorrichtung können hierdurch vorzugsweise reduziert werden.

Die Positioniervorrichtung ist vorzugsweise variabel relativ zu der Fördervorrichtung, insbesondere relativ zu einer Rollenbahnvorrichtung der Fördervorrichtung, festlegbar. Vorzugsweise kann die Position, an welcher die Werkstückaufnahmevorrichtung samt des einen oder der mehreren daran angeordneten Werkstücke mittels der Positioniervorrichtung arretierbar ist, auch nach Fertigstellung der Fördervorrichtung verändert werden.

Günstig kann es sein, wenn die Fördervorrichtung eine Antriebsvorrichtung umfasst, welche insbesondere eine Beschleunigungsvorrichtung und/oder eine Bremsvorrichtung bildet.

Die Antriebsvorrichtung kann beispielsweise als ein Omegaantrieb ausgebildet sein.

Vorzugsweise umfasst die Antriebsvorrichtung, insbesondere der Omegaantrieb, ein rollengeführtes Bandelement, beispielsweise eine Kette oder einen Riemen.

Günstig kann es sein, wenn die Antriebsvorrichtung teilweise oder vollständig bezüglich der Schwerkraftrichtung nach oben und/oder nach unten bewegbar ist, insbesondere um ein Kopplungselement der Antriebsvorrichtung mit einer Werkstückaufnahmevorrichtung in Eingriff und/oder außer Eingriff zu bringen.

Insbesondere bei einer als Omegaantrieb ausgebildeten Antriebsvorrichtung kann vorgesehen sein, dass zumindest ein Teil eines Bandelements, insbesondere eines Riemens, zusammen mit einer oder mehreren Rollen, insbesondere Endrollen, des Omegaantriebs bezüglich der Schwerkraftrichtung nach oben und/oder nach unten bewegbar sind.

Ferner ist vorzugsweise ein Kopplungselement der Antriebsvorrichtung bezüglich der Schwerkraftrichtung nach oben und/oder nach unten bewegbar, insbesondere um das Kopplungselement mit der Werkstückaufnahmevorrichtung in Eingriff und/oder außer Eingriff zu bringen.

Ein Kopplungselement der Antriebsvorrichtung kann beispielsweise im Wesentlichen U-förmig ausgebildet sein. Das Kopplungselement der Antriebsvorrichtung kann vorzugsweise ein Kopplungselement der Werkstückaufnahmevorrichtung bezüglich der Förderrichtung beidseitig umgreifen und somit insbesondere formschlüssig mit der Werkstückaufnahmevorrichtung verbunden werden.

Das Kopplungselement ist beispielsweise relativ zu der Werkstückaufnahmevorrichtung linear bewegbar und/oder schwenkbar, um mit der Werkstückaufnahmevorrichtung in Eingriff und/oder außer Eingriff gebracht zu werden.

Vorzugsweise umfasst eine Antriebsvorrichtung eine oder mehrere Bewegungsvorrichtungen, insbesondere Hubvorrichtungen.

Mittels einer Bewegungsvorrichtung ist eine Antriebsvorrichtung insbesondere bezüglich der Schwerkraftrichtung nach oben und/oder nach unten bewegbar.

Eine Bewegungsvorrichtung, insbesondere eine Hubvorrichtung, kann beispielsweise eine Druckzylindervorrichtung und/oder eine Exzentervorrichtung umfassen, insbesondere um die Antriebsvorrichtung teilweise oder vollständig bezüglich der Schwerkraftrichtung nach oben und/oder nach unten zu bewegen.

Alternativ oder ergänzend zu einer Bremsvorrichtung der Fördervorrichtung können eine oder mehrere Arretiervorrichtungen der Fördervorrichtung vorgesehen sein. Mittels einer Arretiervorrichtung ist insbesondere eine Werkstückaufnahme samt eines daran angeordneten Werkstücks in einem Störfall der Fördervorrichtung anhaltbar, insbesondere zum Stillstand bringbar.

Die Arretiervorrichtung kann beispielsweise eine Stoßdämpfungsvorrichtung und/oder eine Keilbremsenvorrichtung zum Abbremsen und/oder Anhalten der Werkstückaufnahmevorrichtung und des daran angeordneten Werkstücks umfassen.

Günstig kann es sein, wenn eine Arretiervorrichtung eine Aktivierungsvorrichtung umfasst, mittels welcher die Arretiervorrichtung in eine Aktivstellung und/oder in eine Passivstellung bringbar ist.

Insbesondere kann vorgesehen sein, dass die Arretiervorrichtung mittels der Aktivierungsvorrichtung bei einem Störfall der Fördervorrichtung in einen Bewegungsweg der Werkstückaufnahmevorrichtung, insbesondere einer Kufe der Werkstückaufnahmevorrichtung, bringbar, beispielsweise schwenkbar, ist. Eine unerwünschte und/oder unkontrollierte Bewegung der Werkstückaufnahmevorrichtung im Störfall kann hierdurch abgebremst oder vollständig gestoppt werden.

Zur Kopplung einer Antriebsvorrichtung mit einer Werkstückaufnahmevorrichtung kann vorgesehen sein, dass die Werkstückaufnahmevorrichtung und/oder die Antriebsvorrichtung jeweils mindestens ein Kopplungselement umfassen.

Vorzugsweise umfassen die Antriebsvorrichtung und die Werkstückaufnahmevorrichtung jeweils ein Kopplungselement. Diese Kopplungselemente weisen vorzugsweise zumindest abschnittsweise komplementär zueinander ausgebildete Abschnitte auf, um insbesondere formschlüssig miteinander in Eingriff gebracht zu werden.

Beispielsweise können komplementär zueinander ausgebildete Bereiche mit rechteckigem Querschnitt, mit dreiecksförmigem Querschnitt, mit kreisabschnittsförmigem Querschnitt und/oder trapezförmigem Querschnitt vorgesehen sein.

Es kann vorgesehen sein, dass das Kopplungselement der Antriebsvorrichtung und/oder das Kopplungselement der Werkstückaufnahmevorrichtung mindestens eine Aufnahme zur Aufnahme mindestens eines Vorsprungs der Werkstückaufnahmevorrichtung und/oder der Antriebsvorrichtung umfassen.

Insbesondere zur zuverlässigen Positionierung der Werkstückaufnahmevorrichtung relativ zu der Antriebsvorrichtung kann vorgesehen sein, dass mindestens ein Kopplungselement der Werkstückaufnahmevorrichtung und/oder der Antriebsvorrichtung ein Eingriffelement oder Positionierelement umfasst, welches insbesondere beweglich an einem Kopplungselement angeordnet ist.

Beispielsweise kann vorgesehen sein, dass ein Eingriffelement oder Positionierelement mittels einer Federvorrichtung beweglich an einem Kopplungselement angeordnet ist.

Das Eingriffelement oder Positionierelement kann insbesondere beim Koppeln der Kopplungselemente miteinander aus einer bevorzugten Stellung, insbesondere einer horizontalen Stellung, gebracht werden, um die Kopplung zu vereinfachen. Zur exakten Positionierung der Kopplungselemente relativ zueinander ist das Eingriffelement oder Positionierelement insbesondere mittels der Federvorrichtung in die bevorzugte Stellung bringbar.

Das Eingriffelement und/oder Positionierelement ist insbesondere plattenförmig oder stabförmig ausgebildet und/oder zentral an einem Vorsprung eines Kopplungselements angeordnet, insbesondere gelagert.

Bei einer weiteren Ausgestaltung der Erfindung kann vorgesehen sein, dass ein Kopplungselement, insbesondere ein Kopplungselement der Antriebsvorrichtung, ein Schwenkelement umfasst, welches wahlweise in eine Aktivstellung oder in eine Passivstellung bringbar ist.

In einer Aktivstellung ist das Schwenkelement und somit das Kopplungselement mit einem hierzu korrespondierenden weiteren Kopplungselement in Eingriff bringbar, insbesondere hintergreifbar.

In der Passivstellung sind die Kopplungselemente vorzugsweise relativ zueinander bewegbar, insbesondere in der Förderrichtung aneinander vorbeiführbar.

Das Schwenkelement ist insbesondere mittels einer Führungskulisse aus der Passivstellung in die Aktivstellung und/oder aus der Aktivstellung in die Passivstellung bringbar.

Alternativ oder ergänzend hierzu kann vorgesehen sein, dass das Schwenkelement bei einer Bewegung des gesamten Kopplungselements, insbesondere längs der Förderrichtung, aufgrund seiner Trägheit aus der Passivstellung in die Aktivstellung und/oder aus der Aktivstellung in die Passivstellung bringbar ist.

Die erfindungsgemäße Fördervorrichtung eignet sich insbesondere zur Verwendung in einer Werkstückbehandlungsanlage zur Behandlung von Werkstücken.

Die Werkstückbehandlungsanlage kann insbesondere eine Lackieranlage zum Lackieren von Werkstücken umfassen.

Vorzugsweise umfasst die Werkstückbehandlungsanlage mindestens eine als Omegaantrieb ausgebildete Antriebsvorrichtung, welche insbesondere eine Beschleunigungsvorrichtung und/oder eine Bremsvorrichtung bildet.

Eine Antriebsrolle des Omegaantriebs ist vorzugsweise in eine tragende Struktur der Werkstückbehandlungsanlage, insbesondere in einen Querträger und/oder in einen Längsträger der Werkstückbehandlungsanlage, integriert.

Vorzugsweise ist eine Antriebsrolle des Omegaantriebs innerhalb eines Querträgers der Werkstückbehandlungsanlage angeordnet.

Ferner kann vorgesehen sein, dass eine Welle, welche einen Antriebsmotor der Antriebsvorrichtung mit der Antriebsrolle verbindet, innerhalb des Querträgers der Werkstückbehandlungsanlage angeordnet ist.

Ein Antriebsmotor der Antriebsvorrichtung, insbesondere ein Elektromotor, ist vorzugsweise außerhalb eines Behandlungsbereichs, insbesondere außerhalb einer Lackierkabine, der Werkstückbehandlungsanlage angeordnet.

Insbesondere durch eine Integration von Komponenten der Antriebsvorrichtung in die tragende Struktur der Werkstückbehandlungsanlage kann die Antriebsvorrichtung vor unerwünschten Verunreinigungen, welche im Betrieb der Werkstückbehandlungsanlage in den Behandlungsbereichen anfallen, geschützt werden.

Vorzugsweise ist die Antriebsvorrichtung, insbesondere ein Kopplungselement der Antriebsvorrichtung, während einer Bewegung einer Werkstückaufnahmevorrichtung von einer Startposition zu einer Endposition mit der Werkstückaufnahmevorrichtung, insbesondere formschlüssig, in Eingriff.

Vorzugsweise umfasst eine Abdeckungsvorrichtung steckbare Abdeckelemente, welche insbesondere mittels Laschen an Aufnahmen abnehmbar anordenbar sind.

Beispielsweise weisen die Abdeckelemente eine Länge zwischen ungefähr 1,5 m und ungefähr 2 m auf. Die Laschen und entsprechend auch die hierzu korrespondierenden Aufnahmen weisen vorzugsweise einen Abstand von ungefähr 500 mm voneinander auf. Vorzugsweise sind zwei oder mehr Laschen für jedes Abdeckelement vorgesehen.

Ein Abdeckelement kann beispielsweise zwei Anschläge umfassen, mittels welchen das Abdeckelement einfach an eine Aufnahme anlegbar und in der Höhe positionierbar ist.

Aufnahmen für die Laschen der Abdeckelemente können beispielsweise in variierenden Höhen, insbesondere in wechselnder Höhe, angeordnet sein. Hierdurch kann vorzugsweise die Montage erleichtert und die Stabilität erhöht werden. Vorzugsweise sind die Abdeckungen werkzeuglos montierbar und demontierbar.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer ersten Ausführungsform einer Fördervorrichtung zum Fördern von Werkstücken, bei welcher eine als Riemenantrieb ausgebildete Antriebsvorrichtung vorgesehen ist, welche ein auf einer geschlossenen Bahn bewegbares Beschleunigungselement umfasst;
- Fig. 2: eine vergrößerte Darstellung des Bereichs II in Fig. 1;
- Fig. 3: eine vergrößerte Darstellung des Bereichs III in Fig. 1;
- Fig. 4: eine der Fig. 1 entsprechende schematische perspektivische Darstellung einer zweiten Ausführungsform einer Fördervorrichtung, bei welcher eine als Riemenantrieb ausgebildete Antriebsvorrichtung vorgesehen ist, bei welcher ein Beschleunigungselement längs eines Führungsweges vor- und zurückbewegbar ist;
- Fig. 5: eine der Fig. 2 entsprechende schematische Darstellung einer Beschleunigungsvorrichtung der zweiten Ausführungsform der Fördervorrichtung aus Fig. 4;
- Fig. 6: eine vergrößerte Darstellung der Beschleunigungsvorrichtung der zweiten Ausführungsform der Fördervorrichtung aus Fig. 4;
- Fig. 7: eine der Fig. 2 entsprechende schematische perspektivische Darstellung einer dritten Ausführungsform einer Fördervorrichtung, bei welcher eine als Druckzylindervorrichtung ausgebildete Antriebsvorrichtung vorgesehen ist;
- Fig. 8: eine schematische perspektivische Darstellung der Druckzylindervorrichtung aus Fig. 7, wobei die Druckzylindervorrichtung in einer Überfahrstellung angeordnet ist;
- Fig. 9: eine der Fig. 8 entsprechende schematische Darstellung der Druckzylindervorrichtung, wobei die Druckzylindervorrichtung in einer Ausgangsstellung angeordnet ist;
- Fig. 10: eine der Fig. 8 entsprechende schematische Darstellung der Druckzylindervorrichtung, wobei die Druckzylindervorrichtung in einer Endstellung angeordnet ist;
- Fig. 11: eine schematische perspektivische Darstellung einer vierten Ausführungsform einer Fördervorrichtung, bei welcher eine Bremsvorrichtung vorgesehen ist, die einen Stoßdämpfer umfasst, wobei die Bremsvorrichtung in einer Ausgangsstellung angeordnet ist;
- Fig. 12: eine der Fig. 11 entsprechende schematische perspektivische Darstellung der Fördervorrichtung, wobei die Bremsvorrichtung in einer Überfahrstellung angeordnet ist;
- Fig. 13: eine schematische perspektivische Darstellung der Bremsvorrichtung aus Fig. 11 in der Ausgangsstellung;
- Fig. 14: eine schematische Seitenansicht der Bremsvorrichtung aus Fig. 13;
- Fig. 15: eine der Fig. 13 entsprechende schematische perspektivische Darstellung der Bremsvorrichtung in der Überfahrstellung;
- Fig. 16: eine schematische Seitenansicht der Bremsvorrichtung aus Fig. 15;
- Fig. 17: eine schematische Seitenansicht einer fünften Ausführungsform einer Fördervorrichtung, bei welcher ein Linearachsenantrieb vorgesehen ist, wobei ein Beschleunigungselement des Linearachsenantriebs in einer Ausgangsstellung angeordnet ist;
- Fig. 18: eine der Fig. 17 entsprechende schematische Darstellung der fünften Ausführungsform der Fördervorrichtung, wobei das Beschleunigungselement des Linearachsenantriebs in einer Endstellung angeordnet ist;
- Fig. 19: eine schematische Seitenansicht einer sechsten Ausführungsform einer Fördervorrichtung, bei welcher mindestens ein Transportelement zum Fördern einer Werkstückaufnahme samt eines daran angeordneten Werkstücks vorgesehen ist, wobei das Transportelement in einer Überfahrstellung angeordnet ist;
- Fig. 20: eine der Fig. 19 entsprechende schematische Darstellung der sechsten Ausführungsform der Fördervorrichtung, wobei das Transportelement in einer Ausgangsstellung angeordnet ist;
- Fig. 21: eine der Fig. 19 entsprechende schematische Darstellung der sechsten Ausführungsform der Fördervorrichtung, wobei das Transportelement in einer Zwischenstellung angeordnet ist;
- Fig. 22: eine der Fig. 19 entsprechende schematische Darstellung der sechsten Ausführungsform der Fördervorrichtung, wobei das Transportelement die Werkstückaufnahmevorrichtung in einer Endstellung an eine weitere Fördervorrichtung übergeben hat und in Richtung der Ausgangsstellung zurückbewegt wird;
- Fig. 23: eine schematische Draufsicht von oben auf eine siebte Ausführungsform einer Fördervorrichtung, bei welcher eine als Reibradantrieb ausgebildete Antriebsvorrichtung vorgesehen ist;
- Fig. 24: eine schematische Seitenansicht einer achten Ausführungsform einer Fördervorrichtung, bei welcher zwei Transportwagen zum Transportieren der Werkstückaufnahmevorrichtung samt des daran angeordneten Werkstücks vorgesehen sind, wobei die Transportwagen in einer Ausgangsstellung angeordnet sind;
- Fig. 25: einen schematischen vertikalen Querschnitt durch einen der Transportwagen aus Fig. 24;
- Fig. 26: eine schematische perspektivische Darstellung der Blockiervorrichtung der Positioniervorrichtung der erfindungsgemäßen Fördervorrichtung;
- Fig. 27: eine schematische perspektivische Darstellung einer Schiebevorrichtung der Positioniervorrichtung;
- Fig. 28: eine weitere schematische perspektivische Darstellung der Schiebevorrichtung der Positioniervorrichtung;
- Fig. 29: eine vergrößerte Darstellung des Bereichs XXIX in Fig. 28;
- Fig. 30: eine vergrößerte Darstellung der Blockiervorrichtung der Positioniervorrichtung aus Fig. 26;
- Fig. 31: einen schematischen vertikalen Querschnitt durch die Schiebevorrichtung der Positioniervorrichtung im montierten Zustand derselben an einer Rollenbahnvorrichtung;
- Fig. 32: eine schematische perspektivische Darstellung einer neunten Ausführungsform einer Fördervorrichtung, bei welcher eine als Rollenbahnvorrichtung ausgebildete Führungsvorrichtung und eine als ein zentraler Linearachsenantrieb ausgebildete Antriebsvorrichtung vorgesehen sind;
- Fig. 33: eine vergrößerte Darstellung des Bereichs XXXIII in Fig. 32;
- Fig. 34: einen schematischen vertikalen Querschnitt durch den Linearachsenantrieb der Fördervorrichtung aus Fig. 32;
- Fig. 35: eine schematische Draufsicht von oben auf die Fördervorrichtung aus Fig. 32 an einer Übergabeposition der Fördervorrichtung, an welcher eine Werkstückaufnahmevorrichtung samt eines daran angeordneten Werkstücks von einer Antriebsvorrichtung an eine weitere Antriebsvorrichtung übergebbar ist;
- Fig. 36: eine schematische Seitenansicht der Antriebsvorrichtungen aus Fig. 35, wobei die Antriebsvorrichtungen zur vereinfachten Darstellung vertikal versetzt übereinander dargestellt sind;
- Fig. 37: eine vergrößerte perspektivische Darstellung eines Antriebsbereichs der Antriebsvorrichtung aus Fig. 32;
- Fig. 38: einen schematischen vertikalen Längsschnitt durch die Antriebsvorrichtung aus Fig. 32;
- Fig. 39: einen schematischen vertikalen Querschnitt durch die Antriebsvorrichtung aus Fig. 32;
- Fig. 40: eine schematische perspektivische teiltransparente Darstellung einer Bewegungsvorrichtung zur Höhenverstellung der Antriebsvorrichtung aus Fig. 32;
- Fig. 41: eine schematische perspektivische Darstellung eines Abdeckelements einer Abdeckungsvorrichtung und eines Aufnahmeelements zur Aufnahme des Abdeckelements;
- Fig. 42: eine alternative Ausführungsform eines Kopplungselements zur Kopplung der Antriebsvorrichtung mit der Werkstückaufnahmevorrichtung;
- Fig. 43: eine schematische perspektivische Darstellung einer Arretiervorrichtung zum Abbremsen der Werkstückaufnahmevorrichtung, wobei die Arretiervorrichtung eine Stoßdämpfungsvorrichtung umfasst;
- Fig. 44: eine schematische Schnittdarstellung einer alternativen Ausführungsform einer Arretiervorrichtung, bei welcher eine Keilbremsenvorrichtung vorgesehen ist;
- Fig. 45: eine schematische Draufsicht von oben auf eine weitere alternative Ausführungsform einer Arretiervorrichtung, welche eine schwenkbare Stoßdämpfungsvorrichtung umfasst;
- Fig. 46: eine schematische Seitenansicht der Stoßdämpfungsvorrichtung der in Fig. 45 dargestellten Arretiervorrichtung;
- Fig. 47: einen schematischen vertikalen Schnitt durch eine Kopplungsvorrichtung zum Koppeln einer Werkstückaufnahmevorrichtung mit einer Antriebsvorrichtung, wobei eine mit schrägen Einlaufflächen versehene Aufnahme mit rechteckigem Querschnitt zur Aufnahme eines Querträgers einer Werkstückaufnahmevorrichtung vorgesehen ist;
- Fig. 48: eine der Fig. 47 entsprechende Schnittdarstellung einer alternativen Ausführungsform einer Kopplungsvorrichtung, wobei eine Aufnahme mit dreieckigem Querschnitt zur Aufnahme eines in der Schwerkraftrichtung nach unten hin spitz zulaufenden Vorsprungs der Werkstückaufnahmevorrichtung vorgesehen ist;
- Fig. 49: eine der Fig. 47 entsprechende schematische Schnittdarstellung einer weiteren alternativen Ausführungsform einer Kopplungsvorrichtung, wobei eine kreiszylindersegmentförmige Aufnahme zur Aufnahme eines zumindest abschnittsweise kreiszylindrischen Vorsprungs der Werkstückaufnahmevorrichtung vorgesehen ist;
- Fig. 50: eine der Fig. 47 entsprechende schematische Schnittdarstellung einer weiteren alternativen Ausführungsform einer Kopplungsvorrichtung, wobei ein mit schrägen Einlaufflächen versehener im Wesentlichen quaderförmiger Vorsprung der Antriebsvorrichtung vorgesehen ist, welcher in eine im Wesentlichen quaderförmige Aufnahme der Werkstückaufnahmevorrichtung einführbar ist;
- Fig. 51: eine der Fig. 47 entsprechende schematische Schnittdarstellung einer weiteren alternativen Ausführungsform einer Kopplungsvorrichtung, wobei eine Aufnahme mit trapezförmigem Querschnitt zur Aufnahme eines quaderförmigen Querträgers der Werkstückaufnahmevorrichtung vorgesehen ist;
- Fig. 52: eine der Fig. 47 entsprechende schematische Schnittdarstellung einer weiteren alternativen Ausführungsform einer Kopplungsvorrichtung, bei welcher ein federnd angeordnetes Eingriffelement vorgesehen ist;
- Fig. 53: eine alternative Ausführungsform einer Antriebsvorrichtung, bei welcher zwei motorisch angetriebene Exzenterwellen zur Höhenvariation der Antriebsvorrichtung vorgesehen sind;
- Fig. 54: eine schematische perspektivische Darstellung eines eine Exzenterwelle aus Fig. 53 umgebenden Bereichs der Antriebsvorrichtung; und
- Fig. 55: eine schematische perspektivische Darstellung einer weiteren alternativen Ausführungsform einer Kopplungsvorrichtung, wobei ein schwenkbar angeordnetes Kopplungselement vorgesehen ist.

Die erfindungsgemäße Fördervorrichtung wird durch die Merkmale des Anspruchs 1 und das Verfahren zum Fördern von Werkstücken durch die Merkmale des Anspruchs 14 definiert. Weitere Ausführungsformen der Erfindung ergeben sich aus den abhängigen Ansprüchen.

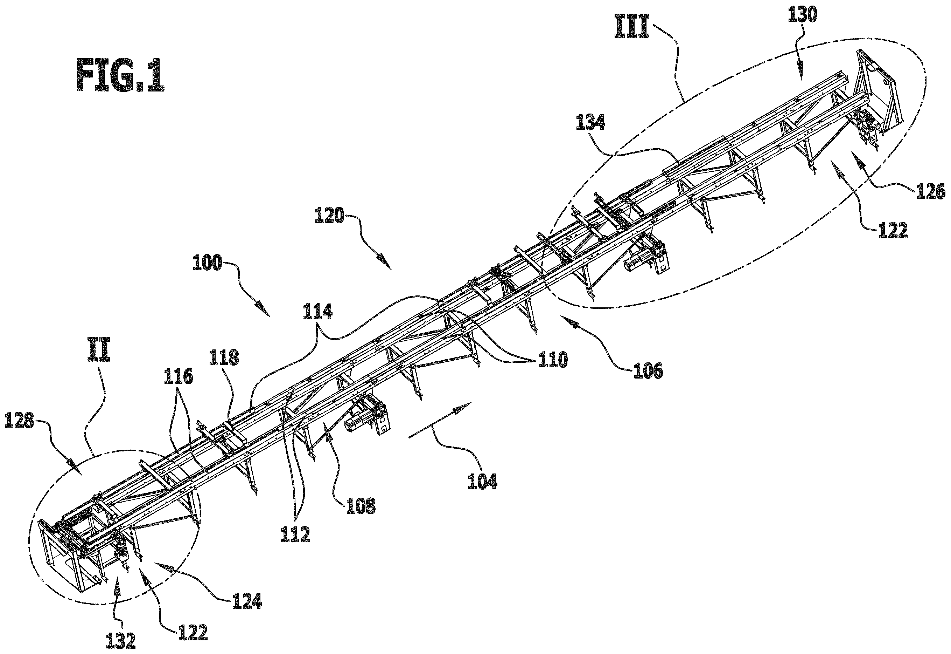

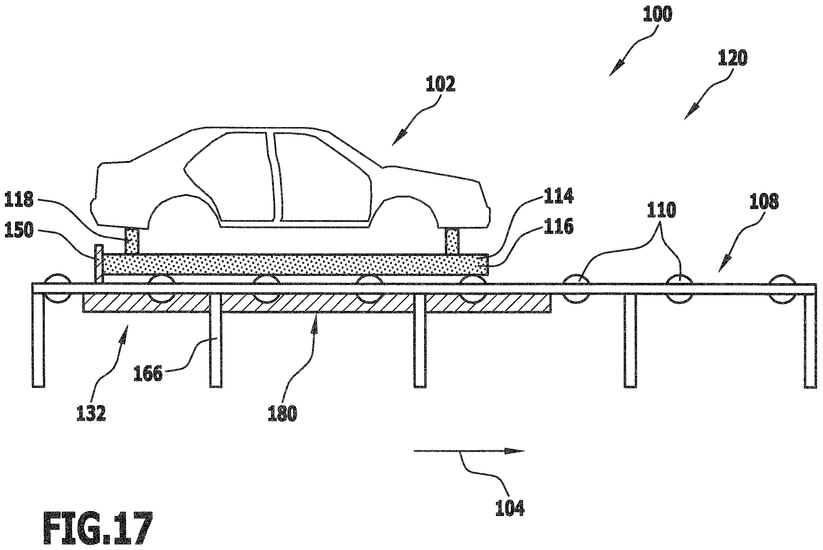

Gleiche oder funktional äquivalente Elemente sind in sämtlichen Figuren mit denselben Bezugszeichen versehen.
Eine in den Fig. 1 bis 3 dargestellte, als Ganzes mit 100 bezeichnete Fördervorrichtung dient der Förderung von Werkstücken 102 (siehe beispielsweise Fig. 17), insbesondere von Fahrzeugkarosserien, längs einer Förderrichtung 104.
Die Fördervorrichtung 100 umfasst eine Führungsvorrichtung 106, welche beispielsweise als eine Rollenbahnvorrichtung 108 ausgebildet ist und eine Vielzahl von Rollenelementen 110 umfasst.
Mittels der Rollenelemente 110 sind insbesondere zwei parallel zueinander und parallel zur Förderrichtung 104 ausgerichtete Rollenbahnen 112 gebildet.
Auf diesen Rollenbahnen 112 kann insbesondere eine Werkstückaufnahmevorrichtung 114, insbesondere ein sogenannter Skid, aufgelegt und in der Förderrichtung 104 bewegt werden.
Die Werkstückaufnahmevorrichtung 114 umfasst hierzu insbesondere zwei Kufen 116, mittels welchen die Werkstückaufnahmevorrichtung 114 auf die Rollenbahnen 112 aufsetzbar ist.

Die Kufen 116 der Werkstückaufnahmevorrichtung 114 sind beispielsweise mittels Querträgern 118 miteinander verbunden.
Die Fördervorrichtung 100 kann insbesondere in einer Werkstückbehandlungsanlage 120 verwendet werden.
Eine Werkstückbehandlungsanlage 120 ist beispielsweise eine Lackieranlage, in welcher die Werkstücke 102 lackierbar sind.
Mittels der Fördervorrichtung 100 können die Werkstücke 102 vorzugsweise zügig zwischen zwei Behandlungsbereichen 122 der Werkstückbehandlungsanlage 102 transportiert werden.

Mittels der Fördervorrichtung 100 kann eine Werkstückaufnahmevorrichtung 114 samt eines daran angeordneten Werkstücks 102 von einer Startposition 124 der Fördervorrichtung 100 zu einer Endposition 126 der Fördervorrichtung 100 bewegt werden.
Zur Aufnahme der Werkstückaufnahmevorrichtung 114 samt des daran angeordneten Werkstücks 102 im Bereich der Startposition 124 ist eine Übernahmevorrichtung 128 vorgesehen.
Insbesondere kann die Fördervorrichtung 100 die Werkstückaufnahmevorrichtung 114 samt des daran angeordneten Werkstücks 102 mittels der Übernahmevorrichtung 128 von einer weiteren Fördervorrichtung 100 übernehmen. Im Bereich der Endposition 126 ist eine Übergabevorrichtung 130 der Fördervorrichtung 100 vorgesehen, mittels welcher die Werkstückaufnahmevorrichtung 114 samt des daran angeordneten Werkstücks 102 insbesondere an eine weitere Fördervorrichtung 100 übergebbar ist.

Grundsätzlich kann vorgesehen sein, dass die Werkstückaufnahmevorrichtung 114 samt des daran angeordneten Werkstücks 102 mittels angetriebener Rollenelemente 110 der Rollenbahnvorrichtung 108 von der Startposition 124 zur Endposition 126 förderbar ist.
Eine besonders zügige Förderung ist jedoch insbesondere dann möglich, wenn die Fördervorrichtung 100 eine von der Rollenbahnvorrichtung 108 verschiedene Beschleunigungsvorrichtung 132 umfasst, mittels welcher die Werkstückaufnahmevorrichtung 114 samt des daran angeordneten Werkstücks 102 in kurzer Zeit stark beschleunigbar ist.

Die Fördervorrichtung 100 umfasst ferner eine Bremsvorrichtung 134, mittels welcher die Werkstückaufnahmevorrichtung 114 samt des daran angeordneten Werkstücks 102 in kurzer Zeit und vorzugsweise auf kurzem Weg abbremsbar ist, um die Werkstückaufnahmevorrichtung 114 samt des daran angeordneten Werkstücks 102 in der Endposition 126 zum Stillstand zu bringen.
Die Bremsvorrichtung 134 kann beispielsweise eine Induktionsbremsvorrichtung, eine Friktionsbremsvorrichtung und/oder eine Stoßdämpfungsvorrichtung umfassen.
Die Bremsvorrichtung 134 greift dabei beispielsweise an mindestens einer Kufe 116 der Werkstückaufnahmevorrichtung 114 an, um die Werkstückaufnahmevorrichtung 114 samt des daran angeordneten Werkstücks 102 abbremsen zu können.
Die Beschleunigungsvorrichtung 132 umfasst eine Antriebsvorrichtung 136, welche beispielsweise einen Riemenantrieb 138 umfasst.
Die Antriebsvorrichtung 136 umfasst insbesondere zwei Rollenpaare 140, auf welchen jeweils ein Riemen 142 geführt ist.

Jeweils eine Rolle 144 der Rollenpaare 140 ist mittels eines Elektromotors 146 der Antriebsvorrichtung 136 angetrieben, um den Riemen 142 in Bewegung zu versetzen.

Die Rollenpaare 140 und die Riemen 142 sind dabei so relativ zu der Fördervorrichtung 104 ausgerichtet, dass eine Oberseite 148 der Riemen 142 jeweils im Wesentlichen parallel zur Förderrichtung 104 bewegbar ist.

Die Riemen 142 sind jeweils mit einem Beschleunigungselement 150 versehen, welches aufgrund der Bewegung der Riemen 142 ebenfalls im Wesentlichen parallel zur Förderrichtung 104 bewegbar ist.

Die Beschleunigungselemente 150 und somit auch die Riemen 142 sind mittels einer Querstange 152, welche im Wesentlichen horizontal und senkrecht zur Förderrichtung 104 ausgerichtet ist, miteinander verbunden.

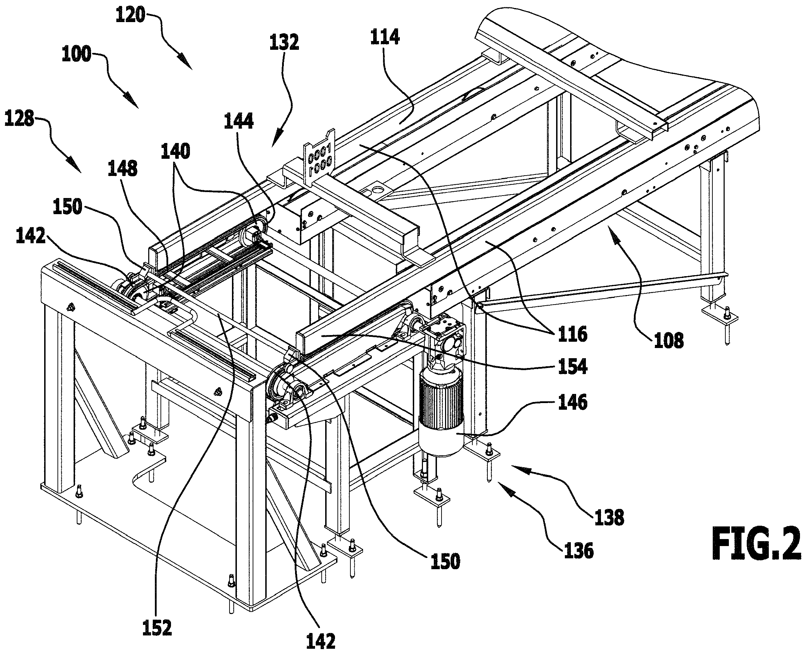

Wie Fig. 2 zu entnehmen ist, ragen die Beschleunigungselemente 150 in der in Fig. 2 dargestellten Ausgangsstellung über die Rollenbahnen 112 der Rollenbahnvorrichtung 108 hervor und können daher mit einem bezüglich der Förderrichtung 104 hinteren Ende 154 der Kufen 116 der Werkstückaufnahmevorrichtung 114 in Eingriff gebracht werden.

Insbesondere kann die Werkstückaufnahme 114 samt des daran angeordneten Werkstücks 102 mittels der Beschleunigungselemente 150 in der Förderrichtung 104 angeschoben werden.

Bei der in den Fig. 1 bis 3 dargestellten ersten Ausführungsform der Fördervorrichtung 100 können die Beschleunigungselemente 150 auf einer geschlossenen Bahn bewegt werden, nämlich an der Oberseite 148 des Riemens 142 längs der Förderrichtung 104, um eine in der Förderrichtung 104 vordere Rolle 144 herum nach unten, entgegen der Förderrichtung 104 zurück zu der bezüglich der Förderrichtung 104 hinteren Rolle und nach oben zurück in die in Fig. 2 dargestellte Ausgangsstellung.

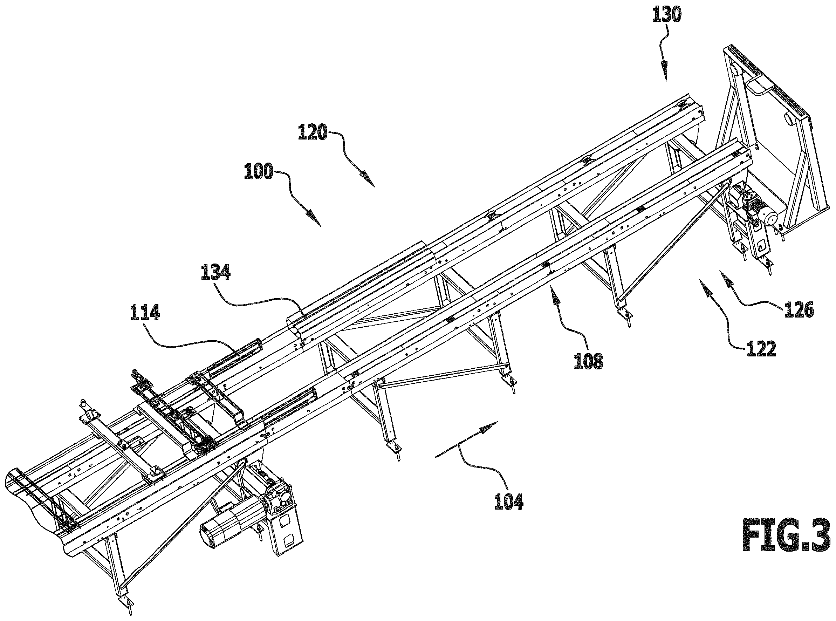

In Fig. 3 ist die Bremsvorrichtung 134 der Fördervorrichtung 100 vergrößert dargestellt. Mittels der Bremsvorrichtung 134 kann die Werkstückaufnahmevorrichtung 114 samt des daran angeordneten Werkstücks 102 insbesondere in der Endposition 126 zum Stillstand gebracht werden.

Die in den Fig. 1 bis 3 dargestellte erste Ausführungsform der Fördervorrichtung 100 funktioniert wie folgt:
Mittels der Übernahmevorrichtung 128 wird die Werkstückaufnahmevorrichtung 114 samt des daran angeordneten Werkstücks 102 übernommen, so dass die Werkstückaufnahmevorrichtung 114 samt des daran angeordneten Werkstücks 102 in der Startposition 124 vorliegt.

In dieser Startposition 124, welche vorzugsweise in einem Behandlungsbereich 122 der Werkstückbehandlungsanlage 120 ist, kann das an der Werkstückaufnahmevorrichtung 114 angeordnete Werkstück 102 behandelt, beispielsweise lackiert, werden.

Nach der Durchführung des Behandlungsvorgangs muss das Werkstück 102 möglichst zügig zu dem weiteren Behandlungsbereich 122 transportiert werden.

Je zügiger dieser Transport erfolgt, desto effizienter kann die Werkstückbehandlungsanlage 120 betrieben werden.

Ausgehend von der in Fig. 2 dargestellten Ausgangsstellung der Beschleunigungselemente 150 der Beschleunigungsvorrichtung 132 können die Beschleunigungselemente 150 längs der Förderrichtung 104 beschleunigt werden.

Die Beschleunigungselemente 150 greifen dabei an dem hinteren Ende 154 der Kufen 116 der Werkstückaufnahmevorrichtung 114 an und beschleunigen die Werkstückaufnahmevorrichtung 114 samt des daran angeordneten Werkstücks 102 längs der Förderrichtung 104.

Mittels der Bremsvorrichtung 134 wird die so beschleunigte Werkstückaufnahmevorrichtung 114 und das daran angeordnete Werkstück 102 abgebremst und in der Endposition 126 gezielt zum Stillstand gebracht.

In dieser Endposition 126, welche ebenfalls ein Behandlungsbereich 122 der Werkstückbehandlungsanlage 120 ist, kann ein weiterer Behandlungsvorgang, beispielsweise ein weiterer Lackiervorgang, des Werkstücks 102 durchgeführt werden.

Nach der Behandlung des Werkstücks 102 in der Endposition 126 der Fördervorrichtung 100 wird die Werkstückaufnahmevorrichtung 114 samt des daran angeordneten Werkstücks 102 mittels der Übergabevorrichtung 130 an eine weitere Fördervorrichtung 100 übergeben.

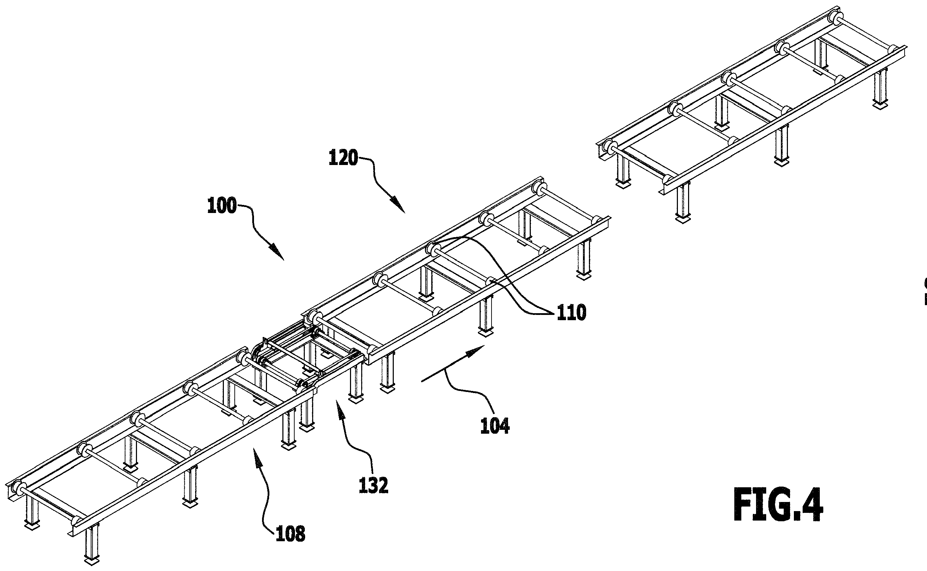

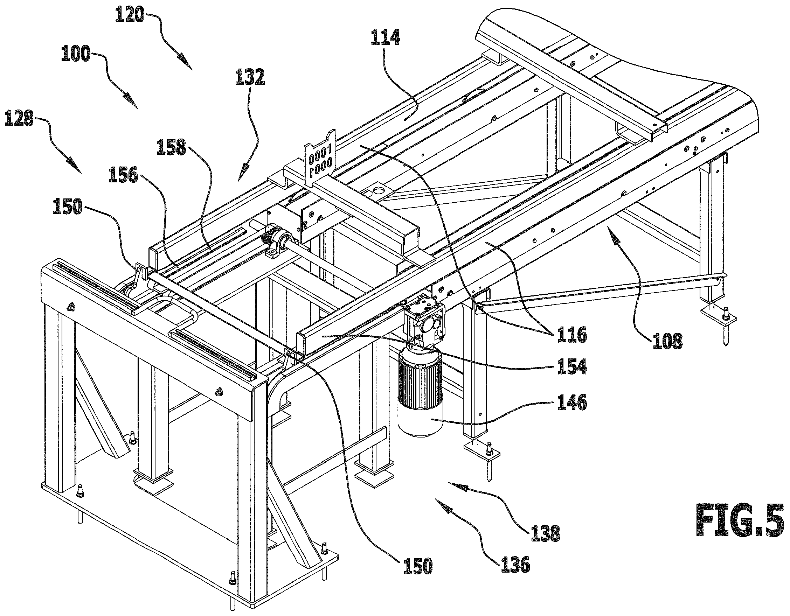

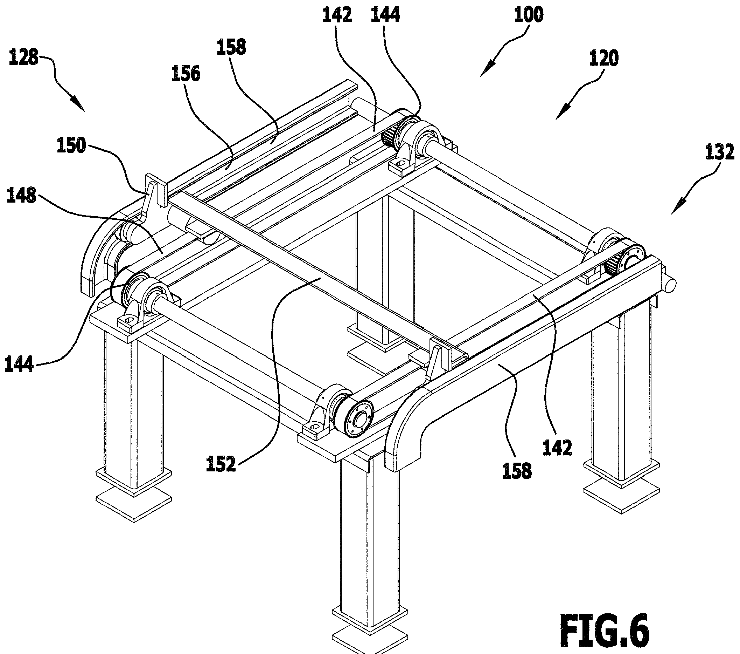

Eine in den Fig. 4 bis 6 dargestellte zweite Ausführungsform einer Fördervorrichtung 100 unterscheidet sich von der in den Fig. 1 bis 3 dargestellten ersten Ausführungsform im Wesentlichen dadurch, dass die Beschleunigungselemente 150 nicht auf einer geschlossenen Bahn, sondern längs eines Bewegungsweges 156 vorwärts und rückwärts bewegbar sind.

Der Bewegungsweg 156 ist dabei durch ein Führungselement 158 der Antriebsvorrichtung 136 vorgegeben.

Mittels des Führungselements 158 kann insbesondere die Bewegung der Beschleunigungselemente 150 stabilisiert werden.

Im Übrigen entspricht die in den Fig. 4 bis 6 dargestellte zweite Ausführungsform einer Fördervorrichtung 100 hinsichtlich Aufbau und Funktion der in den Fig. 1 bis 3 dargestellten ersten Ausführungsform, so dass auf deren vorstehende Beschreibung insoweit Bezug genommen wird.

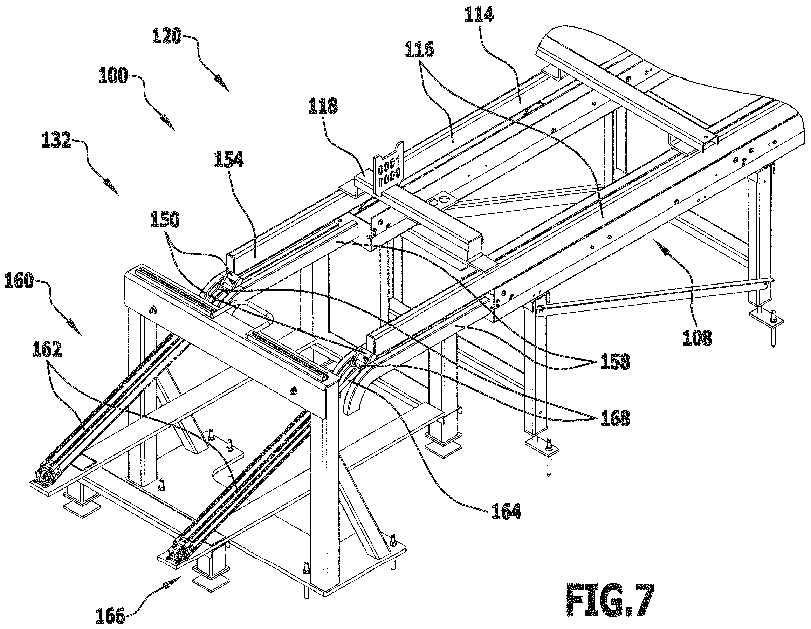

Eine in den Fig. 7 bis 10 dargestellte dritte Ausführungsform einer Fördervorrichtung 100 unterscheidet sich von der in den Fig. 4 bis 6 dargestellten zweiten Ausführungsform im Wesentlichen dadurch, dass die Beschleunigungselemente 150 nicht mittels eines Riemenantriebs 138, sondern mittels einer Druckzylindervorrichtung 160 antreibbar sind.

Die Druckzylindervorrichtung 160 umfasst zwei Druckzylinder 162 und zwei relativ zu den Druckzylindern 162 bewegliche Kolbenstangen 164.

Die Druckzylindervorrichtung 160 ist beispielsweise eine pneumatische oder hydraulische Druckzylindervorrichtung 160, so dass durch Beaufschlagen eines Innenraums der Druckzylinder 162 mit einem Druck die Kolbenstange 164 ausfahrbar ist.

Die Druckzylinder 162 sind drehbar an einer Tragstruktur 166 der Fördervorrichtung 100 festgelegt.

An einem der Tragstruktur 106 abgewandten Ende der Druckzylinder 162 sind Durchtrittsöffnungen vorgesehen, durch welche sich die Kolbenstangen 164 erstrecken.

An einem dem Innenraum der Druckzylinder 162 abgewandten Ende 168 der Kolbenstangen 164 sind die Beschleunigungselemente 150 angeordnet.

Durch Herausdrücken der Kolbenstangen 164 aus den Druckzylindern 162 und durch Hereinziehen der Kolbenstangen 164 in den Innenraum der Druckzylinder 162 können somit die Beschleunigungselemente 150 gezielt bewegt werden.

Die Beschleunigungselemente 150 sind längs Führungselementen 158 und somit längs eines Bewegungswegs 156 bewegbar.

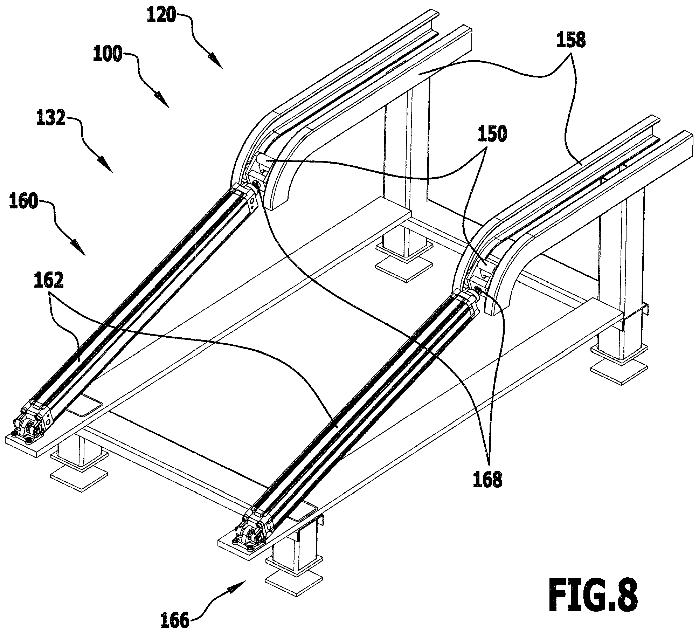

Insbesondere sind die Beschleunigungselemente 150 in eine in Fig. 8 dargestellte Überfahrstellung bringbar, in welcher die Beschleunigungselemente 150 in vertikaler Richtung nicht über die Rollenbahnen 112 der Rollenbahnvorrichtung 108 hinausragen und somit eine Werkstückaufnahmevorrichtung 114 längs der Förderrichtung 104 über die Beschleunigungselemente 150 hinweg bewegt werden kann.

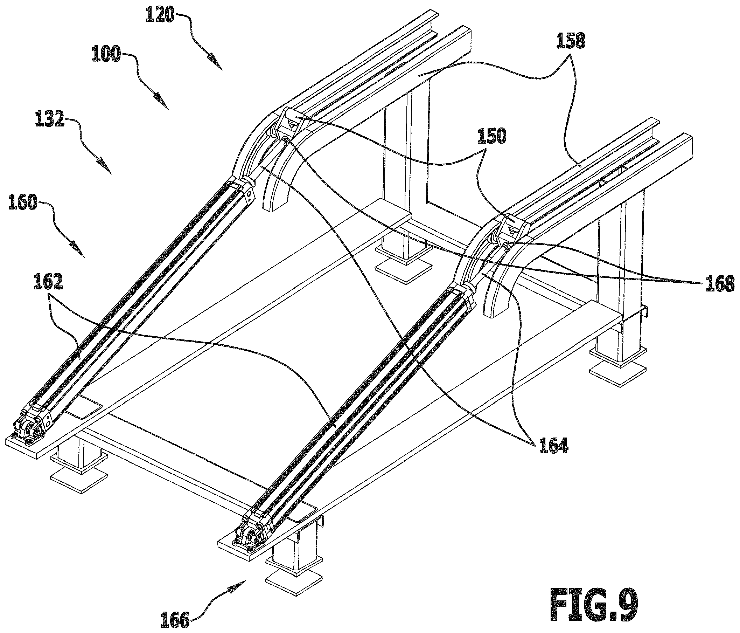

Die Beschleunigungselemente 150 sind ferner in die in Fig. 9 dargestellte Ausgangsstellung bringbar, in welcher die Beschleunigungselemente 150 an dem hinteren Ende 154 der Kufen 116 der Werkstückaufnahmevorrichtung 114 angreifen können, um die Werkstückaufnahmevorrichtung 114 samt des daran angeordneten Werkstücks 102 zu beschleunigen.

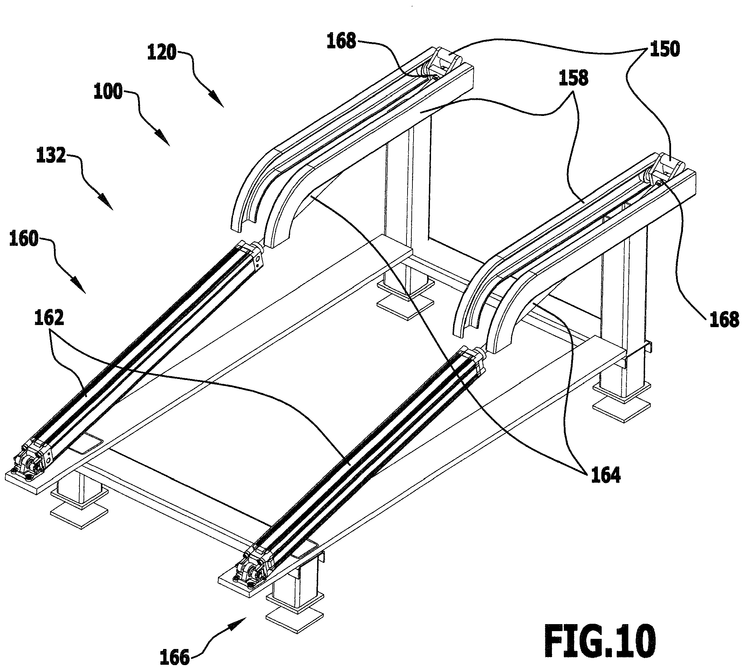

Schließlich sind die Beschleunigungselemente 150 in die in Fig. 10 dargestellte Endstellung bringbar.

Durch die Bewegung der Beschleunigungselemente 150 von der Ausgangsstellung in die Endstellung wird die Werkstückaufnahmevorrichtung 114 samt des daran angeordneten Werkstücks 102 längs der Förderrichtung 104 beschleunigt.

Nach Erreichen der Endstellung können die Beschleunigungselemente 150 durch Einziehen der Kolbenstangen 164 erneut in die Überfahrstellung (siehe Fig. 8) oder in die Ausgangsstellung (siehe Fig. 9) gebracht werden.

Im Übrigen stimmt die in den Fig. 7 bis 10 dargestellte dritte Ausführungsform der Fördervorrichtung 100 hinsichtlich Aufbau und Funktion mit der in den Fig. 1 bis 3 dargestellten ersten Ausführungsform überein, so dass auf deren vorstehende Beschreibung insoweit Bezug genommen wird.

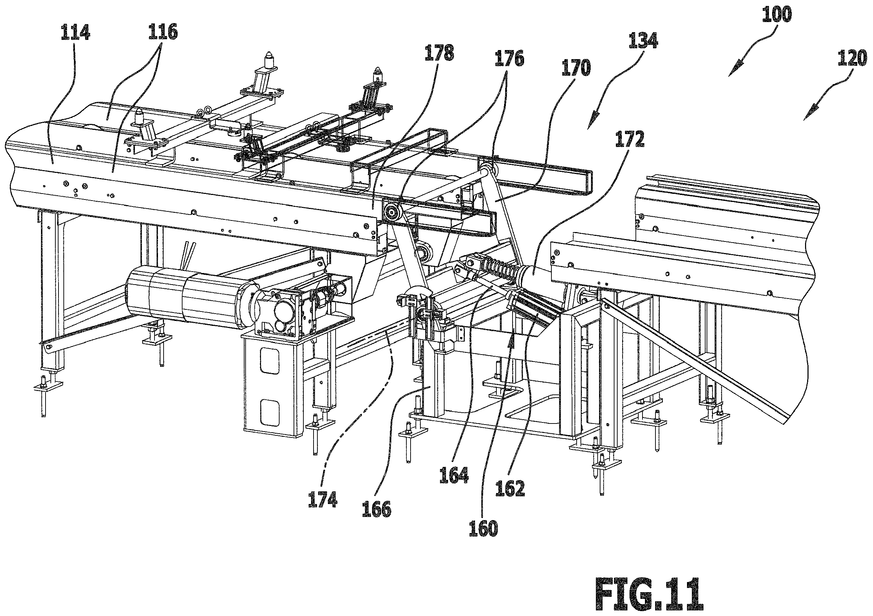

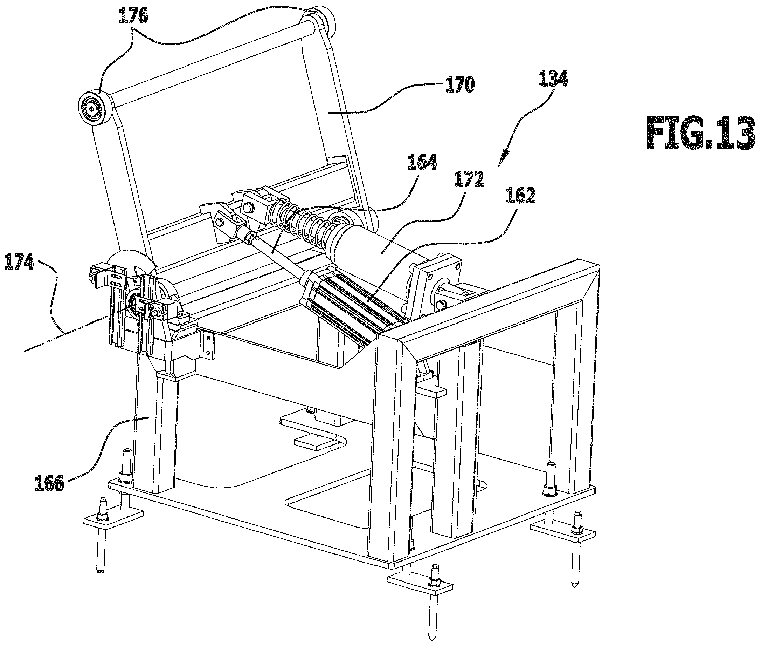

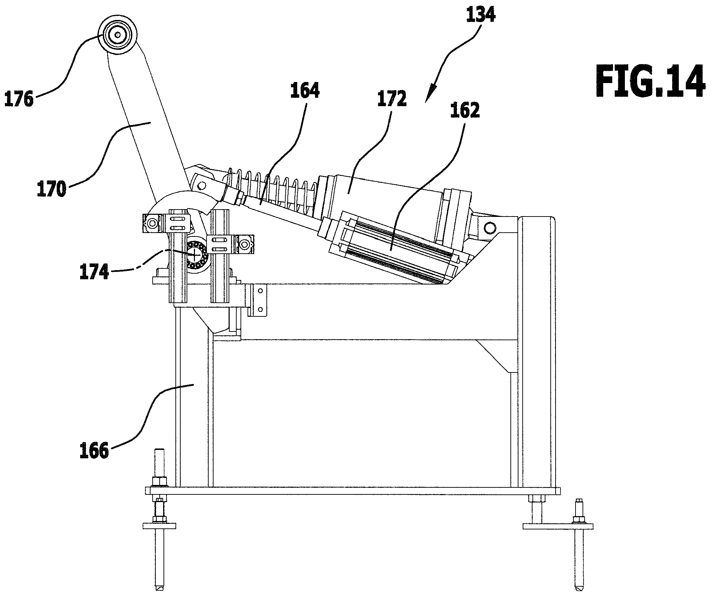

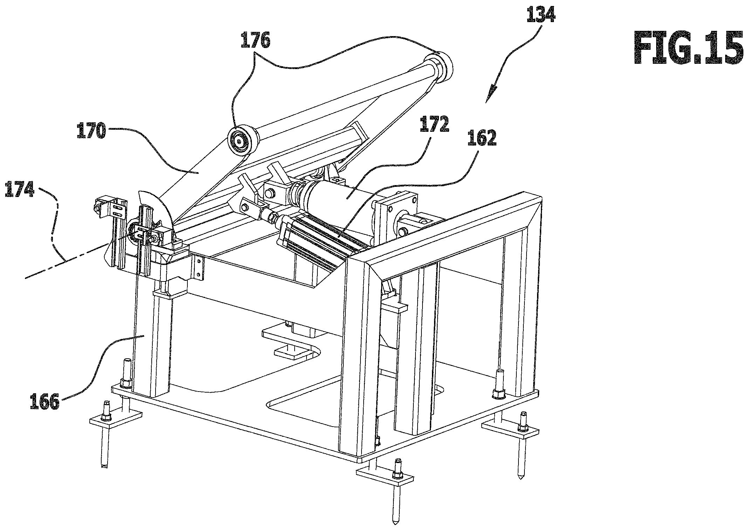

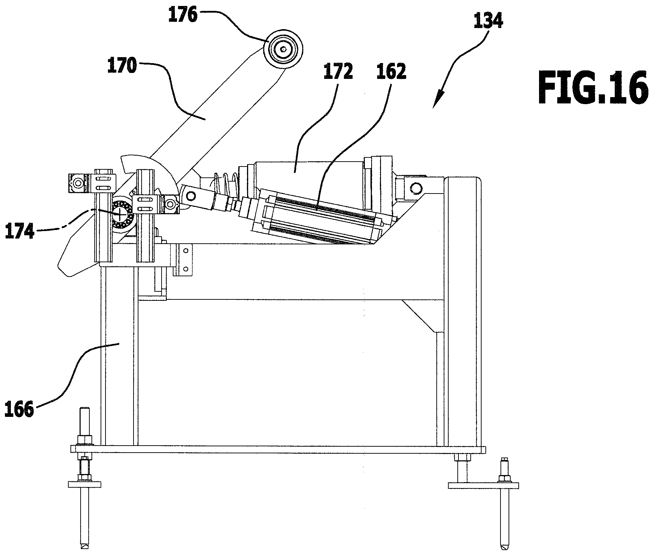

Eine in den Fig. 11 bis 16 dargestellte vierte Ausführungsform einer Fördervorrichtung 100 unterscheidet sich von der in den Fig. 1 bis 3 dargestellten ersten Ausführungsform im Wesentlichen dadurch, dass die Bremsvorrichtung ein schwenkbares Aufprallelement 170 umfasst, welches mit einem Stoßdämpfer 172 zusammenwirkt, um die Werkstückaufnahmevorrichtung 114 samt des daran angeordneten Werkstücks 102 in der Endposition 126 abzubremsen.

Das Aufprallelement 170 ist insbesondere schwenkbar an der Tragstruktur 166 der Fördervorrichtung 100 angeordnet.

Eine Rotationsachse 174 des Aufprallelements 170 ist vorzugsweise im Wesentlichen horizontal und im Wesentlichen senkrecht zur Förderrichtung 104 ausgerichtet, kann jedoch auch in einer (nicht dargestellten) weiteren Ausführungsform im Wesentlichen vertikal und im Wesentlichen senkrecht zur Förderrichtung 104 ausgerichtet sein.

Das Aufprallelement 170 umfasst vorzugsweise zwei Stößelrollen 176, an welchen die Kufen 116 der Werkstückaufnahmevorrichtung 114 mit ihrem bezüglich der Förderrichtung 104 vorderen Ende 178 angreifen können.

Der Stoßdämpfer 172 sowie ein Druckzylinder 162 samt zugehöriger Kolbenstange 164 sind jeweils einerseits mit der Tragstruktur 166 und andererseits mit dem Aufprallelement 170 verbunden.

Mittels des Stoßdämpfers 172 kann eine Rotation des Aufprallelements 170 um die Rotationsachse 174 abgebremst werden.

Mittels des Druckzylinders 162 und der Kolbenstange 164 kann das Aufprallelement 170 insbesondere in eine in den Fig. 11, 13 und 14 dargestellte Ausgangsstellung bewegt, insbesondere gedreht, werden.

Die in den Fig. 11 bis 16 dargestellte vierte Ausführungsform der Fördervorrichtung 100 funktioniert wie folgt:
Nach dem Beschleunigen der Werkstückaufnahmevorrichtung 114 samt des daran angeordneten Werkstücks 102 in der Förderrichtung 104 wird die Werkstückaufnahmevorrichtung 114 samt des daran angeordneten Werkstücks 102 mittels der Bremsvorrichtung 134 abgebremst.

Die Kufen 116 der Werkstückaufnahmevorrichtung 114 stoßen hierzu an die Stößelrollen 176 des in der Ausgangsstellung angeordneten Aufprallelements 170 der Bremsvorrichtung 134 an und bewegen die Stößelrollen 176 zumindest näherungsweise längs der Förderrichtung 104.

Das Aufprallelement 170 wird hierbei um die Rotationsachse 174 geschwenkt, wodurch der Stoßdämpfer 172 betätigt wird.

Mittels des Stoßdämpfers 172 kann die Schwenkbewegung des Aufprallelements 170 und somit die Bewegung der Stößelrollen 176 abgebremst werden.

Auch die Bewegung der Werkstückaufnahmevorrichtung 114 samt des daran angeordneten Werkstücks 102 wird hierdurch abgebremst.

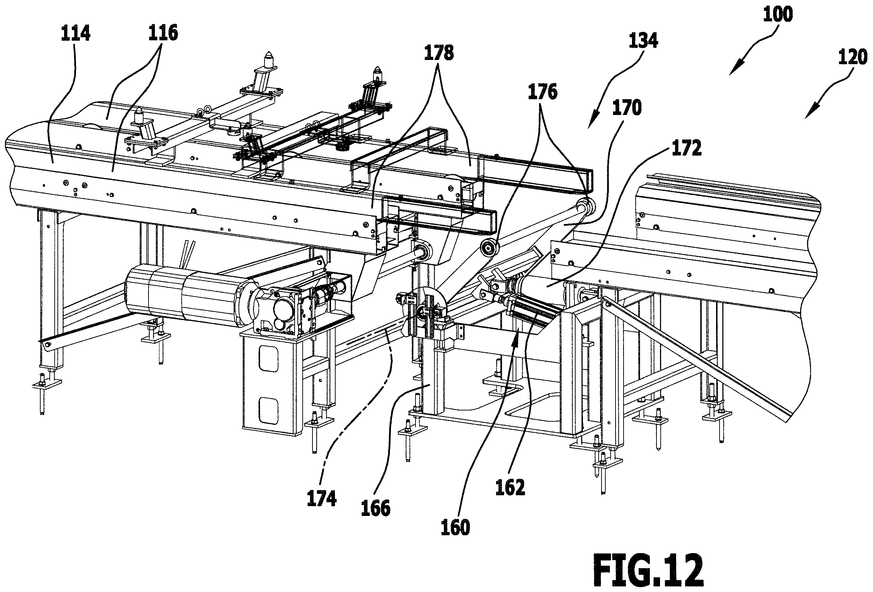

Die Werkstückaufnahmevorrichtung 114 samt des daran angeordneten Werkstücks 102 kann mittels der Bremsvorrichtung 134 bis zum Stillstand gebracht werden. Alternativ hierzu kann jedoch auch vorgesehen sein, dass das Aufprallelement 170 nach erfolgter Bremswirkung in die in den Fig. 12, 15 und 16 dargestellte Überfahrstellung gebracht wird, in welcher die Stößelrollen 176 nicht mehr über die Rollenbahnen 112 der Rollenbahnvorrichtung 108 hinausragen und somit die Werkstückaufnahmevorrichtung 114 samt des daran angeordneten Werkstücks 102 längs der Förderrichtung 104 an der Bremsvorrichtung 134 vorbeibewegt werden kann.

Im Übrigen stimmt die in den Fig. 11 bis 16 dargestellte vierte Ausführungsform der Fördervorrichtung 100 hinsichtlich Aufbau und Funktion mit der in den Fig. 1 bis 3 dargestellten ersten Ausführungsform überein, so dass auf deren vorstehende Beschreibung insoweit Bezug genommen wird.

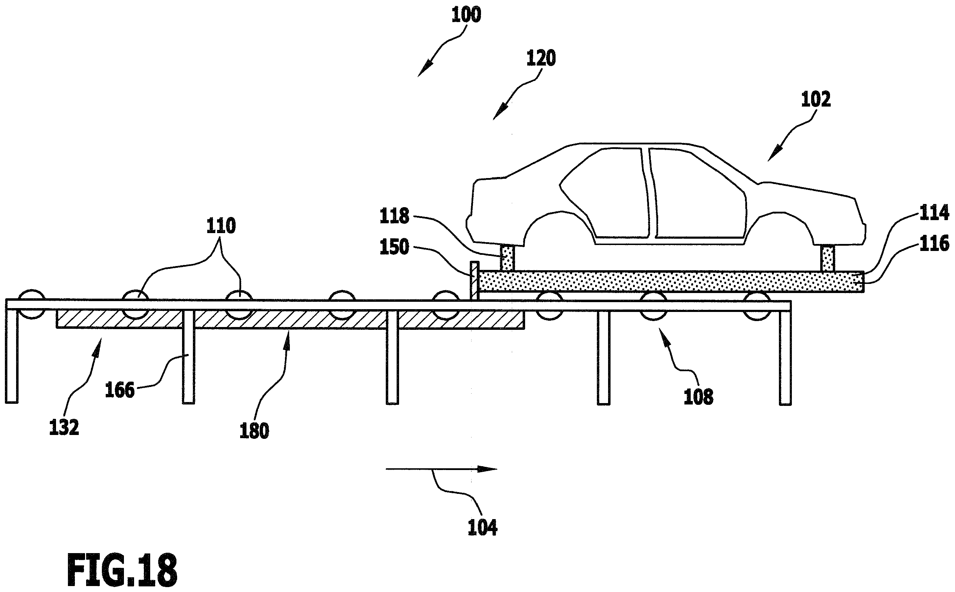

Eine in den Fig. 17 und 18 dargestellte fünfte Ausführungsform einer Fördervorrichtung 100 unterscheidet sich von der in den Fig. 7 bis 10 dargestellten dritten Ausführungsform im Wesentlichen dadurch, dass anstelle der Druckzylindervorrichtung 160 ein Linearachsenantrieb 180 vorgesehen ist, mittels welchem ein oder mehrere Beschleunigungselemente 150 antreibbar sind.

Das Beschleunigungselement 150 ist mittels des Linearachsenantriebs 180 insbesondere von der in Fig. 17 dargestellten Ausgangsstellung in die in Fig. 18 dargestellte Endstellung bringbar, um die Werkstückaufnahmevorrichtung 114 samt des daran angeordneten Werkstücks 102 zu beschleunigen.

Bei der in den Fig. 17 und 18 dargestellten fünften Ausführungsform der Fördervorrichtung 100 ist der Linearachsenantrieb 180 ergänzend zu einer als Rollenbahnvorrichtung 108 ausgebildeten Führungsvorrichtung 106 vorgesehen.

Bei einer (nicht dargestellten) weiteren Ausführungsform der Fördervorrichtung 100 kann jedoch auch vorgesehen sein, dass der Linearachsenantrieb 180 die Führungsvorrichtung 106 bildet.

Im Übrigen stimmt die in den Fig. 17 und 18 dargestellte fünfte Ausführungsform der Fördervorrichtung 100 hinsichtlich Aufbau und Funktion mit der in den Fig. 7 bis 10 dargestellten dritten Ausführungsform überein, so dass auf deren vorstehende Beschreibung insoweit Bezug genommen wird.

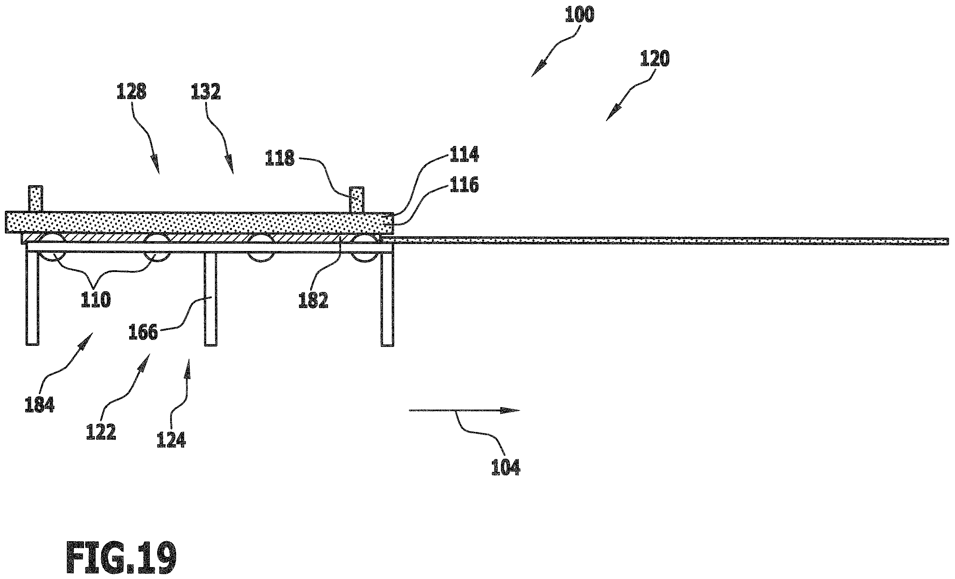

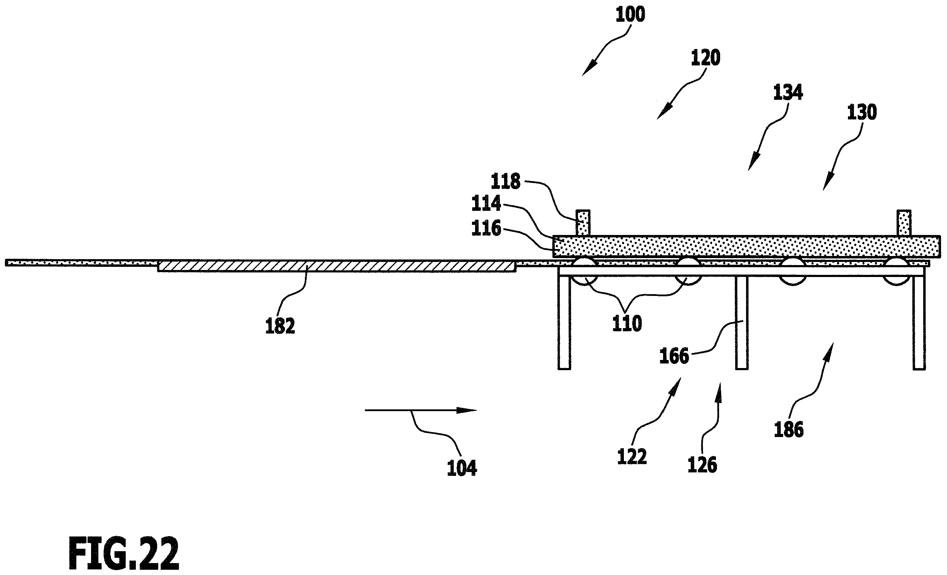

Eine in den Fig. 19 bis 22 dargestellte sechste Ausführungsform einer Fördervorrichtung 100 unterscheidet sich von der in den Fig. 1 bis 3 dargestellten ersten Ausführungsform im Wesentlichen dadurch, dass die Fördervorrichtung 100 ein oder mehrere Transportelemente 182 umfasst, auf welchen die Werkstückaufnahmevorrichtung 114 samt des daran angeordneten Werkstücks 102 anordenbar ist und mittels welchen die Werkstückaufnahmevorrichtung 114 samt des daran angeordneten Werkstücks 102 von der in Fig. 19 dargestellten Startposition 124 in die in Fig. 22 dargestellte Endposition 126 bringbar ist.

Das Transportelement 182 kann beispielsweise als ein Shuttle oder als ein Schlitten ausgebildet sein.

Wie den Fig. 19 bis 22 zu entnehmen ist, ist bei der sechsten Ausführungsform der Fördervorrichtung 100 vorgesehen, dass diese Fördervorrichtung 100 im Bereich der Startposition 124 an eine Vorfördervorrichtung 184 und im Bereich der Endposition 126 an eine Nachfördervorrichtung 186 angrenzt.

Die Vorfördervorrichtung 184 und die Fördervorrichtung 100 sind dabei überlappend angeordnet, so dass die Werkstückaufnahmevorrichtung 114 samt des daran angeordneten Werkstücks 102 im Bereich der Startposition 124 mittels des Transportelements 182 der Fördervorrichtung 100 von der Vorfördervorrichtung 184 übernehmbar ist.

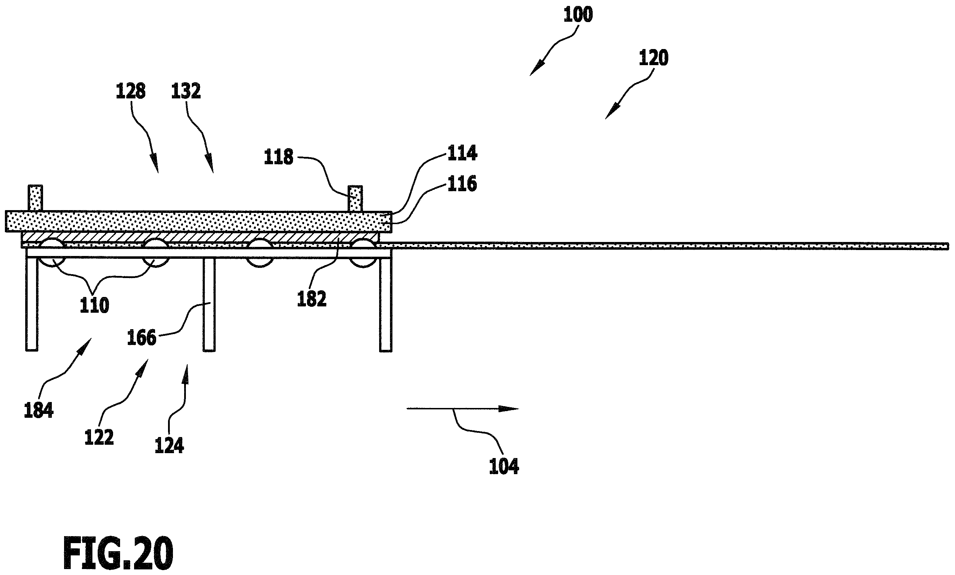

Die Werkstückaufnahmevorrichtung 114 samt des daran angeordneten Werkstücks 102 ist dabei insbesondere von den Rollenbahnen 112 einer als Rollenbahnvorrichtung 108 ausgebildeten Vorfördervorrichtung 184 abhebbar (siehe Fig. 20).

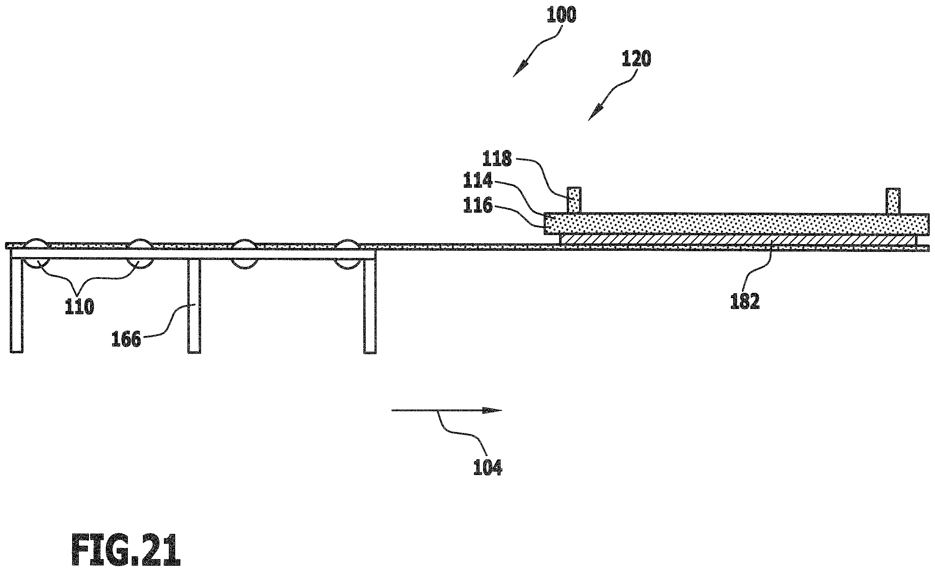

Das Transportelement 182, die daran angeordnete Werkstückaufnahmevorrichtung 114 und das an der Werkstückaufnahmevorrichtung 114 angeordnete Werkstück 102 sind mittels der Fördervorrichtung 100 längs der Förderrichtung 104 förderbar (siehe Fig. 21) und insbesondere in die Endposition 126 bringbar.

In der Endposition 126 kann die Werkstückaufnahmevorrichtung 114 samt des daran angeordneten Werkstücks 102 insbesondere durch Absenken des Transportelements 182 auf die Rollenbahnen 112 der beispielsweise als Rollenbahnvorrichtung 108 ausgebildeten Nachfördervorrichtung 186 aufgesetzt und somit an die Nachfördervorrichtung 186 übergeben werden.

Sowohl in der Startposition 124 als auch in der Endposition 126 erfolgt vorzugsweise eine Behandlung des Werkstücks 122, so dass sowohl die Startposition 124 als auch die Endposition 126 vorzugsweise Behandlungsbereiche 122 der Werkstückbehandlungsanlage 120 sind.

Die Behandlung in der Endposition 126 kann insbesondere dann erfolgen, wenn die Werkstückaufnahmevorrichtung 114 samt des daran angeordneten Werkstücks 102 bereits auf die Rollenbahnen 112 der als Rollenbahnvorrichtung 108 ausgebildeten Nachfördervorrichtung 186 aufgesetzt ist.

Das Transportelement 182 kann somit bereits während der Behandlung des Werkstücks 102 in der Endposition 126 aus der Endposition 126 entfernt und zurück in die Startposition 124 bewegt werden.

Im Übrigen stimmt die in den Fig. 19 bis 22 dargestellte sechste Ausführungsform der Fördervorrichtung 100 hinsichtlich Aufbau und Funktion mit der in den Fig. 1 bis 3 dargestellten ersten Ausführungsform überein, so dass auf deren vorstehende Beschreibung insoweit Bezug genommen wird.

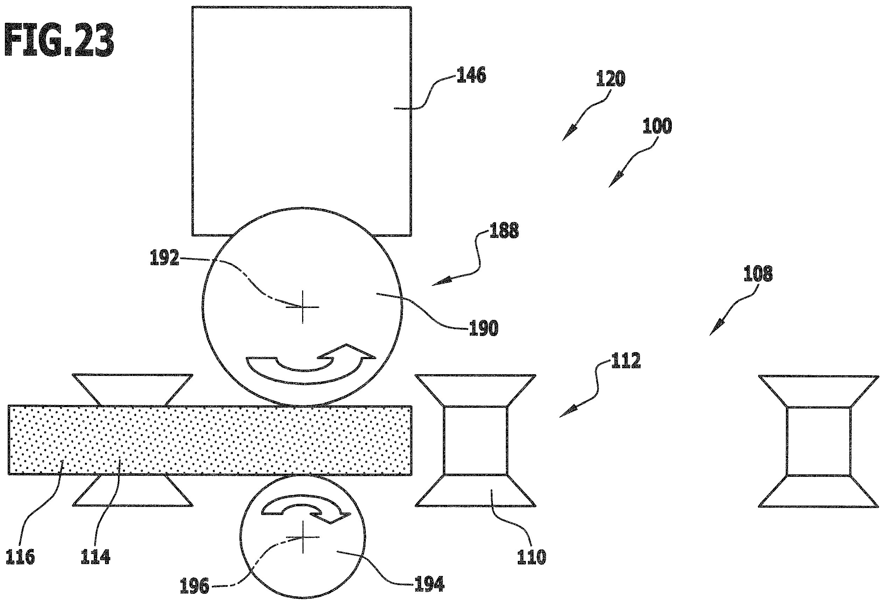

Eine in Fig. 23 dargestellte siebte Ausführungsform einer Fördervorrichtung 100 unterscheidet sich von der in den Fig. 1 bis 3 dargestellten ersten Ausführungsform im Wesentlichen dadurch, dass die Beschleunigungsvorrichtung 162 einen Reibradantrieb 188 umfasst. Ein solcher Reibradantrieb 188 umfasst insbesondere ein Reibrad 190, welcher mittels eines Elektromotors 146 in eine Drehbewegung versetzbar ist.

Eine Drehachse 192 des Reibrads 190 ist dabei im Wesentlichen vertikal und senkrecht zur Förderrichtung 104 ausgerichtet.

Das Reibrad 190 ist vorzugsweise so angeordnet, dass es in eine Rollenbahn 112 hineinragt.

Eine in der Rollenbahn 112 geführte Kufe 116 einer Werkstückaufnahmevorrichtung 114 kann somit von dem Reibrad 190 erfasst und aufgrund der Rotation des Reibrads 190 beschleunigt werden.

Um ein unerwünschtes Verschieben der Kufen 116 der Werkstückaufnahmevorrichtung 114 in den Rollenbahnen 112 zu verhindern, umfasst der Reibradantrieb 118 vorzugsweise ein Gegenrad 194, welches auf einer dem Reibrad 190 gegenüberliegenden Seite der Rollenbahn 112 angeordnet ist und angetrieben oder nicht angetrieben um eine parallel zur Drehachse 192 des Reibrads 190 ausgerichtete Drehachse 196 drehbar ist.

Das Reibrad 190 und das Gegenrad 194 werden vorzugsweise beidseitig an zumindest eine Kufe 116 der Werkstückaufnahmevorrichtung 114 angepresst, so dass eine reibschlüssige Kraftübertragung möglich ist.

Bei einer (nicht dargestellten) alternativen Ausführungsform der Fördervorrichtung 100 kann vorgesehen sein, dass der Reibradantrieb 188 nicht auf eine Kufe 116 der Werkstückaufnahmevorrichtung 114, sondern beispielsweise auf ein mittig an der Werkstückaufnahmevorrichtung 114 zwischen den zwei Kufen 116 angeordnetes (nicht dargestelltes) Schwert wirkt.

Im Übrigen stimmt die in Fig. 23 dargestellte siebte Ausführungsform der Fördervorrichtung 100 hinsichtlich Aufbau und Funktion mit der in den Fig. 1 bis 3 dargestellten ersten Ausführungsform überein, so dass auf deren vorstehende Beschreibung insoweit Bezug genommen wird.

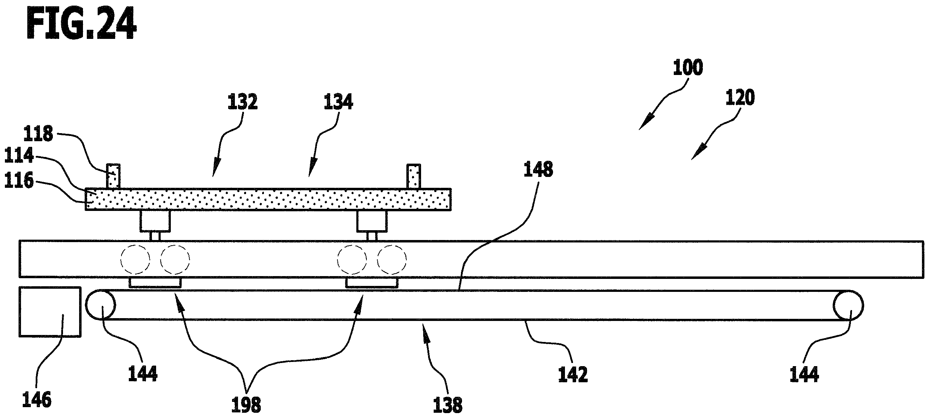

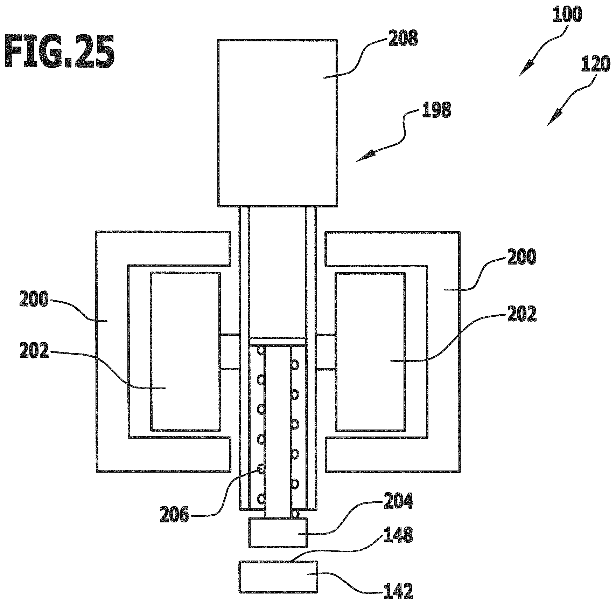

Eine in den Fig. 24 und 25 dargestellte achte Ausführungsform einer Fördervorrichtung 100 unterscheidet sich von der in den Fig. 19 bis 22 dargestellten sechsten Ausführungsform im Wesentlichen dadurch, dass das Transportelement durch zwei Transportwagen 198 gebildet ist.

Mittels der zwei Transportwagen 198 kann insbesondere die Werkstückaufnahmevorrichtung 114 samt des daran angeordneten Werkstücks 102 aufgenommen und bewegt, insbesondere beschleunigt und/oder abgebremst werden.

Die in den Fig. 24 und 25 dargestellte achte Ausführungsform der Fördervorrichtung 100 umfasst zwei Führungsschienen 200, welche einen im Wesentlichen C-förmigen Querschnitt aufweisen und der Aufnahme von Rollen 202 der Transportwagen 198 dienen.

Ferner umfasst die Fördervorrichtung 100 einen Riemenantrieb 138, bei welchem ein Riemen 142 zwischen zwei Rollen 144 gespannt und um die Rollen 144 bewegbar gelagert ist.

Die Rollen 144 und der Riemen 142 sind insbesondere mittels eines Elektromotors 146 des Riemenantriebs 138 antreibbar.

Der Riemen 142 ist insbesondere ein beidseitig gezahnter Riemen 142, so dass die Transportwagen 198 mittels eines ebenfalls gezahnten Kopplungselements 204 der Transportwagen 198 mit der Oberseite 148 des Riemens 142 formschlüssig in Eingriff bringbar sind.

Das Kopplungselement 204 eines jeden Transportwagens 198 ist dabei beispielsweise mittels einer Feder 206 belastet und, insbesondere steuerbar und/oder regelbar, mit dem Riemen 142 in Eingriff bringbar.

An einem Aufnahmeabschnitt 208 der Transportwagen 198 ist die Werkstückaufnahmevorrichtung 114 lösbar festlegbar.

Durch den beidseitig gezahnten Riemen 142 und das variable Kopplungselement 204 können bei der in den Fig. 24 und 25 dargestellten achten Ausführungsform einer Fördervorrichtung 100 bei Bedarf eine zügige Beschleunigung der Werkstückaufnahmevorrichtung 114 samt des daran angeordneten Werkstücks 102 und vorzugsweise auch eine rasche Abbremsung der Werkstückaufnahmevorrichtung 114 samt des daran angeordneten Werkstücks 102 realisiert werden.

Im Übrigen stimmt die in den Fig. 24 und 25 dargestellte achte Ausführungsform der Fördervorrichtung 100 hinsichtlich Aufbau und Funktion mit der in den Fig. 19 bis 22 dargestellten sechsten Ausführungsform überein, so dass auf deren vorstehende Beschreibung insoweit Bezug genommen wird.

Bei weiteren (nicht dargestellten) Ausführungsformen von Fördervorrichtungen 100 können beliebige Kombinationen von Merkmalen der vorstehend beschriebenen Fördervorrichtungen 100 vorgesehen sein.

Beispielsweise kann vorgesehen sein, dass die in den Fig. 1 bis 3 dargestellte Ausführungsform der Fördervorrichtung 100 mit der Bremsvorrichtung gemäß der in den Fig. 11 bis 16 dargestellten vierten Ausführungsform der Fördervorrichtung 100 versehen wird.

Dadurch, dass bei sämtlichen Ausführungsformen von Fördervorrichtungen 100 Beschleunigungsvorrichtungen 132 und Bremsvorrichtungen 134 vorgesehen sind, können Werkstückaufnahmevorrichtungen 114 samt daran angeordneter Werkstücke 102 sehr zügig von einer Startposition 124 zu einer Endposition 126 transportiert werden.

Es kann vorgesehen sein, dass die Fördervorrichtungen 100 mindestens eine Positioniervorrichtung 250 umfassen.

Mittels einer solchen Positioniervorrichtung 250 können insbesondere die Werkstückaufnahmevorrichtungen 114 samt der daran angeordneten Werkstücke 102 exakt positioniert werden, insbesondere exakt in einem Behandlungsbereich 122 der Werkstückbehandlungsanlage 120 arretiert werden.

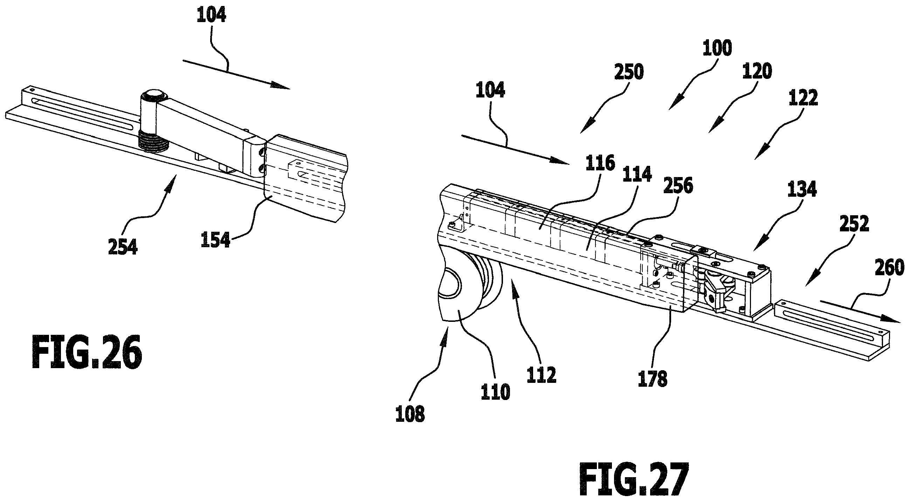

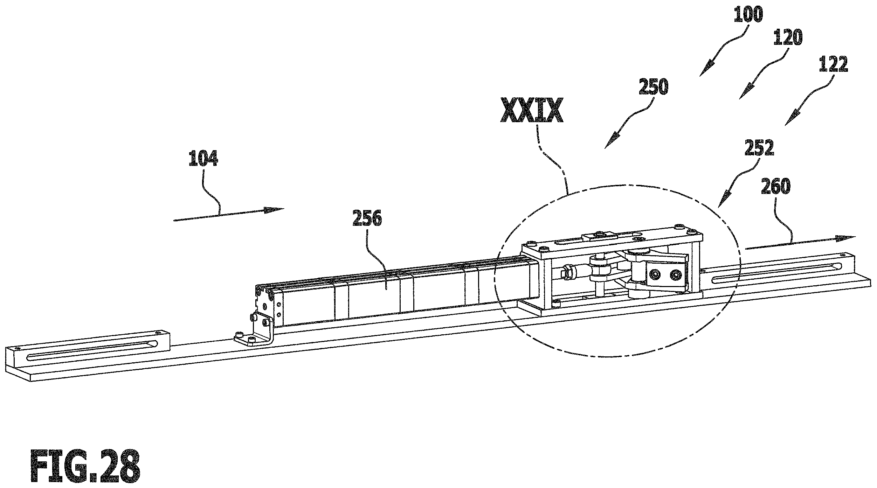

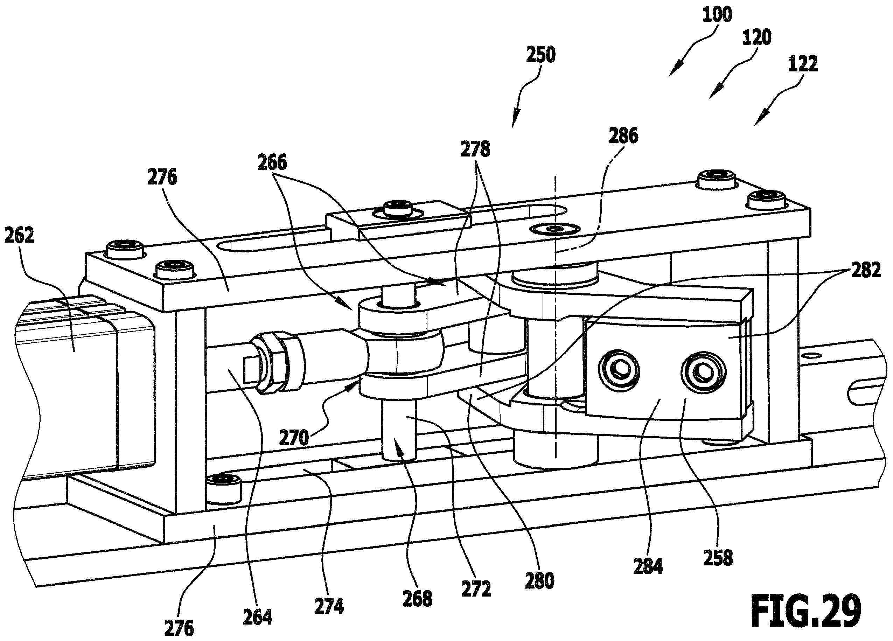

Eine in den Fig. 26 bis 31 dargestellte Ausführungsform einer Positioniervorrichtung 250 umfasst eine Schiebevorrichtung 252 und eine Blockiervorrichtung 254.

Die Schiebevorrichtung 252 umfasst eine Druckzylindervorrichtung 256, mittels welcher ein Hebelelement 258 bewegbar ist, insbesondere in einen Förderweg 260 der Werkstückaufnahmevorrichtung 114 hineinklappbar oder hineinschwenkbar ist.

Die Druckzylindervorrichtung 256 umfasst einen Druckzylinder 262 und eine Kolbenstange 264, welche in den Druckzylinder 262 hineinschiebbar oder hineinfahrbar und aus dem Druckzylinder 262 herausschiebbar oder herausziehbar ist.

Die Kolbenstange 264 der Druckzylindervorrichtung 256 ist mittels zweier Gelenkvorrichtungen 266 mit dem Hebelelement 258 verbunden.

Eine Gelenkvorrichtung 266 dient dabei als Umlenkvorrichtung 268 zur Umlenkung einer Bewegungsrichtung der Kolbenstange 264 und ist hierzu an einem dem Druckzylinder 262 abgewandten Ende 270 der Kolbenstange 264 angeordnet.

Die Umlenkvorrichtung 268 umfasst eine Querstange 272, an welcher die Kolbenstange 264 angreift und welche längs zweier Führungsschlitze 274 in zwei einander gegenüberliegenden Führungselementen 276 der Druckzylindervorrichtung 256 längs der Förderrichtung 104 und entgegen der Förderrichtung 104 bewegbar ist.

Die Querstange 272 ist mittels zweier Übertragungselemente 278 mit einem Verbindungsabschnitt 280 des Hebelelements 258 schwenkbar verbunden. Mittels der Übertragungselemente 278 und des Hebelelements 258 ist somit die weitere Gelenkvorrichtung 266 gebildet.

Das Hebelelement 258 umfasst zwei Hebelarme 282.

Ein Hebelarm 282 bildet den Verbindungsabschnitt 280.

Der weitere Hebelarm 282 bildet einen Angriffsabschnitt 284 des Hebelelements 258, mittels welchem die Schiebevorrichtung 252 an der Werkstückaufnahmevorrichtung 114, insbesondere an einem bezüglich der Förderrichtung 104 vorderen Ende 178 der Werkstückaufnahmevorrichtung 114, angreifen kann.

Mittels der Druckzylindervorrichtung 256 ist das Hebelelement 258 um eine insbesondere vertikal ausgerichtete Rotationsachse 286 schwenkbar.

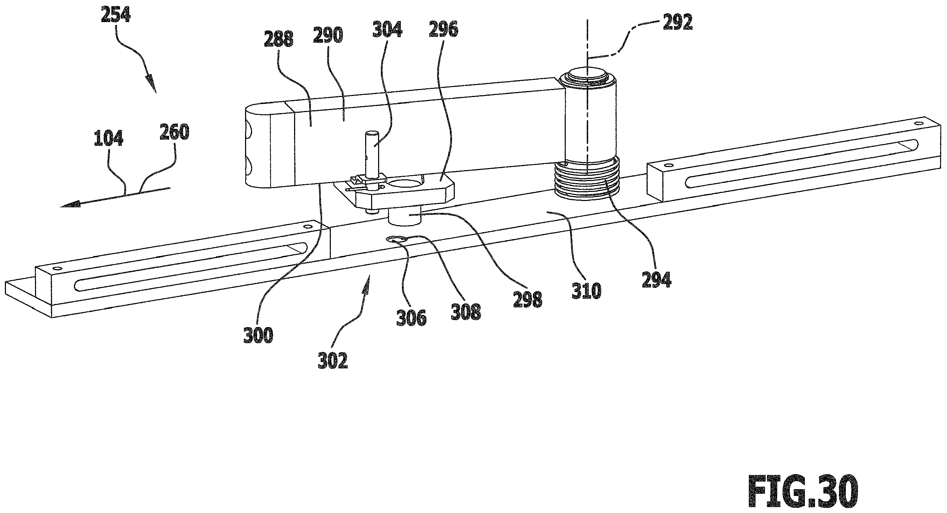

Die Blockiervorrichtung 254 umfasst ein Blockierelement 288, welches beispielsweise als eine Sperrklinke 290 ausgebildet ist (siehe Fig. 30).

Das Blockierelement 288 ist um eine beispielsweise vertikal ausgerichtete Rotationsachse 292 schwenkbar gelagert.

Insbesondere ist das Blockierelement 288 in den Förderweg 260 der Werkstückaufnahmevorrichtung 114 hineinschwenkbar.

Das Blockierelement 288 ist mit einer Feder 294 versehen.

Mittels der Feder 294 wird das Blockierelement 288 in einer in Fig. 30 dargestellten Blockierstellung gehalten.

Ein weitergehendes Verschwenken in den Förderweg 260 wird mittels eines an dem Blockierelement 288 angeordneten Arretierelements 296 sowie mittels eines hierzu korrespondierenden Zapfens 298 der Blockiervorrichtung 254 verhindert.

Das Arretierelement 296 ist beispielsweise ein U-förmiges Element, welches an einer Unterseite 300 des Blockierelements 288 angeordnet, insbesondere angeschweißt, und mit dem Zapfen 298 in Eingriff bringbar ist.

Die Blockiervorrichtung 254 umfasst ferner eine Verriegelungsvorrichtung 302, mittels welcher das Blockierelement 288 in einer aus dem Förderweg 260 herausgeschwenkten Stellung (nicht dargestellt) arretierbar ist.

Die Verriegelungsvorrichtung 302 umfasst insbesondere einen an dem Arretierelement 296 angeordneten Pin 304, welcher in der aus dem Förderweg 260 herausgeschwenkten Stellung des Blockierelements 288 mit einer Öffnung 306 oder Vertiefung 308 der Verriegelungsvorrichtung 302, insbesondere einer Öffnung 306 oder Vertiefung 308 in einer Grundplatte 310, in Eingriff bringbar ist.

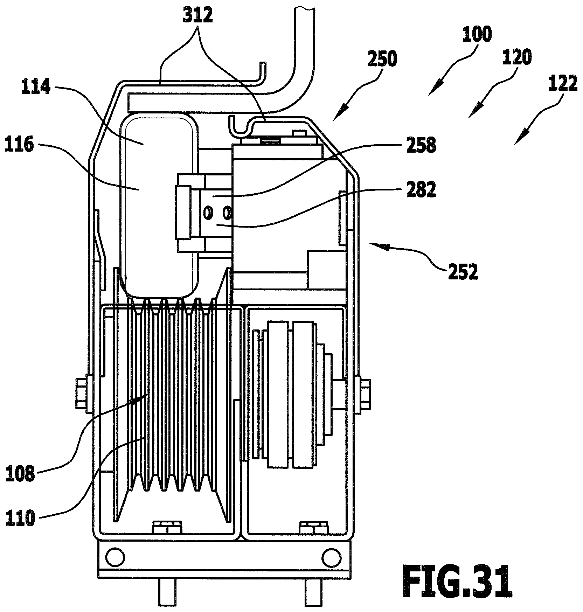

Wie insbesondere Fig. 31 zu entnehmen ist, ist die Positioniervorrichtung 250 vorzugsweise innerhalb oder zumindest unter einer Abdeckungsvorrichtung 312 angeordnet.

Mittels der Abdeckungsvorrichtung 312 kann die Positioniervorrichtung 250 insbesondere vor einer unerwünschten Verunreinigung geschützt werden.

Die Abdeckungsvorrichtung 312 dient vorzugsweise ferner der zumindest teilweisen Abdeckung der Werkstückaufnahmevorrichtung 114.

Insbesondere können mittels der Abdeckungsvorrichtung 312 die Kufen 116 einer als Skid ausgebildeten Werkstückaufnahmevorrichtung 114 abgedeckt werden, um diese vor einer unerwünschten Verunreinigung zu schützen.

Der Reinigungs- und Wartungsbedarf der Positioniervorrichtung 250 und/oder der Werkstückaufnahmevorrichtung 114 kann hierdurch vorzugsweise reduziert werden.

Die in den Fig. 26 bis 31 dargestellte Ausführungsform der Positioniervorrichtung 250 funktioniert wie folgt:
Im Betrieb der Fördervorrichtung 100 wird die Werkstückaufnahmevorrichtung 114 samt des daran angeordneten Werkstücks 102 längs der Förderrichtung 104 bewegt.

Um die Werkstückaufnahmevorrichtung 114 samt des daran angeordneten Werkstücks 102 in einer gewünschten Position zu arretieren, insbesondere in einem Behandlungsbereich 122 festzulegen, wird die Werkstückaufnahmevorrichtung 114 samt des daran angeordneten Werkstücks 102 zunächst an der Blockiervorrichtung 254 vorbeibewegt.

Die Blockiervorrichtung 254 der erfindungsgemäßen Fördervorrichtung ist hierzu monodirektional sperrend ausgebildet und ermöglicht ein Vorbeibewegen der Werkstückaufnahmevorrichtung 114 an der Blockiervorrichtung 254 in der Förderrichtung 104. Das Blockierelement 288 wird hierbei um die Rotationsachse 292 verschwenkt und dabei aus dem Förderweg 260 herausbewegt.
Sobald die Werkstückaufnahmevorrichtung 114 an der Blockiervorrichtung 254 vorbeibewegt wurde, wird das Blockierelement 288 aufgrund der Wirkung der Feder 294 erneut in den Förderweg 260 zurückgeschwenkt.
Durch die Ausgestaltung des Blockierelements 288 kann in diesem nun erhaltenen Zustand eine Bewegung der Werkstückaufnahmevorrichtung 114 entgegen der Förderrichtung 104 verhindert werden.
Nachdem die Werkstückaufnahmevorrichtung 114 an der Blockiervorrichtung 254 vorbeibewegt wurde und die Blockiervorrichtung 254, insbesondere das Blockierelement 288, in die beispielsweise in Fig. 26 dargestellte blockierende Stellung zurückgekehrt ist, kommt das bezüglich der Förderrichtung 104 vordere Ende 178 einer Kufe 116 der Werkstückaufnahmevorrichtung 114 an dem Angriffsabschnitt 284 des Hebelelements 258 der Schiebevorrichtung 252 zum Anschlag.
Die Werkstückaufnahmevorrichtung 114 wird hierdurch vorzugsweise zum Stillstand gebracht.
Eine exakte Positionierung der Werkstückaufnahmevorrichtung 114 erfolgt nun durch Betätigung der Druckzylindervorrichtung 256.
Hierbei wird die Kolbenstange 264 aus dem Druckzylinder 262 herausgeschoben oder herausgedrückt und dadurch das Hebelelement 258 um die Rotationsachse 286 geschwenkt.

Der Angriffsabschnitt 284 bewegt sich dabei entgegen der Förderrichtung 104 und schiebt die an dem Angriffsabschnitt 284 anliegende Werkstückaufnahmevorrichtung 114 entgegen der Förderrichtung 104 soweit zurück, bis dieses mit dem bezüglich der Förderrichtung 104 hinteren Ende 154 an dem Blockierelement 288 der Blockiervorrichtung 254 zur Anlage kommt.

Die Werkstückaufnahmevorrichtung 114 ist dann zwischen das Blockierelement 288 und das Hebelelement 258, das heißt zwischen die Blockiervorrichtung 254 und die Schiebevorrichtung 252, eingeklemmt und damit in einer gewünschten Position arretiert.

In dieser gewünschten Position kann insbesondere eine Behandlung des an der Werkstückaufnahmevorrichtung 114 angeordneten Werkstücks 102 erfolgen.

Mittels der Positioniervorrichtung 250 ist die Werkstückaufnahmevorrichtung 114 samt des daran angeordneten Werkstücks 102 insbesondere in einem Behandlungsbereich 122 der Werkstückbehandlungsanlage 120 in einer vorgegebenen Position festlegbar.

Um die Werkstückaufnahmevorrichtung 114 samt des daran angeordneten Werkstücks 102 längs der Förderrichtung 104 weiter fördern zu können, insbesondere nachdem ein Behandlungsvorgang durchgeführt wurde, wird die Druckzylindervorrichtung 256 erneut betätigt. Dabei wird die Kolbenstange 264 in den Druckzylinder 262 zurückgezogen und hierdurch das Hebelelement 258 aus dem Förderweg 260 entfernt.

Die Werkstückaufnahmevorrichtung 114 kann dann in der Förderrichtung 104 an der Schiebevorrichtung 252 vorbeibewegt werden.

Die in den Fig. 26 bis 31 dargestellte Ausführungsform der Positioniervorrichtung 250 zeigt die Positioniervorrichtung 250 in Kombination mit einer als Rollenbahnvorrichtung 108 ausgebildeten Fördervorrichtung 100.

Grundsätzlich kann die Positioniervorrichtung 250 aber auch für jede andere Art einer Fördervorrichtung 100 verwendet werden.

Bei einer weiteren (nicht dargestellten) Ausführungsform einer Positioniervorrichtung 250 kann vorgesehen sein, dass die Kolbenstange 264 unmittelbar mit dem Verbindungsabschnitt 280 des Hebelelements 258 verbunden ist. Durch eine solche Ausgestaltung der Positioniervorrichtung 250 kann diese vorzugsweise mit einer geringeren Anzahl an Bauteilen realisiert werden.

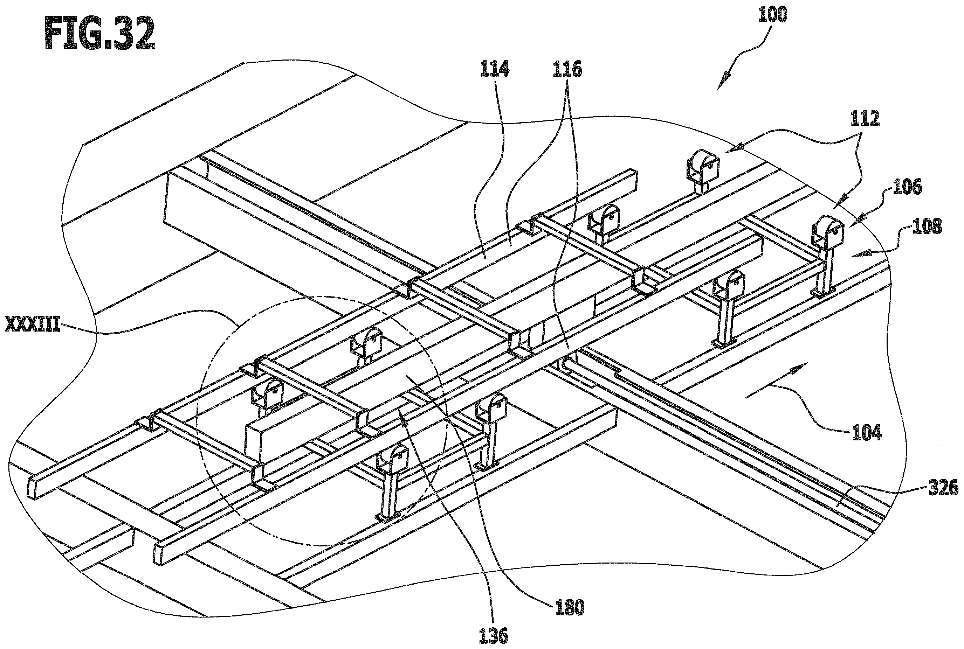

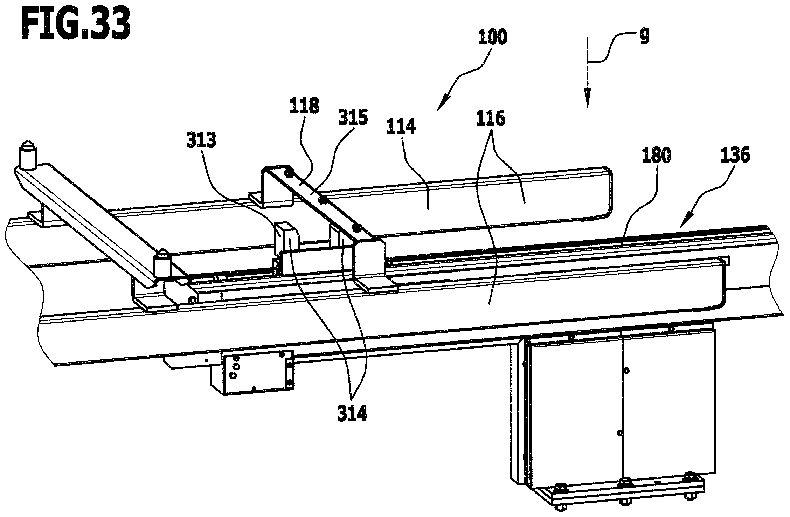

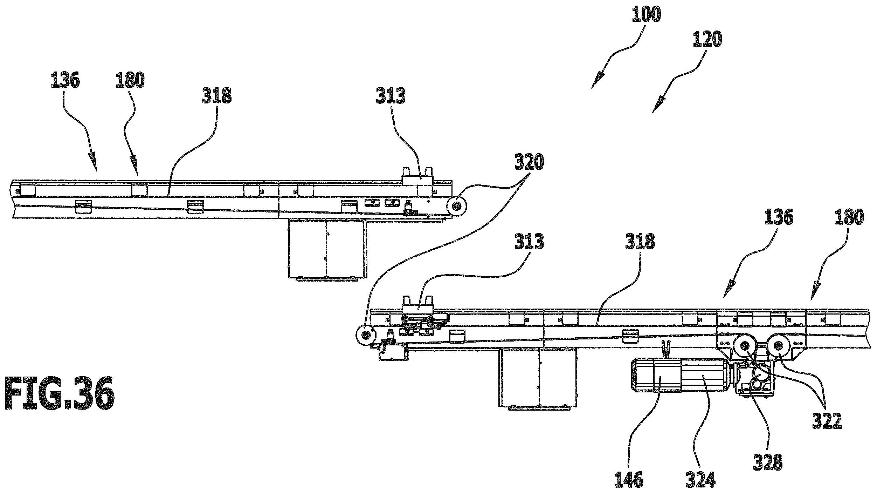

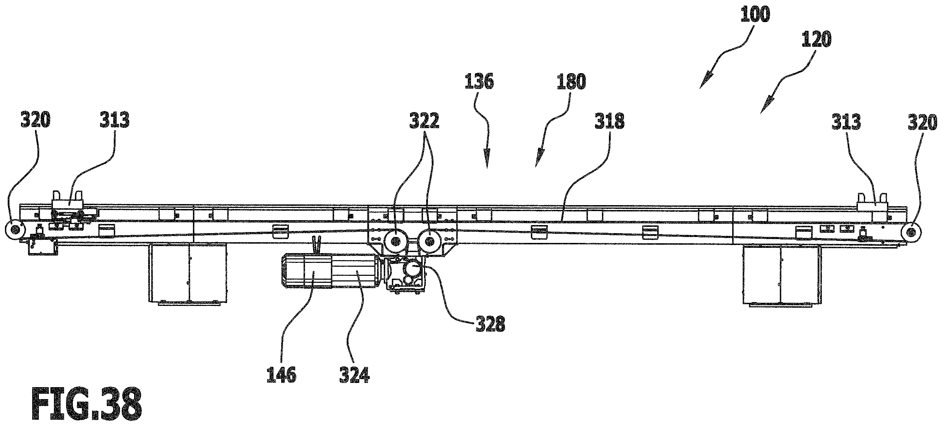

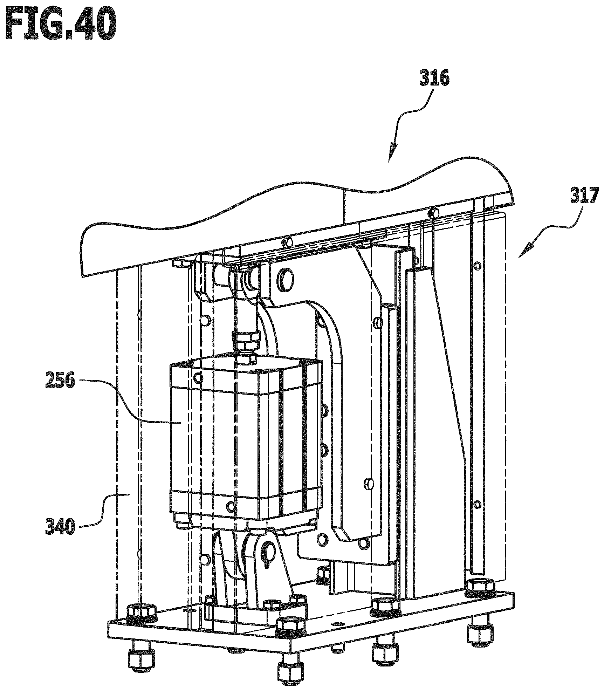

Eine in den Fig. 32 bis 41 dargestellte neunte Ausführungsform einer Fördervorrichtung 100 unterscheidet sich von der in den Fig. 1 bis 3 dargestellten ersten Ausführungsform im Wesentlichen dadurch, dass die Antriebsvorrichtung 136 mehrere Linearachsenantriebe 180 umfasst, welche formschlüssig mit der Werkstückaufnahmevorrichtung 114 koppelbar sind, um die Werkstückaufnahmevorrichtung 114 zusammen mit einem daran angeordneten Werkstück 102 längs der Förderrichtung 104 zu bewegen.

Die Linearachsenantriebe 180 sind dabei im Wesentlichen mittig zwischen den Rollenbahnen 112 der Rollenbahnvorrichtung 108 angeordnet.

Zur Kopplung eines Linearachsenantriebs 180 mit einer Werkstückaufnahmevorrichtung 114 ist ein Kopplungselement 313 des Linearachsenantriebs 180 vorgesehen.

Dieses Kopplungselement 313 des Linearachsenantriebs 180 kann mit einem Querträger 118 der Werkstückaufnahmevorrichtung 114 formschlüssig in Eingriff gebracht werden.

Der Querträger 118 der Werkstückaufnahmevorrichtung 114 bildet somit ein Kopplungselement 315 der Werkstückaufnahmevorrichtung 114 zur Kopplung desselben mit dem Linearachsenantrieb 180.

Das Kopplungselement 313 des Linearachsenantriebs 180 ist beispielsweise U-förmig ausgebildet und entgegen der Schwerkraftrichtung g von unten mit dem Querträger 118 der Werkstückaufnahmevorrichtung 114 in Eingriff bringbar.

Das Kopplungselement 313 des Linearachsenantriebs 180 umfasst zwei im Wesentlichen vertikal ausgerichtete Schenkel 314. In einer gekoppelten Stellung des Linearachsenantriebs 180 mit der Werkstückaufnahmevorrichtung 114 ist ein Schenkel 314 bezüglich der Förderrichtung 104 direkt vor dem als Kopplungselement 315 dienenden Querträger 118 der Werkstückaufnahmevorrichtung 114 angeordnet. Der weitere Schenkel 314 ist bezüglich der Förderrichtung 104 direkt hinter dem als Kopplungselement 315 dienenden Querträger 118 der Werkstückaufnahmevorrichtung 114 angeordnet.

Um das Kopplungselement 313 des Linearachsenantriebs 180 mit dem Kopplungselement 315 der Werkstückaufnahmevorrichtung 114 in Eingriff zu bringen, ist das Kopplungselement 313 des Linearachsenantriebs 180 in Schwerkraftrichtung g und entgegen der Schwerkraftrichtung g bewegbar.

Der Linearachsenantrieb 180 umfasst hierzu eine Bewegungsvorrichtung 316, mittels welcher der Linearachsenantrieb 180, insbesondere ein auf Rollen geführtes Bandelement 318 des Linearachsenantriebs 180, an welchem das Kopplungselement 313 angeordnet ist, bezüglich der Schwerkraftrichtung g nach oben und nach unten bewegbar ist.

Die Bewegungsvorrichtung 316 ist insbesondere eine Hubvorrichtung 317, welche insbesondere eine Druckzylindervorrichtung 256 umfasst.

Die Druckzylindervorrichtung 256 ist insbesondere ein Pneumatikzylinder.

Vorzugsweise umfasst ein Linearachsenantrieb 180 zwei Bewegungsvorrichtungen 316.

Eine Bewegungsvorrichtung 316 ist dann vorzugsweise als ein Festlager ausgeführt, während die weitere Bewegungsvorrichtung 316 vorzugsweise als ein Loslager ausgeführt ist. Auf diese Weise kann ein unerwünschtes Verspannen des Linearachsenantriebs 180 bei der Betätigung der Bewegungsvorrichtungen 316, insbesondere bei einer ungleichmäßigen Betätigung der Bewegungsvorrichtungen 316, vermieden werden.

Mittels einer oder mehrerer Bewegungsvorrichtungen 316 sind vorzugsweise zwei Endrollen 320, über welche das Bandelement 318 des Linearachsenantriebs 180 geführt ist, bezüglich der Schwerkraftrichtung g nach oben und nach unten bewegbar.

Die beiden Endrollen 320 sind insbesondere diejenigen Rollen, zwischen welchen ein Bewegungsbereich des Kopplungselements 313 und somit eine Förderstrecke des Linearachsenantriebs 180 angeordnet ist.

Zusammen mit den Endrollen 320 und dem zwischen den beiden Endrollen 320 geführten Abschnitt des Bandelements 318 ist vorzugsweise auch das Kopplungselement 313 bezüglich der Schwerkraftrichtung g nach oben und nach unten bewegbar.

Weitere als Umlenkrollen 322 bezeichnete Rollen sowie eine Antriebsrolle 328 des Linearachsenantriebs 180 dienen der Kopplung des Bandelements 318 mit einem Antriebsmotor 324, insbesondere einem Elektromotor 146.

Die Umlenkrollen 322 sind insbesondere Spannrollen, mittels welchen das Bandelement 318 spannbar ist.

Die Umlenkrollen 322 und die Antriebsrolle 328 sind vorzugsweise im Wesentlichen ortsfest, insbesondere auch bei einer Betätigung der einen oder der mehreren Bewegungsvorrichtungen 316.

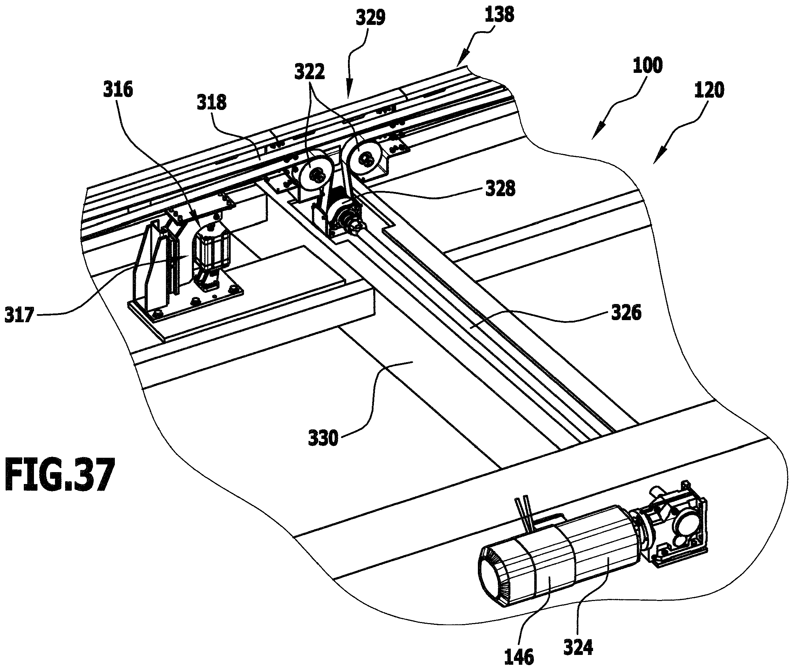

Wie insbesondere den Fig. 32 und 37 zu entnehmen ist, ist der Antriebsmotor 324 mittels einer Welle 326 mit der Antriebsrolle 328 gekoppelt, um das Bandelement 318 anzutreiben.

Das Bandelement 318 ist um die Antriebsrolle 328 herumgeführt und insbesondere reibschlüssig und/oder formschlüssig mit derselben verbunden, so dass das Bandelement 318 mittels der Antriebsrolle 328 und des Antriebsmotors 324 antreibbar ist.

Die Endrollen 320, die Umlenkrollen 322 und die Antriebsrolle 328 sind insbesondere Bestandteil eines als Riemenantrieb 138 und/oder als Omegaantrieb 329 ausgebildeten Linearachsenantriebs 180.

Die Welle 326 ist insbesondere als eine Kardanwelle ausgebildet, so dass Drehmomente auch schräg zu einer Rotationsachse der Antriebsrolle 328 von dem Antriebsmotor 324 auf die Antriebsrolle 328 übertragbar sind.

Der Antriebsmotor 324 ist insbesondere außerhalb eines Behandlungsbereichs 122 der Werkstückbehandlungsanlage 120 angeordnet.

Vorzugsweise sind die Welle 326 und die Antriebsrolle 328 zumindest abschnittsweise innerhalb eines Querträgers 330 der Werkstückbehandlungsanlage 120 angeordnet.

Der Querträger 330 ist dabei insbesondere ein Bestandteil einer tragenden Struktur, insbesondere eines Bodenbereichs, eines Behandlungsbereichs 122 der Werkstückbehandlungsanlage 120. Beispielsweise ist der Querträger 330 Bestandteil eines Bodens einer Lackierkabine der Werkstückbehandlungsanlage 120.

Durch die beschriebene Ausgestaltung des Linearachsenantriebs 180 kann vorzugsweise eine niedrige Förderhöhe der Fördervorrichtung 100 realisiert werden, wodurch eine kostenintensive Kröpfung der Werkstückaufnahmevorrichtung 114 vorzugsweise entbehrlich ist.

Vorzugsweise sind das Bandelement 318, die Endrollen 320, die Umlenkrollen 322, die Antriebsrolle 328 und/oder die Welle 326 im Betrieb der Fördervorrichtung 100 abgedeckt, insbesondere mit (noch zu beschreibenden) Abdeckelementen versehen und/oder innerhalb von weiteren Bauteilen der Fördervorrichtung 100 oder der Werkstückbehandlungsanlage 120 angeordnet, insbesondere geführt.

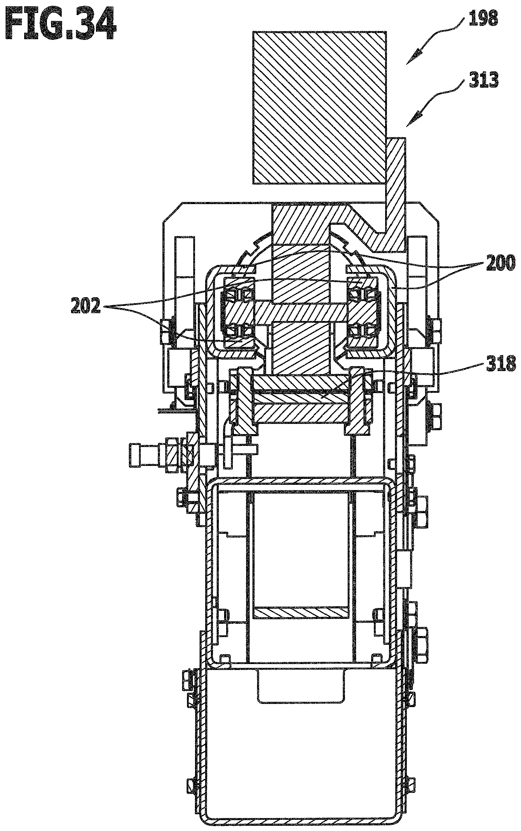

Wie beispielsweise Fig. 34 zu entnehmen ist, ist das Kopplungselement 313 zur Kopplung des Linearachsenantriebs 180 mit der Werkstückaufnahmevorrichtung 114 an dem Bandelement 318 festgelegt, beispielsweise angeklemmt und/oder formschlüssig mit dem Bandelement 318 verbunden.

Wie insbesondere aus einem Vergleich der Fig. 25 und 34 hervorgeht, sind auch bei der in den Fig. 32 bis 41 dargestellten neunten Ausführungsform der Fördervorrichtung 100 zwei C-förmige Führungsschienen 200 angeordnet, in welchen zwei oder mehr Rollen 202 verfahrbar gelagert sind.

Das Kopplungselement 313 gemäß der neunten Ausführungsform der Fördervorrichtung 100 ist somit ebenfalls als ein Transportwagen 198 ausgebildet.

Allerdings unterscheidet sich der Transportwagen 198 gemäß der neunten Ausführungsform der Fördervorrichtung 100 von der in den Fig. 24 und 25 dargestellten Ausführungsform dadurch, dass die Kopplung zwischen der Werkstückaufnahmevorrichtung 114 und der Antriebsvorrichtung 136 nicht im Bereich des Bandelements 318, das heißt im Bereich des Riemens 142, erfolgt.

Vielmehr ist der Transportwagen 198 bei der in den Fig. 32 bis 41 dargestellten neunten Ausführungsform ein fester Bestandteil der Antriebsvorrichtung 136 und wahlweise direkt und unmittelbar mit der Werkstückaufnahmevorrichtung 114 in Eingriff bringbar.

Bei der in den Fig. 24 und 25 dargestellten achten Ausführungsform der Fördervorrichtung 100 ist der Transportwagen 198 hingegen ein fester Bestandteil der Werkstückaufnahmevorrichtung 114.

Der Transportwagen 198 kann einerseits zwischen den Endrollen 320 bidirektional hin- und herfahrbar sein.

Alternativ oder ergänzend hierzu kann vorgesehen sein, dass der Transportwagen 198 ähnlich dem in den Fig. 1 bis 3 dargestellten Beschleunigungselement 150 zusammen mit dem Bandelement 318 (Riemen 142) um sämtliche Rollen 320, 322, 328 herumführbar ist.

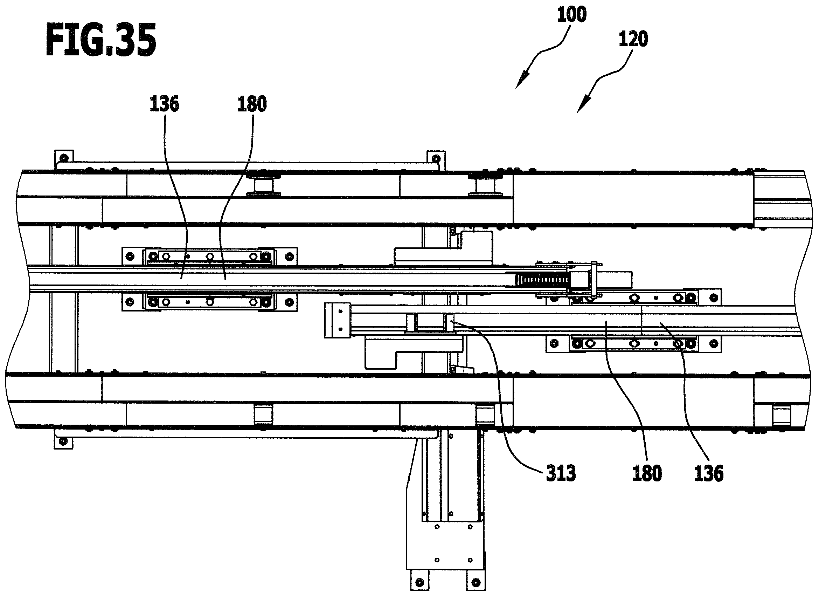

In Fig. 35 sind zwei Linearachsenantriebe 180 in einer Draufsicht von oben dargestellt.

Die Linearachsenantriebe 180 überlappen einander bezüglich der Förderrichtung 104, so dass eine Werkstückaufnahmevorrichtung 114 mittels eines ersten Linearachsenantriebs 180 in eine Übergabeposition bringbar und von dort mittels des weiteren Linearachsenantriebs 180 weitertransportierbar ist.

Aufgrund der formschlüssigen Verbindung zwischen dem Kopplungselement 313 des Linearachsenantriebs 180 und der Werkstückaufnahmevorrichtung 114 kann die Werkstückaufnahmevorrichtung 114 samt eines daran angeordneten Werkstücks 102 mittels des Linearachsenantriebs 180 in einer definierten Stoppposition, insbesondere in der Übergabeposition, zum Stillstand gebracht werden. Eine zeitaufwendige zusätzliche Positionierung der Werkstückaufnahmevorrichtung 114 ist dann vorzugsweise entbehrlich.

Insbesondere während der Bearbeitung oder Behandlung eines an der Werkstückaufnahmevorrichtung 114 angeordneten Werkstücks 102 wird der erste Linearachsenantrieb 180 vorzugsweise mit der Werkstückaufnahme 114 außer Eingriff gebracht.

Insbesondere ist der erste Linearachsenantrieb 180 hierzu mittels einer Bewegungsvorrichtung 316 in der Schwerkraftrichtung g nach unten bewegbar, um das Kopplungselement 313 mit dem Querträger 118 der Werkstückaufnahmevorrichtung 114 außer Eingriff zu bringen.

Der weitere Linearachsenantrieb 180 wird währenddessen oder im Anschluss daran mit der Werkstückaufnahmevorrichtung 114 in Eingriff gebracht.

Insbesondere wird der weitere Linearachsenantrieb 180 hierbei mittels mindestens einer Bewegungsvorrichtung 316 entgegen der Schwerkraftrichtung g nach oben bewegt.

Dabei gelangt das Kopplungselement 313 des weiteren Linearachsenantriebs 180 mit dem Querträger 118 der Werkstückaufnahmevorrichtung 114 in Eingriff.

Nach erfolgter Bearbeitung oder Behandlung des an der Werkstückaufnahmevorrichtung 114 angeordneten Werkstücks 102 kann die Werkstückaufnahmevorrichtung 114 samt des daran angeordneten Werkstücks 102 mittels des weiteren Linearachsenantriebs 118 weiter gefördert werden.

Die Übergabeposition ist somit vorzugsweise in einem Behandlungsbereich 122 der Werkstückbehandlungsanlage 120 angeordnet.

Wie insbesondere Fig. 35 zu entnehmen ist, sind die Linearachsenantriebe 180 in dem überlappenden Bereich versetzt zueinander und außermittig angeordnet.

Vorzugsweise sind die Linearachsenantriebe 180 modular aufgebaut und insbesondere hinsichtlich ihrer Länge, das heißt der Erstreckungsrichtung längs der Förderrichtung 104, variabel und/oder anpassbar.

Vorzugsweise erstreckt sich ein Linearachsenantrieb 180 zwischen zwei Behandlungsbereichen 122 der Werkstückbehandlungsanlage 120, so dass eine Werkstückaufnahmevorrichtung 114 samt eines daran angeordneten Werkstücks 102 mittels eines Linearachsenantriebs 180 von einem Behandlungsbereich 122 zu einem weiteren Behandlungsbereich 122 förderbar ist.

Ein Linearachsenantrieb 180 kann beispielsweise in drei Teile eingeteilt werden. Ein mittlerer Teil ist insbesondere derjenige Teil, welcher die Umlenkrollen 322, die Antriebsrolle 328, die Welle 326 und den Antriebsmotor 324 umfasst.

Die beiden weiteren Teile sind insbesondere durch die Endrollen 320 und deren Abstände von den Umlenkrollen 322 vorgegeben.

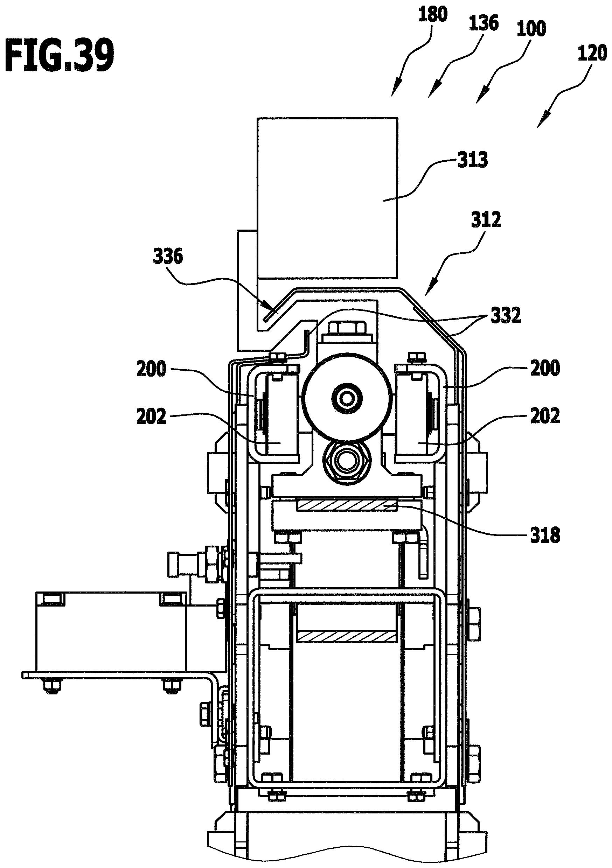

Wie insbesondere den Fig. 39, 41 und 42 zu entnehmen ist, weist die Antriebsvorrichtung 136, insbesondere der Linearachsenantrieb 180, vorzugsweise eine Abdeckungsvorrichtung 312 auf.

Die Abdeckungsvorrichtung 312 dient insbesondere dem Schutz der Bauteile des Linearachsenantriebs 180, insbesondere der Rollen 320, 322, 328 und des Bandelements 318, vor unerwünschten Verunreinigungen.

Die Abdeckungsvorrichtung 312 umfasst hierzu insbesondere mehrere Abdeckelemente 332, mittels welchen insbesondere eine Labyrinthdichtung gebildet ist.

Das Kopplungselement 313 ist insbesondere im Wesentlichen C-förmig oder im Wesentlichen S-förmig ausgebildet und ragt zwischen den Abdeckelementen 332 hindurch, um einen optimalen Schutz der mittels der Abdeckungsvorrichtung 312 zu schützenden Elemente zu gewährleisten.

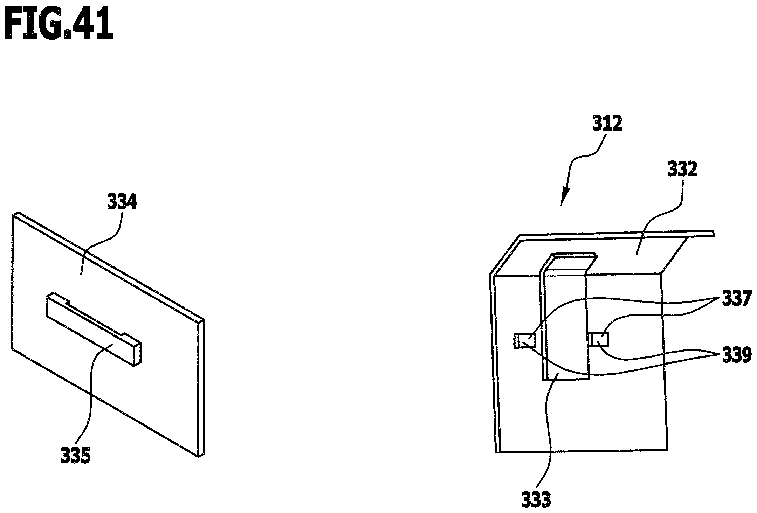

Wie insbesondere Fig. 41 zu entnehmen ist, umfasst die Abdeckungsvorrichtung 312 insbesondere steckbare Abdeckelemente 332, welche durch Einstecken einfach in Aufnahmeelemente 334 der Abdeckungsvorrichtung 312 einbringbar sind.

Insbesondere sind dabei Laschen 333 der Abdeckelemente 332 und hierzu korrespondierende Aufnahmen 335 der Aufnahmeelemente 334 sowie als Positionierhilfen 337 ausgebildete Anschläge 339 zur einfachen und korrekten Positionierung, insbesondere in vertikaler Richtung, vorgesehen.

Vorzugsweise sind die Abdeckelemente 332 einfach aus den Aufnahmeelementen 334 entfernbar, um die Abdeckelemente 332 reinigen zu können und/oder um einfach Zugang zu den mittels der Abdeckungsvorrichtung 312 geschützten Bauteilen der Antriebsvorrichtung 136 zu erhalten.

Die Abdeckelemente 332 sind insbesondere einfach auswechselbar und/oder bei Bedarf außerhalb eines Behandlungsbereichs 122 der Werkstückbehandlungsanlage 120 reinigbar.

Ferner kann vorgesehen sein, dass die Abdeckelemente 332 innerhalb eines Behandlungsbereichs 122 der Werkstückbehandlungsanlage 120, insbesondere im montierten Zustand der Abdeckelemente 332 an den Aufnahmeelementen 334, reinigbar sind.

Ein Spalt 336 zwischen zwei Abdeckelementen 332, durch welchen das Kopplungselement 313 hindurchgeführt ist, kann beispielsweise mittels einer Dichtlippe 338 verschlossen werden, insbesondere in denjenigen Bereichen, in welchen das Kopplungselement 313 gerade nicht angeordnet ist.

Die Dichtlippe 338 erstreckt sich insbesondere über die gesamte Länge des Linearachsenantriebs 180 und/oder über die gesamte Länge eines oder mehrerer Behandlungsbereiche 122 längs der Förderrichtung 104 hinweg.

Vorzugsweise wird die Dichtlippe 338 mittels des Kopplungselements 313 lokal betätigt, insbesondere angehoben oder weggedrückt, so dass das Kopplungselement 313 in diesem lokalen Bereich durch den Spalt 336 hindurchragt.

Im Übrigen liegt die Dichtlippe 338 zur Abdichtung des Spalts 336 abdichtend auf den Abdeckelementen 332 auf.

Die Dichtlippe 338 kann beispielsweise aus einem flexiblen Kunststoffmaterial gebildet sein.

Eine unerwünschte Verschmutzung der Bewegungsvorrichtung 316, insbesondere der Druckzylindervorrichtung 256 einer Bewegungsvorrichtung 316, wird vorzugsweise dadurch vermieden, dass die Bewegungsvorrichtung 316 mehrere, beispielsweise zwei, relativ zueinander bewegliche Gehäuseteile 340 umfasst.

Die Gehäuseteile 340 sind beispielsweise als Blechkästen ausgebildet.

Vorzugsweise sind die Gehäuseteile 340 einander überlappend angeordnet und relativ zueinander bewegbar.

Bei einer Bewegung der Bewegungsvorrichtung 316, insbesondere der Druckzylindervorrichtung 256, wird vorzugsweise ein bewegbares Gehäuseteil 340 relativ zu einem ortsfesten Gehäuseteil 340 bewegt, wobei durch die überlappende Anordnung der Gehäuseteile 340 ein unerwünschtes Eindringen von Verunreinigungen in die Bewegungsvorrichtung 316 vermieden wird.

Im Übrigen stimmt die in den Fig. 32 bis 41 beschriebene neunte Ausführungsform der Fördervorrichtung 100 hinsichtlich Aufbau und Funktion mit der in den Fig. 1 bis 3 dargestellten ersten Ausführungsform überein, so dass auf deren vorstehende Beschreibung insoweit Bezug genommen wird.

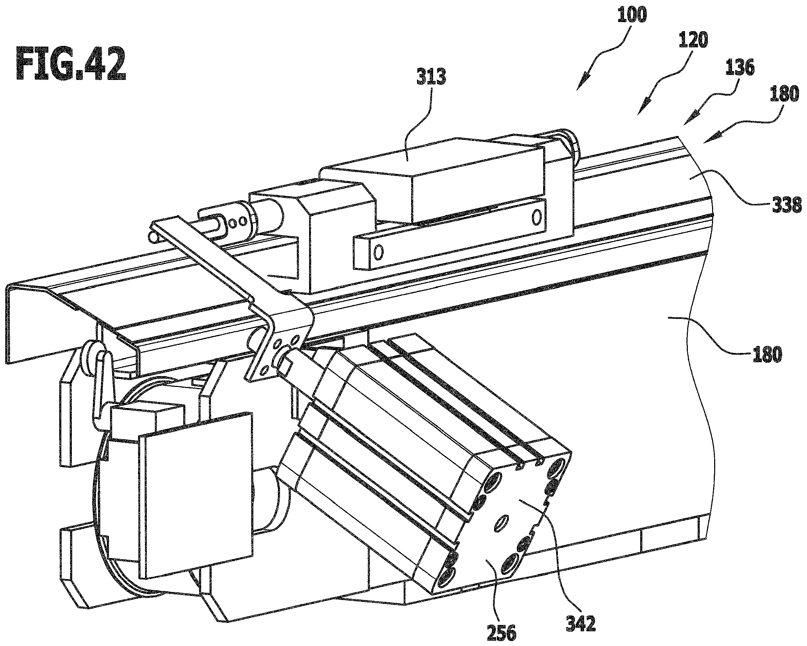

In Fig. 42 ist eine alternative Ausführungsform eines Kopplungselements 313 dargestellt, welches mittels einer Betätigungsvorrichtung 342, insbesondere einer Druckzylindervorrichtung 256, betätigbar ist.

Das Kopplungselement 313 ist dabei insbesondere in eine Eingriffstellung, in welcher das Kopplungselement 313 mit der Werkstückaufnahmevorrichtung 114 in Eingriff ist, und in eine Ruhestellung, in welcher das Kopplungselement 313 mit der Werkstückaufnahmevorrichtung 114 außer Eingriff ist, bringbar.

Das Kopplungselement 313 ist insbesondere um eine im Wesentlichen horizontale und/oder parallel zur Förderrichtung 104 angeordnete Achse drehbar oder schwenkbar.

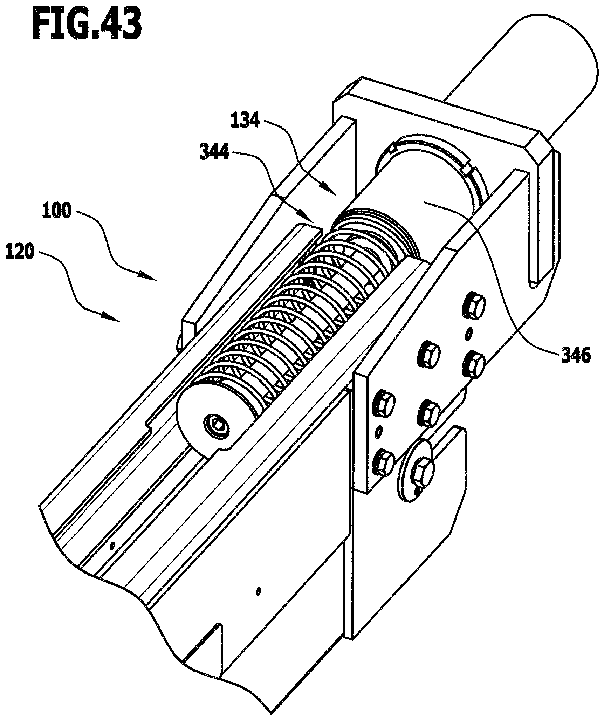

Insbesondere zum Schutz der Fördervorrichtung 100, der Werkstückaufnahmevorrichtung 114 und/oder des Werkstücks 102 in einem Störfall, beispielsweise einem Steuerungsfehler und/oder einem Reißen des Bandelements 318, umfasst die Fördervorrichtung 100 vorzugsweise eine Arretiervorrichtung 344 (siehe Fig. 43).

Mittels der Arretiervorrichtung 344 ist insbesondere die Werkstückaufnahmevorrichtung 114 samt des daran angeordneten Werkstücks 102 gezielt abbremsbar.

Die Arretiervorrichtung 344 kann beispielsweise eine Bremsvorrichtung 134 oder eine von der Bremsvorrichtung 134 verschiedene Vorrichtung sein.

Bei der in Fig. 43 dargestellten Ausführungsform der Arretiervorrichtung 344 umfasst diese eine Stoßdämpfungsvorrichtung 346.

Die Stoßdämpfungsvorrichtung 346 kann insbesondere einen Industriestoßdämpfer umfassen.

Vorzugsweise ist die Arretiervorrichtung 344 an einem bezüglich der Förderrichtung 104 hinteren Ende eines Linearachsenantriebs 180 angeordnet, so dass eine Werkstückaufnahmevorrichtung 114 samt eines daran angeordneten Werkstücks 102 mittels der Arretiervorrichtung 344 abbremsbar ist, wenn dieses in der Förderrichtung 104 bewegt wird und aufgrund eines Störfalls nicht rechtzeitig zum Stillstand kommt.

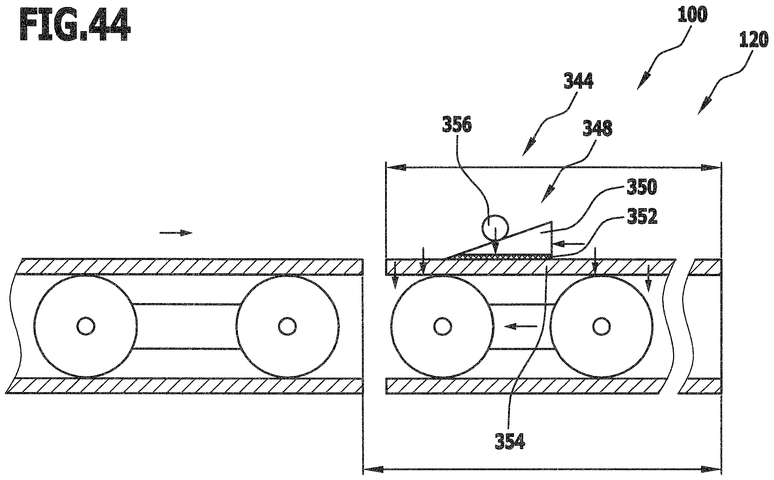

Bei einer alternativen Ausgestaltung der Arretiervorrichtung 344, welche in Fig. 44 dargestellt ist, umfasst die Arretiervorrichtung 344 eine Keilbremsenvorrichtung 348.

Wie beispielsweise bei einem Personenaufzug ist dabei vorzugsweise eine zusätzliche Bremsstrecke vorgesehen, welche sich an eine im Normalbetrieb des Linearachsenantriebs 180 verwendete Transportstrecke in der Förderrichtung 104 anschließt und dem Anhalten der Werkstückaufnahmevorrichtung 114 mittels der Keilbremsenvorrichtung 348 dient.

Durch diesen zusätzlichen Bremsweg können die Bremskräfte beim Anhalten der Werkstückaufnahmevorrichtung 114 und des daran angeordneten Werkstücks 102 vorzugsweise stark reduziert werden.

Die Keilbremsenvorrichtung 348 umfasst insbesondere einen Bremskeil 350, welcher einen Bremsbelag 352 umfasst und an ein Bremsscheibenelement 354 anlegbar ist.

Eine Lagerung 356 der Keilbremsenvorrichtung 348 sorgt dafür, dass der Bremskeil 350 und somit der Bremsbelag 352 an das Bremsscheibenelement 354 angepresst werden.

Grundsätzlich können hierbei die Lagerung 356, der Bremskeil 350 und/oder das Bremsscheibenelement 354 senkrecht zur Förderrichtung 104 bewegbar sein, um den zum Bremsen erforderlichen Anpressdruck zu erzeugen.

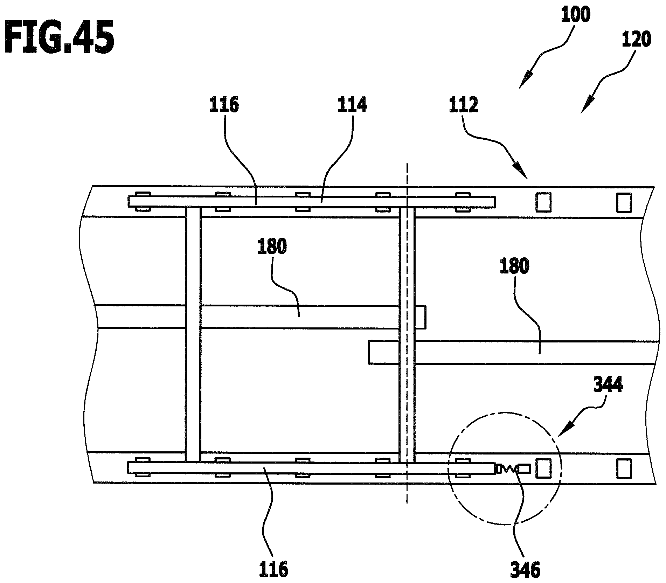

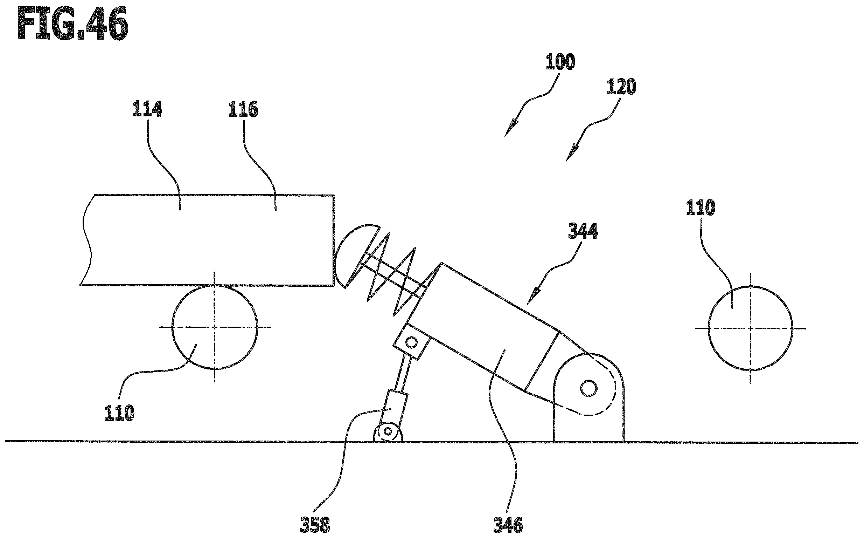

Eine in den Fig. 45 und 46 dargestellte weitere alternative Ausführungsform einer Arretiervorrichtung 344 unterscheidet sich von der in Fig. 43 dargestellten Ausführungsform im Wesentlichen dadurch, dass die Stoßdämpfungsvorrichtung 346 mittels einer Aktivierungsvorrichtung 358 bei Bedarf in einen Bewegungsweg 156 der Werkstückaufnahmevorrichtung 114, insbesondere einer Kufe 116 und/oder eines Querträgers 118 der Werkstückaufnahmevorrichtung 114, hineinschwenkbar oder hineinklappbar ist.

Im Falle eines Störfalls kann die Arretiervorrichtung 344 gemäß der in den Fig. 45 und 46 dargestellten Ausführungsform somit gezielt aktiviert werden.

Diese Arretiervorrichtung 344 kann in mehrfacher Ausfertigung an verschiedenen Stellen eines Linearachsenantriebs 180 vorgesehen sein, insbesondere dann, wenn die Arretiervorrichtung 344 in einem passiven Zustand nicht in einen Bewegungsweg 156 der Werkstückaufnahmevorrichtung 114 hineinragt und somit im Normalbetrieb der Fördervorrichtung 100 nicht hinderlich ist. Das eigentliche Abbremsen der Werkstückaufnahmevorrichtung 114 samt des daran angeordneten Werkstücks 102 erfolgt bei der in den Fig. 45 und 46 dargestellten Ausführungsform der Arretiervorrichtung 344 vorzugsweise im Wesentlichen so wie bei der Bremsvorrichtung 134, welche beispielsweise in Bezug auf die Fig. 11 bis 16 beschrieben wurde.

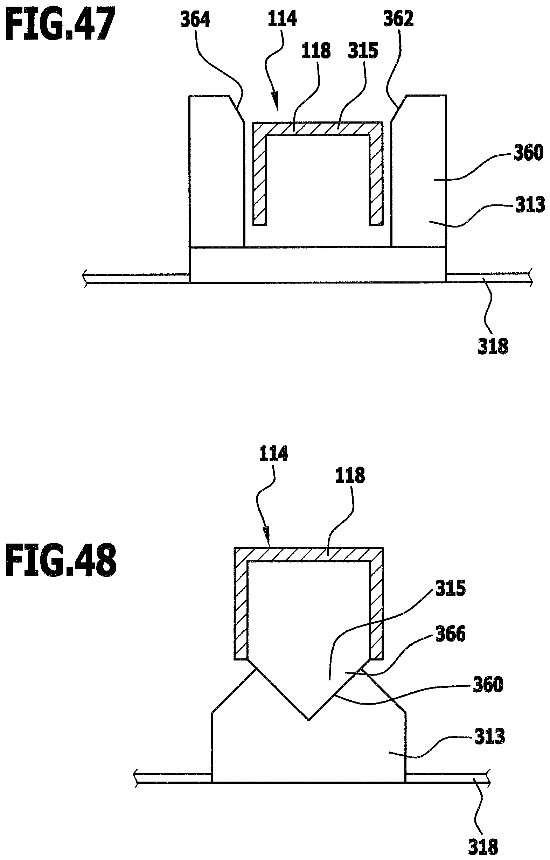

In den Fig. 47 bis 52 sind verschiedene Ausgestaltungen von Kopplungselementen 313, 315 dargestellt.

Vorzugsweise ist mittels derartiger Kopplungselemente 313, 315 eine sanfte Kopplung, insbesondere ein sanftes Einhaken, der Antriebsvorrichtung 136 mit der Werkstückaufnahmevorrichtung 114 möglich.

Zur Optimierung kann ferner eine (noch zu beschreibende) Federvorrichtung vorgesehen sein.

Gemäß Fig. 47 umfasst das Kopplungselement 313 eine im Wesentlichen quaderförmige Aufnahme 360, welche mit zwei schrägen Einlaufflächen 362 versehen ist.

Die Aufnahme 360 weist somit einen im Wesentlichen trichterförmigen Abschnitt 364 auf.

Die Aufnahme 360 ist im Wesentlichen komplementär zu einem Querträger 118 einer Werkstückaufnahmevorrichtung 114 ausgebildet, so dass der Querträger 118 das Kopplungselement 315 der Werkstückaufnahmevorrichtung 114 bildet und in der Aufnahme 360 des Kopplungselements 313 der Antriebsvorrichtung 136 aufnehmbar ist.

Mittels des trichterförmigen Abschnitts 364 ist der Querträger 118 besonders einfach und gezielt mit der Aufnahme 360 in Eingriff bringbar.

Bei der in Fig. 48 dargestellten Variante umfasst das Kopplungselement 313 der Antriebsvorrichtung 136 eine Aufnahme 360, die einen im Wesentlichen dreiecksförmigen Querschnitt umfasst. Ein hierzu korrespondierender im Wesentlichen dreiecksförmiger Vorsprung 366 der Werkstückaufnahmevorrichtung 114 ermöglicht eine formschlüssige Verbindung zwischen der Antriebsvorrichtung 136 und der Werkstückaufnahmevorrichtung 114.

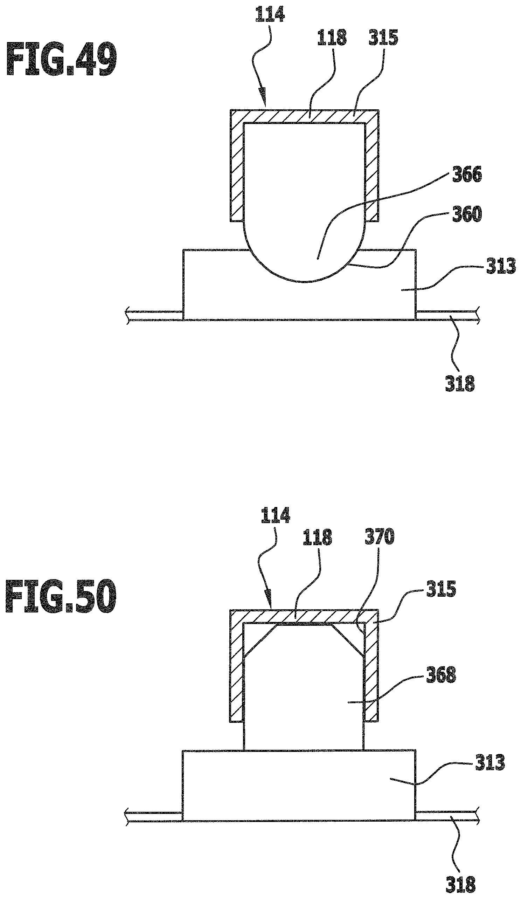

Gemäß Fig. 49 ist eine Aufnahme 360 des Kopplungselements 313 vorgesehen, welche einen im Wesentlichen kreissegmentförmigen Querschnitt aufweist. Ein hierzu korrespondierender beispielsweise halbzylindrischer Vorsprung 366 der Werkstückaufnahmevorrichtung 114 ist vorgesehen, um eine zuverlässige Verbindung zwischen der Antriebsvorrichtung 136 und der Werkstückaufnahmevorrichtung 114 zu ermöglichen.

Gemäß Fig. 50 ist ein Vorsprung 368 des Kopplungselements 313 der Antriebsvorrichtung 136 vorgesehen, mittels welchem das Kopplungselement 313 in eine Aufnahme 370 der Werkstückaufnahmevorrichtung 114, insbesondere eines Querträgers 118 der Werkstückaufnahmevorrichtung 114, einführbar ist.

Die Aufnahme 370 ist beispielsweise durch eine im Wesentlichen C-förmige Ausgestaltung des Querträgers 118 gebildet, wobei der Querträger 118 insbesondere bezüglich der Schwerkraftrichtung nach unten hin geöffnet ist, um die Aufnahme des Vorsprungs 368 des Kopplungselements 313 der Antriebsvorrichtung 136 zu ermöglichen.

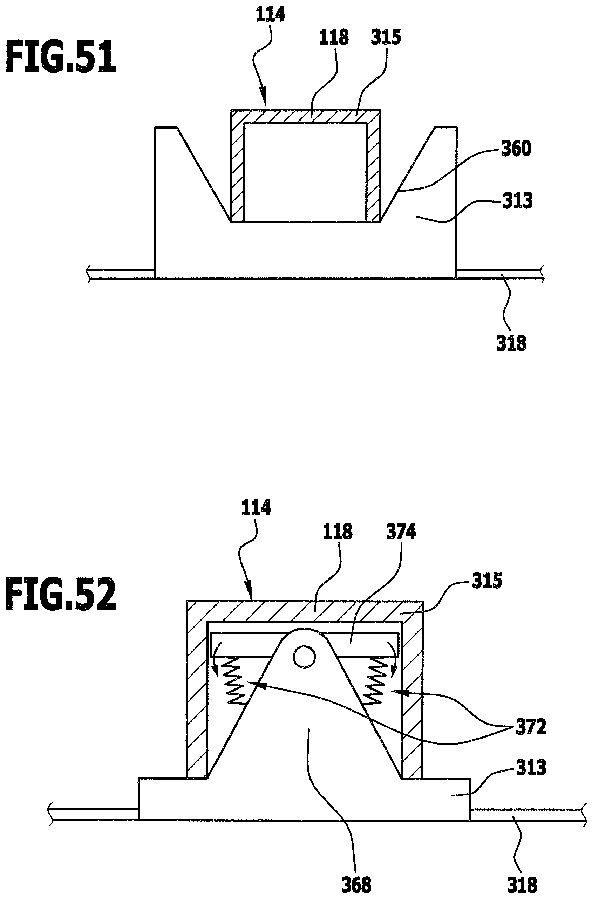

Gemäß Fig. 51 ist eine Aufnahme 360 des Kopplungselements 313 der Antriebsvorrichtung 136 vorgesehen, welche einen im Wesentlichen trapezförmigen Querschnitt aufweist und der Aufnahme des Querträgers 118 der Werkstückaufnahmevorrichtung 114 dient.

Gemäß Fig. 52 ist ein Vorsprung 368 des Kopplungselements 313 der Antriebsvorrichtung 136 vorgesehen, welcher mit einer Aufnahme 370 des Querträgers 118 der Werkstückaufnahmevorrichtung 114 in Eingriff bringbar ist.

Der Vorsprung 368 des Kopplungselements 313 der Antriebsvorrichtung 136 ist insbesondere mit einer Federvorrichtung 372 und einem plattenförmigen oder stabförmigen Eingriffelement 374 versehen.

Das Eingriffelement 374 ist drehbar oder schwenkbar an dem Vorsprung 368 des Kopplungselements 313 angeordnet und mittels der Federvorrichtung 372 in einer bevorzugten Stellung anordenbar oder haltbar.

Die bevorzugte Stellung ist insbesondere eine im Wesentlichen horizontale Stellung des Eingriffelements 374.

Die Verwendung eines mittels einer Federvorrichtung 372 schwenkbar angeordneten Eingriffelements 374 ermöglicht insbesondere ein schräges Einführen des Kopplungselements 313 der Antriebsvorrichtung 136 in die Aufnahme 370 des Querträgers 118 und ein anschließendes exaktes Positionieren des Querträgers 118 relativ zu dem Kopplungselement 313, nämlich durch horizontale Ausrichtung des Eingriffelements 374 mittels der Federvorrichtung 372.

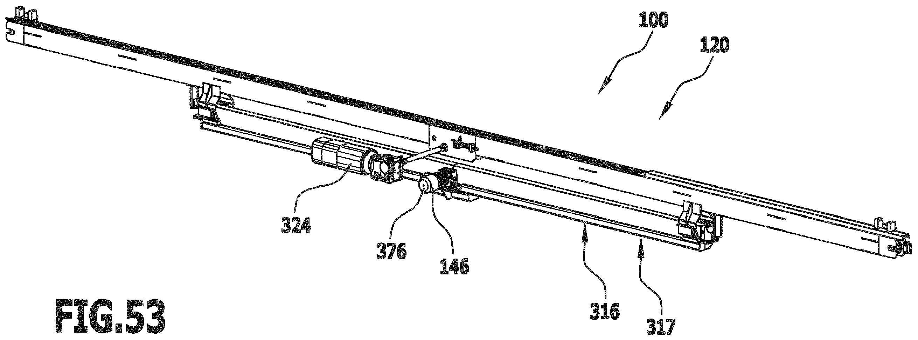

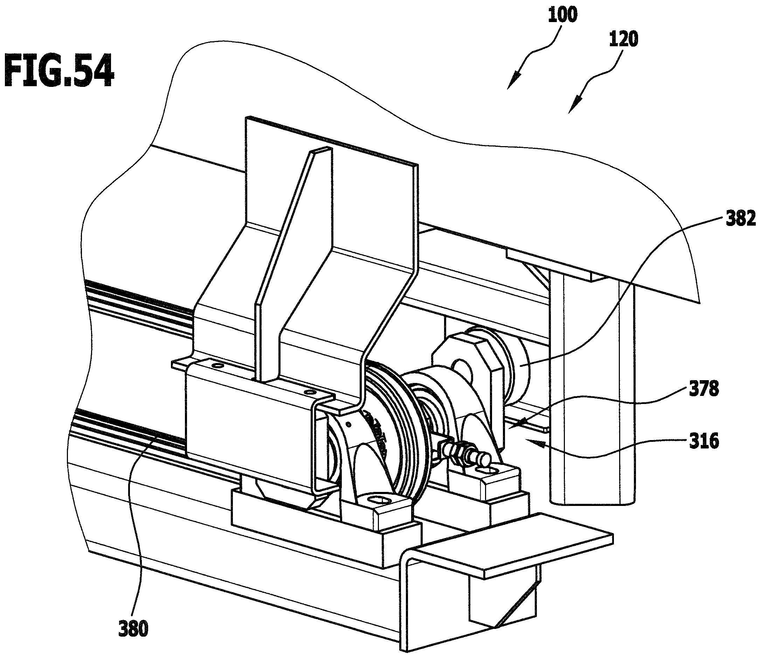

Eine in den Fig. 53 und 54 dargestellte alternative Ausführungsform einer Bewegungsvorrichtung 316 unterscheidet sich von der Bewegungsvorrichtung 316 gemäß der neunten Ausführungsform (Fig. 32 bis 41) im Wesentlichen dadurch, dass eine zentrale Antriebsvorrichtung 376, insbesondere ein Elektromotor 146, vorgesehen ist, um zwei Exzenterwellen 378 der Bewegungsvorrichtung 316 zu betätigen.

Zur Verbindung der zentralen Antriebsvorrichtung 376 mit den zwei Exzenterwellen 378 ist insbesondere eine Kette 380 oder alternativ auch ein Band oder ein Riemen vorgesehen.

Auch mittels der Bewegungsvorrichtung 316 gemäß der in den Fig. 53 und 54 dargestellten Ausführungsform ist der Linearachsenantrieb 180, insbesondere die Endrollen 320 und das Kopplungselement 313, bezüglich der Schwerkraftrichtung nach oben und nach unten bewegbar. Hierzu sind zwei exzentrisch an den Exzenterwellen 378 angeordnete Lagerelemente 382 vorgesehen, welche durch Drehen der Exzenterwellen 378 wahlweise anhebbar oder absenkbar sind.

Im Übrigen stimmt die in den Fig. 53 und 54 dargestellte Bewegungsvorrichtung 316 hinsichtlich Aufbau und Funktion mit der Bewegungsvorrichtung 316 gemäß der in den Fig. 32 bis 41 dargestellten neunten Ausführungsform der Fördervorrichtung 100 überein, so dass auf deren vorstehende Beschreibung insoweit Bezug genommen wird.

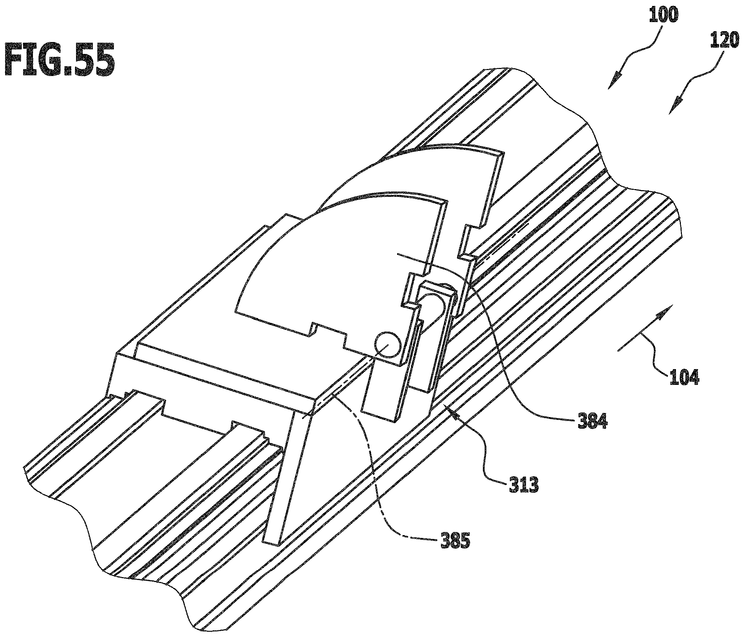

In Fig. 55 ist eine alternative Ausführungsform eines Kopplungselements 313 der Antriebsvorrichtung 136 dargestellt.

Bei diesem Kopplungselement 313 ist ein Schwenkelement 384 vorgesehen, welches wahlweise in eine Aktivstellung (in Fig. 55 dargestellt) und in eine Passivstellung (nicht dargestellt) schwenkbar ist.

Eine Schwenkachse 385 des Schwenkelements 384 ist insbesondere im Wesentlichen parallel zur Förderrichtung 104 oder im Wesentlichen horizontal und im Wesentlichen senkrecht zur Förderrichtung 104 ausgerichtet.

Das Schwenkelement 384 ist insbesondere in einer Endposition 126 des Kopplungselements 313, in welcher eine Entkopplung der Werkstückaufnahmevorrichtung 114 von der Antriebsvorrichtung 136 erfolgt, vorzugsweise mittels einer Führungskulisse, in die Passivstellung bringbar.

In einer Startposition 124 des Kopplungselements 313, in welcher eine Kopplung der Antriebsvorrichtung 136 mit einer Werkstückaufnahmevorrichtung 114 erfolgt, ist das Schwenkelement 384 insbesondere mittels einer Führungskulisse in die Aktivstellung bringbar.

In der Aktivstellung hintergreift das Schwenkelement 384 vorzugsweise die Werkstückaufnahmevorrichtung 114, insbesondere einen Querträger 118 der Werkstückaufnahmevorrichtung 114, um die Werkstückaufnahmevorrichtung 114 bei einer Bewegung des Kopplungselements 313 der Antriebsvorrichtung 136 in der Förderrichtung 104 ebenfalls in der Förderrichtung 104 zu bewegen.

## Patentansprüche

1. Fördervorrichtung (100) zum Fördern von Werkstücken (102) längs einer Förderrichtung (104), umfassend:
- eine Werkstückaufnahmevorrichtung (114), an welcher ein oder mehrere Werkstücke (102) anordenbar sind;
- eine Beschleunigungsvorrichtung (132), mittels welcher die Werkstückaufnahmevorrichtung (114) samt des einen oder der mehreren daran angeordneten Werkstücke (102) ausgehend von einer vorgegebenen Startposition (124) der Werkstückaufnahmevorrichtung (114) längs der Förderrichtung (104) beschleunigbar ist, wobei ein Beschleunigungselement (150) der Beschleunigungsvorrichtung (132) nach der Beschleunigung der Werkstückaufnahmevorrichtung (114) samt des einen oder der mehreren daran angeordneten Werkstücke (102) aus einer Endstellung in eine Ausgangsstellung bringbar ist, wobei die Beschleunigungsvorrichtung (132) eine Antriebsvorrichtung (136) umfasst, mittels welcher das Beschleunigungselement (150) längs eines Bewegungsweges (156) des Beschleunigungselements (150) alternierend vorwärts und rückwärts bewegbar ist;
- eine Bremsvorrichtung (134), mittels welcher die Werkstückaufnahmevorrichtung (114) samt des einen oder der mehreren daran angeordneten Werkstücke (102) an einer vorgegebenen Endposition (126) abbremsbar ist;
- eine Führungsvorrichtung (106), mittels welcher die Werkstückaufnahmevorrichtung (114) längs der Förderrichtung (104) führbar ist und mittels welcher die Gewichtskraft der Werkstückaufnahmevorrichtung (114) aufnehmbar ist,wobei die Beschleunigungsvorrichtung (132) und/oder die Bremsvorrichtung (134) eine von der Führungsvorrichtung (106) verschiedene Vorrichtung ist,
wobei die Fördervorrichtung (100) eine Positioniervorrichtung (250) zum Positionieren der Werkstückaufnahmevorrichtung (114) samt des einen oder der mehreren daran angeordneten Werkstücke (102) umfasst, wobei die Positioniervorrichtung (250) eine Schiebevorrichtung (252) und eine Blockiervorrichtung (254) umfasst,
wobei die Blockiervorrichtung (254) monodirektional blockierend ausgebildet ist, so dass die Werkstückaufnahmevorrichtung (114) samt des einen oder der mehreren daran angeordneten Werkstücke (102) in der Förderrichtung (104) an der Blockiervorrichtung (254) vorbeibewegbar ist, eine Bewegung der Werkstückaufnahmevorrichtung (114) samt des einen oder der mehreren daran angeordneten Werkstücke (102) in einer der Förderrichtung (104) entgegengesetzten Richtung jedoch blockierbar ist und
wobei die Werkstückaufnahmevorrichtung (114) samt des einen oder der mehreren daran angeordneten Werkstücke (102) mittels der Schiebevorrichtung (252) in einer der Förderrichtung (104) entgegengesetzten Richtung bewegbar und zwischen die Blockiervorrichtung (254) und die Schiebevorrichtung (252) einklemmbar ist,
**dadurch gekennzeichnet, dass** ein Blockierelement (288) der Blockiervorrichtung (254) beim Vorbeibewegen der Werkstückaufnahmevorrichtung (114) an der Blockiervorrichtung (254) um eine Rotationsachse (292) verschwenkbar und dabei aus dem Förderweg (260) herausbewegbar ist und
dass das Blockierelement (288) aufgrund der Wirkung einer Feder (294) der Blockiervorrichtung (254) erneut in den Förderweg (260) zurückschwenkbar ist, sobald die Werkstückaufnahmevorrichtung (114) an der Blockiervorrichtung (254) vorbeibewegt wurde.

2. Fördervorrichtung (100) nach Anspruch 1, **dadurch gekennzeichnet, dass** die Antriebsvorrichtung (136) eine Druckzylindervorrichtung (160), einen Riemen- oder Kettenantrieb (138), einen Linearachsenantrieb (180), einen Omegaantrieb (329) und/oder einen Reibradantrieb (188) umfasst.

3. Fördervorrichtung (100) nach einem der Ansprüche 1 oder 2, **dadurch gekennzeichnet,**
**dass** die Fördervorrichtung (100) eine Übernahmevorrichtung (128) umfasst, mittels welcher die Werkstückaufnahmevorrichtung (114) samt des einen oder der mehreren daran angeordneten Werkstücke (102) an der Startposition (124) von einer weiteren Fördervorrichtung (100) übernehmbar ist, und/oder
**dass** die Fördervorrichtung (100) eine Übergabevorrichtung (130) umfasst, mittels welcher die Werkstückaufnahmevorrichtung (114) samt des einen oder der mehreren daran angeordneten Werkstücke (102) an der Endposition (126) an eine weitere Fördervorrichtung (100) übergebbar ist.

4. Fördervorrichtung (100) nach einem der Ansprüche 1 bis 3, **dadurch gekennzeichnet, dass** die Fördervorrichtung (100) mindestens ein Transportelement (182) umfasst, welches von der Startposition (124) in die Endposition (126) bewegbar ist,
wobei die Werkstückaufnahmevorrichtung (114) samt des einen oder der mehreren daran angeordneten Werkstücke (102) an der Startposition (124) an dem Transportelement (182) festlegbar, insbesondere mittels des Transportelements (182) aufnehmbar, und an der Endposition (126) von dem Transportelement (182) entfernbar ist.

5. Fördervorrichtung (100) nach Anspruch 4, **dadurch gekennzeichnet, dass** das mindestens eine Transportelement (182) alternierend von der Startposition (124) zur Endposition (126) und von der Endposition (126) zur Startposition (124) bewegbar ist.

6. Fördervorrichtung (100) nach einem der Ansprüche 1 bis 5, **dadurch gekennzeichnet, dass** die Fördervorrichtung (100) mehrere Beschleunigungsvorrichtungen (132) und mehrere Bremsvorrichtungen (134) umfasst, welche bezüglich der Förderrichtung (104) in einer alternierenden Reihe aus Beschleunigungsvorrichtungen (132) und Bremsvorrichtungen (134) hintereinander angeordnet sind.

7. Fördervorrichtung (100) nach einem der Ansprüche 1 bis 6, **dadurch gekennzeichnet, dass** die Werkstückaufnahmevorrichtung (114) samt des einen oder der mehreren daran angeordneten Werkstücke (102) mittels einer Beschleunigungsvorrichtung (132) und einer Bremsvorrichtung (134) in einer vorgegebenen Position arretierbar ist.

8. Fördervorrichtung (106) nach einem der Ansprüche 1 bis 7, **dadurch gekennzeichnet, dass** die Schiebevorrichtung (252) und/oder die Blockiervorrichtung (254) zumindest abschnittsweise innerhalb und/oder unter einer Abdeckungsvorrichtung (312) zur Abdeckung von Auflageelementen (116) der Werkstückaufnahmevorrichtung (114) angeordnet ist.

9. Werkstückbehandlungsanlage (120), umfassend eine oder mehrere Fördervorrichtungen (100) nach einem der Ansprüche 1 bis 8.

10. Werkstückbehandlungsanlage (120) nach Anspruch 9, **dadurch gekennzeichnet, dass** die Startposition (124) und/oder die Endposition (126) mindestens einer Fördervorrichtung (100) in einem Behandlungsbereich (122) der Werkstückbehandlungsanlage (120) angeordnet ist.

11. Werkstückbehandlungsanlage (120) nach einem der Ansprüche 9 oder 10, **dadurch gekennzeichnet, dass** die Werkstückbehandlungsanlage (120) eine bezüglich der Förderrichtung (104) vor der mindestens einen Fördervorrichtung (100) angeordnete Vorfördervorrichtung (184) und/oder eine bezüglich der Förderrichtung (104) nach der mindestens einen Fördervorrichtung (100) angeordnete Nachfördervorrichtung (186) umfasst, wobei eine durchschnittliche Fördergeschwindigkeit der mindestens einen Fördervorrichtung (100) höher ist als eine durchschnittliche Fördergeschwindigkeit der Vorfördervorrichtung (184) und/oder der Nachfördervorrichtung (186).

12. Werkstückbehandlungsanlage (120) nach einem der Ansprüche 9 bis 11, **dadurch gekennzeichnet, dass** die Werkstückbehandlungsanlage (120) mehrere Fördervorrichtungen (100) umfasst, welche sich bezüglich der Förderrichtung (104) zumindest abschnittsweise überlappen.

13. Werkstückbehandlungsanlage (120) nach einem der Ansprüche 9 bis 12, **dadurch gekennzeichnet, dass** mindestens eine Fördervorrichtung (100) mindestens eine als Omegaantrieb (329) ausgebildete Antriebsvorrichtung (136) umfasst, welche eine Beschleunigungsvorrichtung (132) und/oder eine Bremsvorrichtung (134) bildet, wobei eine Antriebsrolle (328) des Omegaantriebs (329) innerhalb eines Querträgers (330) der Werkstückbehandlungsanlage (120) angeordnet ist.

14. Verfahren zum Fördern von Werkstücken (102) längs einer Förderrichtung (104) mittels einer Fördervorrichtung (100) nach einem der Ansprüche 1 bis 8,
wobei das Verfahren Folgendes umfasst:
- Anordnen eines oder mehrerer Werkstücke (102) an der Werkstückaufnahmevorrichtung (114);
- Anordnen der Werkstückaufnahmevorrichtung (114) samt des einen oder der mehreren daran angeordneten Werkstücke (102) an einer vorgegebenen Startposition (124);
- Beschleunigen der Werkstückaufnahmevorrichtung (114) samt des einen oder der mehreren daran angeordneten Werkstücke (102) längs der Förderrichtung (104) mittels der Beschleunigungsvorrichtung (132) der Fördervorrichtung (100) ausgehend von der Startposition (124), wobei das Beschleunigungselement (150) der Beschleunigungsvorrichtung (132) nach der Beschleunigung der Werkstückaufnahmevorrichtung (114) samt des einen oder der mehreren daran angeordneten Werkstücke (102) aus einer Endstellung in eine Ausgangsstellung gebracht wird;
- Abbremsen der Werkstückaufnahmevorrichtung (114) samt des einen oder der mehreren daran angeordneten Werkstücke (102) mittels der Bremsvorrichtung (134) der Fördervorrichtung (100) an einer vorgegebenen Endposition (126),
wobei die Führungsvorrichtung (106) die Werkstückaufnahmevorrichtung (114) längs der Förderrichtung (104) führt und die Gewichtskraft der Werkstückaufnahmevorrichtung (114) aufnimmt,
wobei die Beschleunigungsvorrichtung (132) und/oder die Bremsvorrichtung (134) eine von der Führungsvorrichtung (106) verschiedene Vorrichtung ist,
wobei die Werkstückaufnahmevorrichtung (114) samt des einen oder der mehreren daran angeordneten Werkstücke (102) mittels der Positioniervorrichtung (250), welche die Schiebevorrichtung (252) und die Blockiervorrichtung (254) umfasst, positioniert wird,
wobei die Werkstückaufnahmevorrichtung (114) samt des einen oder der mehreren daran angeordneten Werkstücke (102) in der Förderrichtung (104) an der Blockiervorrichtung (254) vorbeibewegt, mittels der Schiebevorrichtung (252) in einer der Förderrichtung (104) entgegengesetzten Richtung bewegt und zwischen die Blockiervorrichtung (254) und die Schiebevorrichtung (252) eingeklemmt wird,
wobei das Blockierelement (288) der Blockiervorrichtung (254) beim Vorbeibewegen der Werkstückaufnahmevorrichtung (114) an der Blockiervorrichtung (254) um eine Rotationsachse (292) verschwenkt und dabei aus dem Förderweg (260) herausbewegt wird und dass das Blockierelement (288) aufgrund der Wirkung einer Feder (294) der Blockiervorrichtung (254) erneut in den Förderweg (260) zurückgeschwenkt wird, sobald die Werkstückaufnahmevorrichtung (114) an der Blockiervorrichtung (254) vorbeibewegt wurde.

15. Verfahren nach Anspruch 14, **dadurch gekennzeichnet, dass** das Verfahren ferner das Übernehmen der Werkstückaufnahmevorrichtung (114) samt des einen oder der mehreren daran angeordneten Werkstücke (102) von einer weiteren Fördervorrichtung (100) an der Startposition (124) und/oder das Übergeben der Werkstückaufnahmevorrichtung (114) samt des einen oder der mehreren daran angeordneten Werkstücke (102) an eine weitere Fördervorrichtung (100) an der Endposition (126) umfasst.

## Claims

1. Conveying device (100) for conveying workpieces (102) along a direction of conveyance (104), comprising:
- a workpiece holding device (114) on which one or more workpieces (102) are arrangeable;
- an accelerating device (132) by means of which the workpiece holding device (114) together with the one or more workpieces (102) arranged thereon is adapted to be accelerated from a given start position (124) of the workpiece holding device (114) along the direction of conveyance (104), wherein, after the acceleration of the workpiece holding device (114) together with the one or more workpieces (102) arranged thereon, an accelerating element (150) of the accelerating device (132) is movable from an ending position into a starting position, wherein the accelerating device (132) comprises a drive device (136) by means of which the accelerating element (150) is movable alternately forwards and backwards along a path of movement (156) of the accelerating element (150);
- a braking device (134) by means of which the workpiece holding device (114) together with the one or more workpieces (102) arranged thereon is brakable at a given end position (126);
- a guidance device (106) by means of which the workpiece holding device (114) is guidable along the direction of conveyance (104) and by means of which the weight force of the workpiece holding device (114) can be accommodated, wherein the accelerating device (132) and/or the braking device (134) is a device differing from the guidance device (106),
wherein the conveying device (100) comprises a positioning device (250) for positioning the workpiece holding device (114) together with the one or more workpieces (102) arranged thereon, wherein the positioning device (250) comprises a sliding device (252) and a blocking device (254), wherein the blocking device (254) is formed such as to block unidirectionally so that the workpiece holding device (114) together with the one or more workpieces (102) arranged thereon is movable past the blocking device (254) in the direction of conveyance (104) but a movement of the workpiece holding device (114) together with the one or more workpieces (102) arranged thereon is blockable in a direction opposed to the direction of conveyance (104) and wherein the workpiece holding device (114) together with the one or more workpieces (102) arranged thereon is movable in a direction opposed to the direction of conveyance (104) by means of the sliding device (252) and is clampable between the blocking device (254) and the sliding device (252),
**characterized in that** a blocking element (288) of the blocking device (254) is pivotal about a rotational axis (292) when the workpiece holding device (114) is moving past the blocking device (254) and is thereby moved out of the path of conveyance (260) and
**in that** the blocking element (288) is pivotal back into the path of conveyance (260) due to the effect of a spring (294) in the blocking device (254) as soon as the workpiece holding device (114) has moved past the blocking device (254).

2. A conveying device (100) according to Claim 1, **characterized in that** the drive device (136) comprises a pressure cylinder device (160), a belt or chain drive (138), a linear axial drive (180), an omega drive (329) and/or a friction wheel drive (188).

3. A conveying device (100) in accordance with either of the Claims 1 or 2, **characterized in that**
the conveying device (100) comprises a take-over device (128) by means of which the workpiece holding device (114) together with the one or more workpieces (102) arranged thereon is taken-over by a further conveying device (100) at the start position (124) and/or
**in that** the conveying device (100) comprises a hand-over device (130) by means of which the workpiece holding device (114) together with the one or more workpieces (102) arranged thereon is deliverable to a further conveying device (100) at the end position (126).

4. A conveying device (100) in accordance with any of the Claims 1 to 3, **characterized in that** the conveying device (100) comprises at least one transport element (182) which is movable from the start position (124) into the end position (126),
wherein the workpiece holding device (114) together with the one or more workpieces (102) arranged thereon is fixable to the transport element (182) at the start position (124), in particular, is receivable by means of the transport element (182), and is removable from the transport element (182) at the end position (126).

5. A conveying device (100) according to Claim 4, **characterized in that** the at least one transport element (182) is movable alternately from the start position (124) into the end position (126) and from the end position (126) into the start position (124).

6. A conveying device (100) in accordance with any of the Claims 1 to 5, **characterized in that** the conveying device (100) comprises a plurality of accelerating devices (132) and a plurality of braking devices (134) which are arranged one behind the other in an alternating series of accelerating devices (132) and braking devices (134) taken with respect to the direction of conveyance (104).

7. A conveying device (100) in accordance with any of the Claims 1 to 6, **characterized in that** the workpiece holding device (114) together with the one or more workpieces (102) arranged thereon is arrestable in a given position by means of an accelerating device (132) and a braking device (134).

8. A conveying device (106) in accordance with any of the Claims 1 to 7, **characterized in that** the sliding device (252) and/or the blocking device (254) is arranged at least in sections thereof within and/or under a covering device (312) for covering supporting elements (116) of the workpiece holding device (114).

9. Workpiece treatment plant (120) comprising one or more conveying devices (100) in accordance with any of the Claims 1 to 8.

10. A workpiece treatment plant (120) according to Claim 9, **characterized in that** the start position (124) and/or the end position (126) of at least one conveying device (100) is arranged in a treatment region (122) of the workpiece treatment plant (120).

11. A workpiece treatment plant (120) in accordance with either of the Claims 9 or 10, **characterized in that** the workpiece treatment plant (120) comprises a pre-conveying device (184) that is arranged before the at least one conveying device (100) taken with respect to the direction of conveyance (104) and/or a post-conveying device (186) that is arranged after the at least one conveying device (100) taken with respect to the direction of conveyance (104), wherein an average conveying speed of the at least one conveying device (100) is higher than an average conveying speed of the pre-conveying device (184) and/or the post-conveying device (186).

12. A workpiece treatment plant (120) in accordance with any of the Claims 9 to 11, **characterized in that** the workpiece treatment plant (120) comprises a plurality of conveying devices (100) which overlap one another at least in sections thereof taken with respect to the direction of conveyance (104).

13. A workpiece treatment plant (120) in accordance with any of the Claims 9 to 12, **characterized in that** at least one conveying device (100) comprises at least one drive device (136) in the form of an omega drive (329) which forms an accelerating device (132) and/or a braking device (134), wherein a drive roller (328) of the omega drive (329) is arranged within a cross beam (330) of the workpiece treatment plant (120).

14. Method of conveying workpieces (102) along a direction of conveyance (104) by means of a conveying device (100) in accordance with any of the Claims 1 to 8, wherein the method comprises the following:
- arranging one or more workpieces (102) on the workpiece holding device (114);
- arranging the workpiece holding device (114) together with the one or more workpieces (102) arranged thereon at a given start position (124);
- accelerating the workpiece holding device (114) together with the one or more workpieces (102) arranged thereon from the start position (124) along the direction of conveyance (104) by means of the accelerating device (132) of the conveying device (100), whereby, after the acceleration of the workpiece holding device (114) together with the one or more workpieces (102) arranged thereon, the accelerating element (150) of the accelerating device (132) is brought from an ending position into a starting position;
- braking the workpiece holding device (114) together with the one or more workpieces (102) arranged thereon by means of the braking device (134) of the conveying device (100) at a given end position (126),
wherein the guidance device (106) guides the workpiece holding device (114) along the direction of conveyance (104) and accommodates the weight force of the workpiece holding device (114),
wherein the accelerating device (132) and/or the braking device (134) is a device differing from the guidance device (106),
wherein the workpiece holding device (114) together with the one or more workpieces (102) arranged thereon is positioned by means of the positioning device (250) which comprises the sliding device (252) and the blocking device (254), wherein the workpiece holding device (114) together with the one or more workpieces (102) arranged thereon is moved past the blocking device (254) in the direction of conveyance (104), is moved by means of the sliding device (252) in a direction opposed to the direction of conveyance (104) and is clamped between the blocking device (254) and the sliding device (252),
wherein the blocking element (288) of the blocking device (254) is pivoted about a rotational axis (292) during the movement of the workpiece holding device (114) past the blocking device (254) and is thereby moved out of the path of conveyance (260) and in that the blocking element (288) is pivoted back into the path of conveyance (260) due to the effect of a spring (294) of the blocking device (254) as soon as the workpiece holding device (114) has moved past the blocking device (254).

15. A method according to Claim 14, **characterized in that** the method further comprises the process of taking-over the workpiece holding device (114) together with the one or more workpieces (102) arranged thereon by a further conveying device (100) at the start position (124) and/or the process of handing-over the workpiece holding device (114) together with the one or more workpieces (102) arranged thereon to a further conveying device (100) at the end position (126).

## Revendications

1. Dispositif de transport (100) pour le transport de pièces (102) le long d'un sens de transport (104), comprenant :
- un dispositif de réception de pièce (114) au niveau duquel une ou plusieurs pièces (102) peuvent être agencées ;
- un dispositif d'accélération (132) au moyen duquel le dispositif de réception de pièce (114) avec l'une ou les plusieurs pièces (102) agencées au niveau de celui-ci peut être accéléré à partir d'une position de démarrage (124) prescrite du dispositif de réception de pièce (114) le long du sens de transport (104), dans lequel un élément d'accélération (150) du dispositif d'accélération (132) peut être amené après l'accélération du dispositif de réception de pièce (114) avec l'une ou les plusieurs pièces (102) agencées au niveau de celui-ci d'une position finale à une position de démarrage, dans lequel le dispositif d'accélération (132) comporte un dispositif d'entraînement (136), au moyen duquel l'élément d'accélération (150) est mobile en alternance vers l'avant et l'arrière le long d'une voie de déplacement (156) de l'élément d'accélération (150) ;
- un dispositif de freinage (134) au moyen duquel le dispositif de réception de pièce (114) avec l'une ou les plusieurs pièces (102) agencées au niveau de celui-ci peut être freiné au niveau d'une position finale (126) prescrite ;
- un dispositif de guidage (106) au moyen duquel le dispositif de réception de pièce (114) peut être guidé le long du sens de transport (104) et au moyen duquel le poids du dispositif de réception de pièce (114) peut être reçu, dans lequel le dispositif d'accélération (132) et/ou le dispositif de freinage (134) est un dispositif différent du dispositif de guidage (106),
dans lequel le dispositif de transport (100) comporte un dispositif de positionnement (250) pour le positionnement du dispositif de réception de pièce (114) avec l'une ou les plusieurs pièces (102) agencées au niveau de celui-ci, dans lequel le dispositif de positionnement (250) comporte un dispositif de poussée (252) et un dispositif de blocage (254), dans lequel le dispositif de blocage (254) est réalisé bloquant de manière monodirectionnelle de sorte que le dispositif de réception de pièce (114) avec l'une ou les plusieurs pièces (102) agencées au niveau de celui-ci puisse être déplacé dans le sens de transport (104) devant le dispositif de blocage (254), un mouvement du dispositif de réception de pièce (114) avec l'une ou les plusieurs pièces (102) agencées au niveau de celui-ci pouvant toutefois être bloqué dans un sens opposé au sens de transport (104) et
dans lequel le dispositif de réception de pièce (114) avec l'une ou les plusieurs pièces (102) agencées au niveau de celui-ci peut être déplacé au moyen du dispositif de poussée (252) dans un sens opposé au sens de transport (104) et peut être serré entre le dispositif de blocage (254) et le dispositif de poussée (252), **caractérisé en ce qu'**un élément de blocage (288) du dispositif de blocage (254) peut être pivoté lors du déplacement du dispositif de réception de pièce (114) devant le dispositif de blocage (254) autour d'un axe de rotation (292) et peut être déplacé hors de la voie de transport (260) et
**en ce que** l'élément de blocage (288) peut être repivoté en raison de l'action d'un ressort (294) du dispositif de blocage (254) de nouveau dans la voie de transport (260) dès que le dispositif de réception de pièce (114) a été déplacé devant le dispositif de blocage (254).

2. Dispositif de transport (100) selon la revendication 1, **caractérisé en ce que** le dispositif d'entraînement (136) comporte un dispositif de cylindre de pression (160), un entraînement de courroie ou chaîne (138), un entraînement d'axe linéaire (180), un entraînement Oméga (329) et/ou un entraînement de roue de friction (188).

3. Dispositif de transport (100) selon l'une des revendications 1 ou 2, **caractérisé en ce que** le dispositif de transport (100) comporte un dispositif de reprise (128) au moyen duquel le dispositif de réception de pièce (114) avec l'une ou les plusieurs pièces (102) agencées dessus peut être repris au niveau de la position de démarrage (124) par un autre dispositif de transport (100), et/ou
**en ce que** le dispositif de transport (100) comporte un dispositif de transfert (130) au moyen duquel le dispositif de réception de pièce (114) avec l'une ou les plusieurs pièces (102) agencées sur celui-ci peut être transféré au niveau de la position finale (126) à un autre dispositif de transport (100).

4. Dispositif de transport (100) selon l'une des revendications 1 à 3, **caractérisé en ce que** le dispositif de transport (100) comporte au moins un élément de transport (182) qui est mobile de la position de démarrage (124) à la position finale (126),
dans lequel le dispositif de réception de pièce (114) avec l'une ou les plusieurs pièces (102) agencées au niveau de celui-ci peut être fixé au niveau de la position de démarrage (124) sur l'élément de transport (182), en particulier peut être reçu au moyen de l'élément de transport (182), et peut être retiré au niveau de la position finale (126) de l'élément de transport (182).

5. Dispositif de transport (100) selon la revendication 4, **caractérisé en ce que** l'au moins un élément de transport (182) est mobile en alternance de la position de démarrage (124) à la position finale (126) et de la position finale (126) à la position de démarrage (124).

6. Dispositif de transport (100) selon l'une des revendications 1 à 5, **caractérisé en ce que** le dispositif de transport (100) comporte plusieurs dispositifs d'accélération (132) et plusieurs dispositifs de freinage (134) qui sont agencés les uns derrière les autres par rapport au sens de transport (104) dans une série avec alternance de dispositifs d'accélération (132) et de dispositifs de freinage (134).

7. Dispositif de transport (100) selon l'une des revendications 1 à 6, **caractérisé en ce que** le dispositif de réception de pièce (114) avec l'une ou les plusieurs pièces (102) agencées au niveau de celui-ci peut être arrêté au moyen d'un dispositif d'accélération (132) et d'un dispositif de freinage (134) dans une position prescrite.

8. Dispositif de transport (106) selon l'une des revendications 1 à 7, **caractérisé en ce que** le dispositif de poussée (252) et/ou le dispositif de blocage (254) est agencé au moins par section dans et/ou sous un dispositif de recouvrement (312) pour le recouvrement des éléments d'appui (116) du dispositif de réception de pièce (114).

9. Installation de traitement de pièce (120) comprenant un ou plusieurs dispositifs de transport (100) selon l'une des revendications 1 à 8.

10. Installation de traitement de pièce (120) selon la revendication 9, **caractérisée en ce que** la position de démarrage (124) et/ou la position finale (126) d'au moins un dispositif de transport (100) est agencée dans une zone de traitement (122) de l'installation de traitement de pièce (120).

11. Installation de traitement de pièce (120) selon l'une des revendications 9 ou 10, **caractérisée en ce que** l'installation de traitement de pièce (120) comporte un dispositif de prétransport (184) agencé par rapport au sens de transport (104) avant l'au moins un dispositif de transport (100) et/ou un dispositif de posttransport (186) agencé par rapport au sens de transport (104) après l'au moins un dispositif de transport (100), dans laquelle une vitesse de transport moyenne d'au moins un dispositif de transport (100) est supérieure à une vitesse de transport moyenne du dispositif de prétransport (184) et/ou du dispositif de posttransport (186).

12. Installation de traitement de pièce (120) selon l'une des revendications 9 à 11, **caractérisée en ce que** l'installation de traitement de pièce (120) comporte plusieurs dispositifs de transport (100) qui se recouvrent au moins par sections par rapport au sens de transport (104).

13. Installation de traitement de pièce (120) selon l'une des revendications 9 à 12, **caractérisée en ce qu'**au moins un dispositif de transport (100) comporte au moins un dispositif d'entraînement (136) réalisé comme un entraînement Oméga (329) qui forme un dispositif d'accélération (132) et/ou un dispositif de freinage (134), dans laquelle un rouleau d'entraînement (328) de l'entraînement Oméga (329) est agencé à l'intérieur d'une traverse (330) de l'installation de traitement de pièce (120).

14. Procédé de transport de pièces (102) le long d'un sens de transport (104) au moyen d'un dispositif de transport (100) selon l'une des revendications 1 à 8, dans lequel le procédé comporte ce qui suit :
- l'agencement d'une ou de plusieurs pièces (102) sur le dispositif de réception de pièce (114) ;
- l'agencement du dispositif de réception de pièce (114) avec l'une ou les plusieurs pièces (102) agencées au niveau de celui-ci dans une position de démarrage prescrite (124) ;
- l'accélération du dispositif de réception de pièce (114) avec l'une ou les plusieurs pièces (102) agencées au niveau de celui-ci le long du sens de transport (104) au moyen du dispositif d'accélération (132) du dispositif de transport (100) à partir de la position de démarrage (124), dans lequel l'élément d'accélération (150) du dispositif d'accélération (132) est amené après l'accélération du dispositif de réception de pièce (114) avec l'une ou les plusieurs pièces (102) agencées au niveau de celui-ci d'une position finale à une position de démarrage ;
- le freinage du dispositif de réception de pièce (114) avec l'une ou les plusieurs pièces (102) agencées au niveau de celui-ci au moyen du dispositif de freinage (134) du dispositif de freinage (100) dans une position finale (126) prescrite,
dans lequel le dispositif de guidage (106) guide le dispositif de réception de pièce (114) le long du sens de transport (104) et reçoit le poids du dispositif de réception de pièce (114),
dans lequel le dispositif d'accélération (132) et/ou le dispositif de freinage (134) est un dispositif différent du dispositif de guidage (106), dans lequel le dispositif de réception de pièce (114) avec les un ou les plusieurs pièces (102) agencées au niveau de celui-ci est positionné au moyen du dispositif de positionnement (250) qui comporte le dispositif de poussée (252) et le dispositif de blocage (254),
dans lequel le dispositif de réception de pièce (114) avec l'un ou les plusieurs pièces (102) agencées au niveau de celui-ci se déplace dans le sens de transport (104) devant le dispositif de blocage (254), est déplacé au moyen du dispositif de poussée (252) dans un sens opposé au sens de transport (104) et serré entre le dispositif de blocage (254) et le dispositif de poussée (252),
dans lequel l'élément de blocage (288) du dispositif de blocage (254) est pivoté lors du déplacement du dispositif de réception de pièce (114) devant le dispositif de blocage (254) autour d'un axe de rotation (292) et déplacé ainsi hors de la voie de transport (260) et l'élément de blocage (288) est repivoté en raison de l'action d'un ressort (294) du dispositif de blocage (254) de nouveau dans la voie de transport (260) dès que le dispositif de réception de pièce (114) a été déplacé devant le dispositif de blocage (254).

15. Procédé selon la revendication 14, **caractérisé en ce que** le procédé comporte de plus la reprise du dispositif de réception de pièce (114) avec l'une ou les plusieurs pièces (102) agencées au niveau de celui-ci par un autre ensemble de transport (100) dans la position de démarrage (124) et/ou le transfert du dispositif de réception de pièce (114) avec l'une ou les plusieurs pièces (102) agencées au niveau de celui-ci à un autre dispositif de transport (100) dans la position finale (126).
